# EUROPÄISCHE PATENTANMELDUNG

(11) **EP 3 865 396 A1**
(43) Veröffentlichungstag der Anmeldung: **18.08.2021**
(21) Anmeldenummer: 20209884.4
(22) Anmeldetag: 25.11.2020
(51) Int. Cl.: B64C 1/06, B64C 39/00, B64D 9/00

(54) **FLUGZEUG ZUM FRACHT- UND PASSAGIERTRANSPORT, FRACHTCONTAINER, VERFAHREN ZUM BELADEN EINES FLUGZEUGS UND VERFAHREN ZUM UMKONFIGURIEREN EINES FLUGZEUGS**

(30) Priorität: 28.11.2019 DE 102019132396; 03.12.2019 DE 102019132823
(71) Anmelder: Telair International GmbH, 83714 Miesbach (DE)
(72) Erfinder: Huber, Thomas, 83727 Schliersee (DE)
(74) Vertreter: Würmser, Julian

(57) **Zusammenfassung**

Die vorliegende Erfindung betrifft ein Flugzeug (10) für den Fracht- und/oder Passagiertransport mit einem Rumpf (11), der sich in Längsrichtung erstreckt und ein oberes Deck (12), insbesondere Hauptdeck, und ein unteres Deck (13) aufweist, die durch einen Boden (14) voneinander getrennt sind, wobei der Rumpf (11) einen Tonnenabschnitt (15) mit einem Querschnittsprofil (16) zur Aufnahme von Frachtstücken (18) und/oder Passagieren aufweist, wobei das Flugzeug als Tiefdecker- oder Mitteldecker-Konfiguration ausgebildet ist, wobei das untere Deck (13) einen bugseitigen Laderaum (24), einen heckseitigen Laderaum (25) und im Bereich des Flügelkastens (27) einen Durchladeraum (26) aufweist, der den bugseitigen Laderaum (24) und den heckseitigen Laderaum (25) verbindet, wobei der Durchladeraum (26) im Bereich des Flügelkastens (27) bzw. des Fahrwerks (28) derart ausgebildet ist, dass bei einer Beladung des unteren Decks (13) Frachtcontainer (18) vom Flugzeugbug (29) und/oder vom Flugzeugheck (31) ausgehend durchladbar sind, wobei das Querschnittsprofil (16) insbesondere durch mehrere Kreisbogenabschnitte (17) gebildet ist, die Radien (R1, R2, R3) mit voneinander abweichenden Mittelpunkten (M1, M2, M3', M3") aufweisen oder das Querschnittsprofil (16) insbesondere durch einen einzelnen Kreis (91, 91') gebildet ist.

## Beschreibung

Die Erfindung betrifft ein Flugzeug zum Fracht- und/oder Passagiertransport, einen Frachtcontainer, ein Verfahren zum Be- und Entladen eines Flugzeugs und ein Verfahren zum Umkonfigurieren eines Flugzeugs. Ein Flugzeug gemäß dem Oberbegriff des Patentanspruchs 1 ist beispielsweise aus der US 6,834,833 B2 bekannt.

Flugzeuge werden im Laufe deren Lebensdauer für unterschiedliche Zwecke eingesetzt. Dabei werden Flugzeuge für den Passagiertransport nach einer entsprechenden Einsatzdauer vorwiegend für den Transport von Frachtgütern bzw. Frachtstücken verwendet. Die Flugzeuge können generell ein Hauptdeck ("Main Deck") und ein unteres Deck ("Lower Deck") aufweisen, in dem während des Einsatzes des Flugzeugs für den Passagiertransport Frachtstücke transportiert werden.

Bei dem Transport von Ladung in Flugzeugen werden häufig Frachtstücke, z.B. Container oder Paletten ("Unit Load Devices - ULDs") verwendet, die quaderförmig oder trapezförmig sind oder eine Form mit einer speziellen Außenkontur aufweisen. Derartige Container oder Paletten können abhängig vom Laderaum des Flugzeugs längsgeladen oder quergeladen werden. So gibt es für Container und Paletten, beispielsweise für die zivile Luftfahrt, folgende im Zusammenhang mit dieser Anmeldung relevante Normgrößen. Die nachfolgenden genormten Abmessungen der Container und Paletten sind jeweils in Länge x Breite x Höhe angegeben.

Container und Paletten ("ULDs") werden, wie allgemein bekannt, gemäß einer Regelung der "International Air Transport Association" (IATA) durch drei Buchstaben eingestuft. Nachfolgend werden lediglich die Wichtigsten erläutert:
- Der erste Buchstabe definiert die Art des Frachtstückes. Der Buchstabe A weist auf einen zertifizierten Container oder der Buchstabe P auf eine zertifizierte Palette mit Netz Kombination hin;
- Der zweite Buchstabe gibt eine Auskunft über die Bodengröße, d.h. die Grundfläche des Frachtstücks, und
- Der dritte Buchstabe beschreibt die Kontur oder die Bauart des Frachtstücks.

Container und Paletten für den Transport im Hauptdeck eines Flugzeugs weisen im Wesentlichen folgende genormten Abmessungen auf:
- 223,5 x 317,5 x 243,8 cm (88 x 125 x 96 Zoll). Diese Abmessungen treffen auf AAJ Container und PAG Paletten zu;
- 223,5 x 317,5 x 208,2 cm (88 x 125 x 82 Zoll). Solche Abmessungen weisen bspw. AAA, AAC, AAY und AAZ Container und PAG Paletten auf;
- 243,8 x 317,5 x 243,8 cm (96 x 125 x 96 Zoll). Derartige Frachtstücke sind als AMA und AMJ Container sowie PMC Paletten bekannt;
- 243,8 x 497,8 cm (96 x 196 Zoll) oder 243,8 x 605,7 cm (96 x 238,5 Zoll). Diese Abmessungen entsprechen der Grundfläche von Paletten mit einer spezifischen Kontur, die sich z.B. aus der Kontur eines Triebwerks oder eines Fahrzeugs oder von Sonderfracht ergibt. Derartige Paletten werden herkömmlicherweise als PRA oder PGA Paletten bezeichnet;
- 223,5 x 274,3 cm (88 x 108 Zoll) und 137,1 x 223,5 cm (54 x 88 Zoll). Diese Abmessungen entsprechen der Grundfläche von Paletten mit einer spezifischen Kontur, die durch militärische Güter, bspw. Fracht oder ISU Container, bestimmt wird. Derartige Paletten werden als HCU-6E, PBN oder HCU-12E Paletten bezeichnet.

Container und Paletten für den Transport im unteren Deck eines Flugzeugs weisen im Wesentlichen folgende genormte Abmessungen auf:
- Die nachfolgenden Abmessungen entsprechen der Grundfläche von Containern oder Paletten mit einer spezifischen Kontur. Die Kontur wird dabei durch eine Kontur des unteren Decks bzw. der Frachtraumkontur des Flugzeugs und/oder durch eine benötigte Beladehöhe für spezifische Fracht und/oder durch eine bereits bestehende genormte Frachtstückkontur bestimmt.223,5 x 317,5 cm (88 x 125 Zoll) oder 243,8 x 317,5 cm (96 x 125 Zoll). Paletten mit solchen Grundflächen werden als PAG Paletten oder PMC Paletten bezeichnet;
- 153,4 x 156,2 cm (60,4 x 61,5 Zoll). Diese Grundfläche trifft auf AKE, AKH und AKG Container sowie auf PKC Paletten zu;
- 156,2 x 243,8 cm (61.5 x 96 Zoll). Dies entspricht der Grundfläche von PNA Paletten;
- 153,4 x 243,8 cm (60.4 x 96 Zoll). Dies entspricht der Grundfläche von PQA Paletten; und
- 153,4 x 119,4 cm (60.4 x 47 Zoll). Dies entspricht der Grundfläche von PPA Paletten bzw. APE / DPE Containern.

Aus der eingangs genannten US 6,834,833 B2 ist ein Flugzeug bekannt, das im Hauptdeck zum Passagiertransport eine siebenreihige Bestuhlung mit zwei längsverlaufenden Gängen und im unteren Deck einen Frachtraum für Frachtstücke aufweist. Das Flugzeug umfasst ferner einen ovalen Rumpf mit einer Breite von 201 Zoll und einer Höhe von 187 Zoll. Das Flugzeug ist in einer Hochdecker-Konfiguration ausgeführt, wobei der Frachtraum seitlich durch Seitenwände und oberseitig durch einen Boden begrenzt ist. Des Weiteren ist der Frachtraum derart ausgebildet, dass trapezförmige Container mit einer Grundfläche von 153,4 cm x 156,2 cm (60,4 Zoll x 61,5 Zoll) und einer Höhe von 114,3 cm (45 Zoll) aufnehmbar sind. Der Frachtraum ist im unteren Deck durchgängig, d.h. ohne eine Unterbrechung durch den Flügelkasten oder das Fahrwerk ausgebildet. Dies wird hierbei durch die Hochdecker-Konfiguration des Flugzeugs ermöglicht, da sich der Flügelkasten in z-Richtung oberhalb des Rumpfs befindet. Der in der US 6 834 833 B2 beschriebene Frachtraum hat den Nachteil, dass dieser keinen Container mit den Grundabmessungen 153,4 cm x 243,8 cm (60,4 Zoll x 96 Zoll) oder Paletten (88 x 125 Zoll) bzw. (96 x 125 Zoll) bzw. (88 xx 108 Zoll) aufnehmen kann. Der Frachtraum weist dazu eine zu geringe lichte Weite in Querrichtung des Flugzeugs auf.

Insbesondere Flugzeuge, die für das Anwendungssegment zwischen Schmalrumpfflugzeugen ("Narrow Body Aircraft") und Großraumflugzeugen ("Wide Body Aircraft") konzipiert sind, weisen oftmals ein verringertes Ladevolumen im Haupt- und Frachtdeck auf.

Des Weiteren sind aus dem Stand der Technik Flugzeuge bekannt, bei denen das Hauptdeck so ausgebildet ist, dass diese beispielsweise Container oder Paletten mit den Grundabmessungen 223,5 cm x 317,5 cm (88 Zoll x 125 Zoll) und 243,8 cm x 317,5 cm (96 Zoll x 125 Zoll) sowie Triebwerke des eigenen Flugzeugtyps und militärische Paletten mit den Grundabmessungen 274,3 cm x 223,5 cm (108 Zoll x 88 Zoll) aufnehmen können. Derartige Flugzeuge weisen häufig einen erhöhten Luftwiderstand auf.

Der Erfindung liegt daher die Aufgabe zu Grunde, ein Flugzeug anzugeben, das ein erhöhtes Ladevolumen zum Transport von Passagieren und Frachtstücken bei verringertem Luftwiderstand aufweist. Des Weiteren liegt der Erfindung die Aufgabe zu Grunde, einen Frachtcontainer anzugeben, der ein erhöhtes Ladevolumen bei verbesserter Ausnutzung des Frachtraums eines Flugzeugs aufweist. Die Erfindung hat ferner die weitere Aufgabe, ein Verfahren anzugeben, durch das ein Be- und Entladen des Frachtraums eines Flugzeugs erleichtert wird. Die Erfindung hat die weitere Aufgabe, ein Verfahren anzugeben, das ein schnelles und einfaches Umkonfigurieren eines Flugzeugs ermöglicht.

Erfindungsgemäß wird die Aufgabe im Hinblick auf das Flugzeug durch den Gegenstand des Anspruchs 1 oder 2 gelöst. Hinsichtlich des Frachtcontainers wird die erste weitere Aufgabe durch den Gegenstand des Anspruchs 16 gelöst, hinsichtlich des Verfahrens zum Be- und Entladen wird die zweite weitere Aufgabe durch den Gegenstand des Anspruchs 17 gelöst und hinsichtlich des Verfahrens zum Umkonfigurieren wird dritte weitere Aufgabe durch den Gegenstand des Anspruchs 18 gelöst. Vorteilhafte Ausgestaltungen ergeben sich anhand der Unteransprüche.

Konkret wird die Aufgabe durch ein Flugzeug für den Fracht- und/oder Passagiertransport mit einem Rumpf, der sich in Längsrichtung erstreckt und ein oberes Deck, insbesondere Hauptdeck, und ein unteres Deck aufweist, gelöst. Das obere Deck und das untere Deck sind durch einen Boden voneinander getrennt. Der Rumpf weist einen Tonnenabschnitt mit einem Querschnittsprofil zur Aufnahme von Frachtstücken und/oder Passagieren auf. Das Flugzeug ist als Tiefdecker- oder Mitteldecker-Konfiguration ausgebildet. Das untere Deck weist einen bugseitigen Laderaum, einen heckseitigen Laderaum und im Bereich des Flügelkastens einen Durchladeraum auf, der den bugseitigen Laderaum und den heckseitigen Laderaum verbindet, wobei der Durchladeraum im Bereich des Flügelkastens bzw. des Fahrwerks derart ausgebildet ist, dass bei einer Beladung des unteren Decks Frachtcontainer vom Flugzeugbug und/oder vom Flugzeugheck ausgehend durchladbar sind. Das Querschnittsprofil kann optional durch mehrere Kreisbogenabschnitte gebildet sein, die Radien mit voneinander abweichenden Mittelpunkten aufweisen oder das Querschnittsprofil kann durch einen einzelnen Kreis gebildet sein. Das Querschnittsprofil kann aber erfindungsgemäß auch beliebig anders ausgestaltet sein.

Nach einem weiteren Aspekt der Erfindung wird die vorgenannte Aufgabe durch ein Flugzeug für den Fracht- und Passagiertransport mit einem Rumpf, der sich in Längsrichtung erstreckt und ein oberes Deck, insbesondere Hauptdeck, und ein unteres Deck aufweist, die durch einen Boden voneinander getrennt sind, gelöst. Der Rumpf weist einen Tonnenabschnitt mit einem Querschnittsprofil zur Aufnahme von Frachtstücken und/oder Passagieren auf. Das Querschnittsprofil ist durch mehrere, insbesondere vier, Kreisbogenabschnitte gebildet, die Radien mit voneinander abweichenden Mittelpunkten aufweisen, sodass das Querschnittsprofil derart ausgebildet ist, dass in das obere Deck und das untere Deck Frachtstücke mit unterschiedlichen Größenmaßen, insbesondere Frachtcontainer mit unterschiedlichen Höhen- und Breitenmaßen, aufnehmbar sind.

Dem erfindungsgemäßen Flugzeug ist ein kartesisches Koordinatensystem zugewiesen, um einzelne Richtungsangaben bereitzustellen. Hierbei erstreckt sich die x-Achse vom Flugzeugheck zum Flugzeugbug, die y-Achse verläuft quer zur x-Achse und liegt im Wesentlichen in der von den Flügeln aufgespannten Ebene. Die z-Achse steht senkrecht auf der x- und y-Achse. Die Längsrichtung bzw. x-Richtung des Flugzeugs verläuft parallel zur x-Achse, eine y-Richtung des Flugzeugs parallel zur y-Achse und eine z-Richtung parallel zur z-Achse.

Im Rahmen der nachfolgenden Beschreibung werden lediglich die relevanten Varianten der vorstehend beschriebenen Frachtstücke bzw. Container und Paletten als Beispiele herangezogen. Im Konkreten wird dabei auf die Kontur und Bauart des jeweiligen Frachtstücks eingegangen.

Das Flugzeug ist bevorzugt als Tiefdecker-Konfiguration ausgebildet. In der Tiefdecker-Konfiguration des Flugzeugs sind die Flügel in z-Richtung unterhalb des Rumpfs angeordnet. Der Flügelkasten des Flugzeugs ist hierbei in z-Richtung im unteren Rumpfbereich, d.h. im Bereich des unteren Decks angeordnet. Alternativ kann das Flugzeug als Mitteldecker-Konfiguration ausgebildet sein. In der Mitteldecker-Konfiguration des Flugzeugs sind die Flügel und somit der Flügelkasten im Wesentlichen in z-Richtung in der Mitte des Rumpfs angeordnet.

Die Erfindung hat verschiedene Vorteile. Durch die voneinander abweichenden Mittelpunkte der Radien der Kreisbogenabschnitte wird ein Querschnittsprofil des Tonnenabschnitts ermöglicht, das ein Beladen des oberen und unteren Decks mit einer Vielzahl von verschiedenen genormten Containern ermöglicht. Besonders vorteilhaft ist aufgrund des Querschnittsprofils wenigstens ein Flugzeugtriebwerk des eigenen Flugzeugstyps transportierbar. Bevorzugt ist daher das Querschnittsprofil derart ausgebildet, dass zum Frachttransport in das obere Deck wenigstens ein Flugzeugtriebwerk, insbesondere des eigenen Flugzeugstyps, und/oder wenigstens ein Kraftfahrzeug einbringbar sind. Vorzugsweise weist das untere Deck bzw. der Frachtraum und eine Ladetür für Fracht eine mindestens nutzbare lichte Höhe, insbesondere Durchgangshöhe, in z-Richtung von 269 cm bis 290 cm (106 Zoll bis 114 Zoll) auf. Die lichte Höhe setzt sich aus einer Frachtsystemhöhe, einer Triebwerkspalettendicke und einem Triebwerks-Rotor-Durchmesser zusammen. Die Frachtsystemhöhe kann mindestens 3,2 cm bis 5,1 cm (1,25 Zoll bis 2 Zoll) betragen. Die Triebwerkspalettendicke beträgt bevorzugt maximal 5,7 cm (2,25 Zoll). Ferner kann der Triebwerks-Rotor-Durchmesser von 247,4 cm bis 266,4 cm (97,4 Zoll bis 105 Zoll) betragen.

Durch das Querschnittsprofil des Tonnenabschnitts weist somit das Flugzeug ein erhöhtes Ladevolumen auf. Besonders bei Flugzeugen für das Anwendungssegment zwischen Schmalrumpfflugzeugen ("Narrow Body Aircraft") und Großraumflugzeugen ("Wide Body Aircraft") wird dadurch eine Transportleistung erhöht.

Die Erfindung hat den zusätzlichen Vorteil, dass durch die versetzten Mittelpunkte der Kreisbogenabschnitte eine Form des Querschnittprofils realisiert wird, die einen verringerten Luftwiderstand aufweist. Dadurch wird ein CO₂-Ausstoss reduziert. Zusammenfassend weist das erfindungsgemäße Flugzeug somit ein maximiertes Ladevolumen und einen verringerten Luftwiderstand auf.

Die abweichenden Mittelpunkte der Radien der Kreisbogenabschnitte können voneinander versetzt sein. Die Mittelpunkte können in z-Richtung und/oder in y-Richtung voneinander versetzt sein. Mit anderen Worten können die Mittelpunkte in z-Richtung und/oder in y-Richtung voneinander beabstandet sein. Es ist denkbar, dass die Mittelpunkte auf einer gemeinsamen z-Achse oder auf einer gemeinsamen y-Achse voneinander beabstandet liegen.

Hinsichtlich der abweichenden Mittelpunkte der Radien der Kreisbogenabschnitte sind zwei verschiedene Ausführungsformen von deren Anordnung möglich. Bei einer (ersten) Ausführungsform bilden die Mittelpunkte der einzelnen Radien im Wesentlichen einen gemeinsamen Mittelpunktsbereich. Die Mittelpunkte weisen hierbei einen geringen Abstand voneinander auf. Ein derartiger Abstand kann kleiner oder gleich 10 cm (4 Zoll) sein.

Bei einer (zweiten) Ausführungsform weisen die Mittelpunkte der Radien einen Abstand voneinander auf, sodass die Mittelpunkte einzelne Mittelpunkte bilden. Der Abstand zwischen den Mittelpunkten, insbesondere zwischen wenigstens zwei Mittelpunkten, kann von mindestens 10 cm bis maximal 63 cm (4 Zoll bis 25 Zoll), insbesondere von mindestens 25,5 cm bis maximal 58 cm (10 Zoll bis 23 Zoll) betragen. Es ist denkbar, dass der Abstand zwischen den, insbesondere wenigstens zwei, Mittelpunkten von 43 cm bis 56 cm (16 Zoll bis 22 Zoll) beträgt. Alternativ oder zusätzlich ist denkbar, dass der Abstand zwischen den, insbesondere wenigstens zwei, Mittelpunkten von 15 cm bis 16 cm (6 Zoll) beträgt.

Bei einer alternativen Ausführungsform des erfindungsgemäßen Flugzeugs ist das Querschnittsprofil des Tonnenabschnitts kreisrund ausgebildet. Diese Ausführungsform lässt sich, ebenso wie die bereits beschriebene Ausführungsform, mit allen nachfolgenden Varianten und/oder Ausführungsformen und/oder genaueren Ausgestaltungen kombinieren. Bei der alternativen Ausführungsform kann mit anderen Worten das Querschnittsprofil des Tonnenabschnitts durch einen einzelnen Kreis gebildet sein. Der Tonnenabschnitt mit kreisrundem Querschnitt hat den Vorteil, dass dieser mit geringem Kostenaufwand herstellbar ist. Eine Produktion ist hierbei vereinfacht. Im Rahmen der Erfindung sind die Kreisbogenabschnitte nicht nur als eindimensional, sondern auch als zweidimensional anzusehen. Die Kreisbogenabschnitte können jeweils einen Innenradius und einen Außenradius aufweisen. Mit anderen Worten können die Kreisbogenabschnitte jeweils einen Teil einer Flugzeugaußenhaut umfassen. Hierbei weisen die Kreisbogenabschnitte eine Wandstärke auf.

Das Querschnittsprofil kann über die gesamte Länge des Tonnenabschnitts konstant sein. Das Querschnittsprofil ist bezogen auf die z-Achse vorzugsweise symmetrisch ausgebildet. Es ist denkbar, dass der Rumpf durch einen einzigen Tonnenabschnitt gebildet ist, der an einem vorderen Ende in einen Flugzeugbug und an einem hinteren Ende in ein Flugzeugheck übergeht. Alternativ dazu ist denkbar, dass der Rumpf aus mehreren, insbesondere wenigstens zwei, Tonnenabschnitten gebildet ist, die in Längsrichtung aneinander angrenzen.

Das Querschnittsprofil ist vorzugsweise derart ausgebildet, dass zum Frachttransport in das untere Deck wenigstens eine Palette, insbesondere PMC- und/oder PAG-Palette, mit den Grundabmessungen 243,8 cm auf 317,5 cm (96 Zoll x 125 Zoll) und/oder 223,5 cm auf 317,5 cm (88 Zoll x 125 Zoll) in Längsbeladung aufnehmbar ist. Dabei weist die PMC-Palette die Grundabmessung 243,8 cm x 317,5 cm (96 Zoll x 125 Zoll) und die PAG-Palette die Grundabmessung 223,5 cm x 317,5 cm (88 Zoll x 125 Zoll) auf. Zusätzlich ist das Querschnittsprofil bevorzugt derart ausgebildet, dass zum Frachttransport in das untere Deck wenigstens ein Frachtcontainer, insbesondere AKH und/oder LD8-45, mit einer Höhe von mindestens 114 cm bis maximal 127cm (45 Zoll bis 50 Zoll), mit den Grundabmessungen 153,4 cm x 156,2 cm (60,4 Zoll x 61,5 Zoll) und/oder mit den Grundabmessungen 153,4 cm x 243,8 cm (60,4 Zoll x 96 Zoll) aufnehmbar ist. Alternativ können die Frachtcontainer für das untere Deck eine Höhe von 162,5 cm (64 Zoll) aufweisen.

Das Querschnittsprofil kann derart ausgebildet sein, dass zum Frachttransport im oberen Deck wenigstens zwei Frachtcontainer, insbesondere AAA, AAC, AAY, AAZ und/oder AAJ bzw. PAG Paletten, mit den Grundabmessungen 223,5 cm x 317,5 cm (88 Zoll x 125 Zoll) in γ-Richtung nebeneinander anordenbar sind.

Vorzugsweise ist das Querschnittsprofil derart ausgebildet, dass zum Frachttransport in das obere Deck wenigstens zwei Paletten, insbesondere PAG, HCU-12E und/oder HCU-6E, mit den Grundabmessungen 223,5 cm x 317,5 cm (88 Zoll x 125 Zoll), 137,1 cm x 223,5 cm (54 Zoll x 88 Zoll) und/oder 223,5 cm x 274,3 cm (88 Zoll x 108 Zoll) in Längsbeladung und/oder Querbeladung einbringbar sind.

Die Frachtcontainer für das obere Deck können eine Höhe von 223,5 cm (88 Zoll), 244 cm (96 Zoll) oder 300 cm (118 Zoll) aufweisen. Zusätzlich oder alternativ können die Frachtcontainer für das obere Deck eine Höhe von 96 Zoll oder 118 Zoll aufweisen.

Wie vorstehend beschrieben, kann das Querschnittsprofil des Tonnenabschnitts durch einen einzelnen Kreis gebildet sein. Das Querschnittsprofil des Tonnenabschnitts kann dabei in y-Richtung eine äußere maximale Breite und in z-Richtung eine äußere maximale Höhe von mindestens 490 cm bis maximal 510 cm (193 Zoll bis 201 Zoll) aufweisen. Vorzugsweise beträgt in y-Richtung die äußere maximale Breite und in z-Richtung die äußere maximale Höhe zwischen 495 cm und 500 cm (195 Zoll und 197 Zoll). Besonders bevorzugt weist das Querschnittsprofil des Tonnenabschnitts in y-Richtung eine äußere maximale Breite und eine äußere maximale Höhe in z-Richtung von 497 cm (196 Zoll) auf. In anderen Worten hat das Querschnittsprofil einen Außenradius von 497 cm (196 Zoll) geteilt durch 2. Dieser Außenradius kann erfindungsgemäß um +/-0,5% variieren. Alternativ oder zusätzlich kann das Querschnittsprofil bzw. der Frachtraum einen Innendurchmesser (=zweifacher Innenradius) im Bereich zwischen 472 cm (z.B. 186 Zoll) und 478 cm (z.B. 188 Zoll) und/oder von 475 cm (187 Zoll) +/- 1% oder +/- 0,7% haben. Ein Innendurchmesser von ca. 472 cm (z.B. 186 Zoll) ist bevorzugt.

Bei einer weiteren Ausführungsform kann das Querschnittsprofil des Tonnenabschnitts in y-Richtung eine äußere maximale Breite und in z-Richtung eine äußere maximale Höhe, insbesondere einen Außendurchmesser, von mindestens 465 cm bis maximal 485 cm (183 Zoll bis 191 Zoll) aufweisen. Vorzugsweise beträgt in y-Richtung die äußere maximale Breite und in z-Richtung die äußere maximale Höhe, insbesondere der Außendurchmesser, zwischen 470 cm und 480 cm (185 Zoll und 189 Zoll). Bevorzugt weist das Querschnittsprofil des Tonnenabschnitts in y-Richtung eine äußere maximale Breite und eine äußere maximale Höhe in z-Richtung von ca. 477 cm (188 Zoll) auf. In anderen Worten hat das Querschnittsprofil einen Außenradius von ca. 477 cm (188 Zoll) geteilt durch 2. Besonders bevorzugt weist das Querschnittsprofil des Tonnenabschnitts in y-Richtung eine äußere maximale Breite und eine äußere maximale Höhe in z-Richtung von 472 cm (186 Zoll) auf. In anderen Worten hat das Querschnittsprofil einen Außenradius von 472 cm (186 Zoll) geteilt durch 2. Die Außenradien können erfindungsgemäß um +/-0,5% variieren.

Generell wird darauf hingewiesen, dass alle angegebenen Maße in cm einer Toleranz von ca. +/- 1 cm unterliegen können.

Hierbei ist vorteilhaft, dass die Fertigung des Tonnenabschnitts vereinfacht wird und eine mehrfache Verwendung von Rumpfteilen bspw. Rumpfschalen und/oder Rumpfsegmenten ermöglicht wird. Dadurch werden Kosten eingespart.

Bei einer Ausführungsform ist das Querschnittsprofil des Rumpfs oval ausgebildet, wobei der Rumpf, insbesondere der Tonnenabschnitt, in y-Richtung eine äußere maximale Breite von mindestens 490 cm bis maximal 510 cm (193 Zoll bis 201 Zoll) und in z-Richtung eine äußere maximale Höhe von mindestens 480 cm bis maximal 500 cm (189 Zoll bis 197 Zoll) und/oder in z-Richtung eine äußere maximale Höhe von 440 cm bis 450 cm (173 Zoll bis 177 Zoll) aufweist. Vorzugsweise beträgt die äußere maximale Breite in y-Richtung zwischen 495 cm und 500 cm (195 Zoll und 197 Zoll) und die äußere maximale Höhe in z-Richtung zwischen 482,5 cm und 490 cm (190 Zoll und 193 Zoll) oder die äußere maximale Höhe in z-Richtung zwischen 442 cm und 447 cm (174 Zoll und 176 Zoll).

Es ist denkbar, dass die äußere maximale Breite in y-Richtung 497 cm (196 Zoll) und die äußere maximale Höhe in z-Richtung 485 cm (191 Zoll) oder die äußere maximale Höhe in z-Richtung 447cm (176 Zoll) betragen. Daraus ergeben sich zwei bevorzugte ovale Varianten des Querschnittsprofils des Tonnenabschnitts. Bei einer ersten Variante weist das Querschnittsprofil vorzugsweise in γ-Richtung eine äußere maximale Breite von 497 cm (196 Zoll) und in z-Richtung eine äußere maximale Höhe von 485 cm (191 Zoll) auf.

Bei der ersten ovalen Variante des Querschnittsprofils sowie bei der kreisrunden Variante des Querschnittsprofils ist das obere Deck (Hauptdeck) mit einer Vielzahl der üblicherweise verwendeten Container und Paletten beladbar. Zusätzlich sind im unteren Deck Container, insbesondere AKH-Container, mit den Grundabmessungen 153,4 cm x 156,2 cm (60.4 x 61.5 Zoll) in Kombination mit Paletten, insbesondere PAG- und/oder PMC-Paletten, mit den Grundabmessungen 223,5 x 317,5 cm (88 x 125 Zoll) und/oder 243,8 x 317,5 cm (96 x 125 Zoll) einbringbar. Ferner sind im unteren Deck Container, insbesondere LD8-45 Container, mit den Grundabmessungen 243,8 x 153,4 cm (96 x 60,4 Zoll) und bspw. mit einer Höhe von 114,5 cm (45 Zoll) einbringbar. Die erste ovale Variante des Querschnittsprofils weist allerdings gegenüber der kreisrunden Variante des Querschnittsprofils einen um ca. 2% verringerten Luftwiderstand sowie ein verringertes Strukturgewicht auf.

Bei einer zweiten ovalen Variante weist das Querschnittsprofil bevorzugt in y-Richtung eine äußere maximale Breite von 497 cm (196 Zoll) und in z-Richtung eine äußere maximale Höhe von ca. 447 cm (ca. 176 Zoll) auf. Die zweite ovale Variante des Querschnittsprofils weist gegenüber der kreisrunden Variante des Querschnittsprofils einen um ca. 9% bis 10 % verringerten Luftwiderstand auf. Ferner ist hierbei das Strukturgewicht weiter reduziert.

Im Unterschied zur kreisrunden sowie zur ersten ovalen Variante sind bei der zweiten ovalen Variante des Querschnittsprofils keine Paletten, insbesondere PAG- und PMC-Paletten, mit den Grundabmessungen 223,5 x 317,5 cm (88 x 125 Zoll) und/oder 243,8 x 317,5 cm (96 x 125 Zoll) im Unterdeck einbringbar. Hier sind lediglich Container, insbesondere AKH-Container, mit den Grundabmessungen 153,4 cm x 156,2 (60.4 x 61.5 Zoll) in Kombination mit Paletten, insbesondere PKC-Paletten, mit den Grundabmessungen 153,4 cm x 156,2 (60.4 x 61.5 Zoll) in das untere Deck einbringbar. Ferner können bei dieser Variante im Bereich eines Flügelkastens und/oder im Bereich eines Fahrwerks mobile Zusatztanks mit den Grundabmessungen 153,4 cm x 156,2 (60.4 x 61.5 Zoll) angeordnet werden.

Es ist alternativ möglich, dass der Rumpf in y-Richtung eine äußere maximale Breite von 501 cm (ca. 197 Zoll) und in z-Richtung eine äußere maximale Höhe von 447 cm (176 Zoll) aufweist. Der Rumpf weist hierbei ebenfalls eine ovale Querschnittsform auf und stellt somit eine dritte ovale Variante dar.

Bei einer Ausführungsform weist der Rumpf, insbesondere der Tonnenabschnitt, in y-Richtung eine äußere maximale Breite von mindestens 490 cm bis maximal 510 cm (193 Zoll bis 201 Zoll) und in z-Richtung eine äußere maximale Höhe von mindestens 450 cm bis maximal 470 cm (177 Zoll bis 185 Zoll) auf. Vorzugsweise beträgt die äußere maximale Breite in y-Richtung zwischen 495 cm und 500 cm (195 Zoll und 197 Zoll) und die äußere maximale Höhe in z-Richtung zwischen 455 cm und 465 cm (179 Zoll und 183 Zoll). Bevorzugt weist der Rumpf, in einer vierten ovalen Variante, in y-Richtung eine äußere maximale Breite von 497 cm (196 Zoll) und in z-Richtung eine äußere maximale Höhe von 460 cm (181 Zoll) auf. Alternativ hierzu kann der Rumpf in z-Richtung eine äußere maximale Höhe von 461 cm (181,5 Zoll) aufweisen.

Die kreisrunde Variante des Rumpfs mit einem Außendurchmesser von 497 cm (196 Zoll) sowie die vier ovalen Varianten des Rumpfs beziehen sich vorzugsweise auf ein Flugzeug, bei dem die Flugzeugtriebwerke unterhalb an den Flügeln angeordnet sind. Besonders vorteilhaft ist das Flugzeug in einer Tiefdecker-Konfiguration ausgebildet. Die weiteren kreisrunden Varianten des Rumpfs mit den Außendurchmessern ca. 477 cm (188 Zoll) und 472 cm (186 Zoll) beziehen sich bevorzugt auf ein Flugzeug, bei dem die Flugzeugtriebwerke am Flugzeugheck und nicht unter den Flügeln angeordnet sind. Besonders vorteilhaft ist das Flugzeug generell in einer Tiefdecker-Konfiguration ausgebildet.

Die äußere maximale Breite und die äußere maximale Höhe können eine Maßtoleranz von +/- 5%, insbesondere eine Maßtoleranz von kleiner +2%%, insbesondere eine Maßtoleranz von +/-0,5 % aufweisen. Mit anderen Worten können die äußere maximale Breite und Höhe im Bereich von +/- 5%, bevorzugt im Bereich von +/-0,5 % variieren.

Durch die besondere ovale Form des Rumpfs können eine Vielzahl der vorstehend genannten genormten Container im oberen und unteren Deck eingebracht werden. Ferner wird im oberen Deck bei einer Frachterkonfiguration des Flugzeugs, d.h. ohne Passagierbestuhlung im oberen Deck, der Transport des flugzeugeigenen Triebwerkstyps sowie von großen Fahrzeugen ermöglicht. Bei einer Passagiertransportkonfiguration des Flugzeugs, d.h. mit Passagierbestuhlung im oberen Deck, wird dadurch beispielsweise eine siebenreihige Bestuhlung mit zwei längsverlaufenden Gängen ermöglicht. Das Flugzeug ist somit für eine Vielzahl von Anwendungszwecken einsetzbar, wobei das Flugzeug stets ein erhöhtes Ladevolumen aufweist.

Bei einer weiteren besonders bevorzugten Ausführungsform weist der Rumpf in y-Richtung eine erste lichte Weite, insbesondere eine innere maximale Breite, von mindestens 460 cm bis maximal 480 cm (181 Zoll bis 189 Zoll) und in z-Richtung eine zweite lichte Weite, insbesondere eine innere maximale Höhe, von mindestens 450 cm bis maximal 480 cm (177 Zoll bis 189 Zoll) auf. Vorzugsweise beträgt die erste lichte Weite zwischen 465 cm und 475 cm (183 Zoll und 187 Zoll) und die zweite lichte Weite zwischen 455 cm und 475 cm (179 Zoll und 187 Zoll). Es ist denkbar, dass die erste lichte Weite 472,5 cm (186 Zoll) und die zweite lichte Weite 460 cm (181 Zoll) betragen. Bevorzugt weist der Rumpf in z-Richtung eine äußere maximale Höhe von 485 cm (191 Zoll) und eine innere maximale Höhe, insbesondere eine zweite lichte Weite, von 460 cm (181 Zoll) auf. Weiter bevorzugt weist der Rumpf in γ-Richtung eine äußere maximale Breite von 497 cm (196 Zoll) und eine innere maximale Breite, insbesondere erste lichte Weite, von 472,5 cm (186 Zoll) auf.

Der Rumpf bzw. der Tonnenabschnitt kann eine Wandstärke der Rumpfaußenhaut von 10 cm bis 13 cm (4 Zoll bis 5 Zoll) aufweisen. Die beiden lichten Weiten können eine Maßtoleranz von +/- 5%, insbesondere eine Maßtoleranz von kleiner +2%, insbesondere eine Maßtoleranz von +/- 1% oder +/- 0,7% aufweisen. Mit anderen Worten können die lichten Weiten im Bereich von +/- 5%, bevorzugt im Bereich von +/- 1% oder +/- 0,7% variieren. Diese Maßtoleranz gilt ebenso für die Wandstärke der Rumpfaußenhaut.

Bei einer in y-Richtung äußeren maximalen Breite von 501 cm (ca. 197 Zoll) und einer in z-Richtung äußeren maximalen Höhe von 447 cm (176 Zoll) des Rumpfs, beträgt somit die erste lichte Weite, insbesondere die innere maximale Breite, von 474 cm bis 480 cm (187 Zoll bis 189 Zoll) und die zweite lichte Weite, insbesondere eine innere maximale Höhe, von 421 cm bis 427 cm (166 Zoll bis 168 Zoll).

Bei einer in y-Richtung äußeren maximalen Breite von 497 cm (196 Zoll) und in z-Richtung äußeren maximalen Höhe von 460 cm (181 Zoll) des Rumpfs beträgt die erste lichte Weite von ca. 471 cm bis 477 cm (186 Zoll bis 188 Zoll) und die zweite lichte Weite von 434 cm bis 440 cm (171 Zoll bis 173 Zoll). Alternativ hierzu kann der Rumpf in z-Richtung eine äußere maximale Höhe von 461 cm (181,5 Zoll) und somit eine zweite lichte Weite von 435 cm bis 441 cm (171,5 Zoll bis 173,5 Zoll) aufweisen.

Bei einer in y-Richtung äußeren maximalen Breite von 497 cm (196 Zoll) und in z-Richtung äußeren maximalen Höhe von 497 cm (196 Zoll) des Rumpfs beträgt die erste und die zweite lichte Weite von ca. 471 cm bis 477 cm (186 Zoll bis 188 Zoll). Mit andere Worten weist der Rumpf einen Außendurchmesser von 497 cm auf, beträgt der Innendurchmesser des Rumpfs ca. 471 cm bis 477 cm (186 Zoll bis 188 Zoll).

Die vorstehenden Ausführungsformen bezogen auf die erste und zweite lichte Weite betreffen vorzugsweise ein Flugzeug, bei dem die Flugzeugtriebwerke unterhalb an den Flügeln angeordnet sind.

Bei einem Außendurchmesser des Rumpfs von ca. 477 cm (188 Zoll), beträgt der Innendurchmesser des Rumpfs ca. 452 cm bis 457 cm (178 Zoll bis 180 Zoll). Bei einem Außendurchmesser des Rumpfs von 472 cm (186 Zoll), beträgt der Innendurchmesser des Rumpfs ca. 446 cm bis ca. 452 cm (176 Zoll bis 178 Zoll). Diese beiden Ausführungsformen betreffen vorzugsweise ein Flugzeug, bei dem die Flugzeugtriebwerke am Flugzeugheck, d.h. nicht an den Flügeln angeordnet sind.

Durch die bevorzugten lichten Weiten des Tonnenabschnitts des Rumpfs können die genannten genormten Container sowie flugzeugeigene Triebwerkstypen und große Fahrzeuge gleichzeitig transportiert werden. Das Flugzeug weist vorteilhaft ein verbessertes bzw. erhöhtes Ladevolumen in der Frachter- sowie der Passagiertransportkonfiguration auf.

Das Querschnittsprofil kann derart ausgebildet sein, dass das obere Deck in z-Richtung eine lichte Weite, insbesondere Höhe, von mindestens 280 cm bis maximal 300 cm (ca. 110 Zoll bis ca. 118 Zoll), insbesondere von mindestens 285 cm bis 290 cm (ca. 112 Zoll bis ca. 114 Zoll) aufweist. Bevorzugt weist das obere Deck im Tonnenabschnitt in z-Richtung eine lichte Weite von 288 cm (ca. 113,5 Zoll) auf.

Das Querschnittsprofil kann derart ausgebildet sein, dass das obere Deck in z-Richtung eine lichte Weite, insbesondere Höhe, von mindestens 254 cm bis maximal 287 cm (100 Zoll bis 113 Zoll), insbesondere von mindestens 264 cm bis 273 cm (104 Zoll bis 107 Zoll) aufweist. Bevorzugt weist das obere Deck im Tonnenabschnitt in z-Richtung eine lichte Weite von 267 cm (105,75 Zoll) auf. Alternativ kann das obere Deck im Tonnenabschnitt in z-Richtung eine lichte Weite von ca. 274 cm (ca. 108 Zoll) aufweisen. Weiter alternativ ist denkbar, dass das obere Deck im Tonnenabschnitt 1 in z-Richtung eine lichte Weite von 284,75 cm (112,5 Zoll) aufweisen kann. Diese lichte Weite, insbesondere Höhe, bemisst sich ausgehend von einer Oberkante des Bodens in z-Richtung. Hierbei ist vorteilhaft, dass im oberen Deck (Hauptdeck) quaderförmige Container, insbesondere AMA-Container, mit den Abmessungen 243,8 x 317,5 x 243,8 cm (96 x 125 x 96 Zoll) angeordnet werden können. Ferner sind im oberen Deck vorteilhaft, Flugzeugtriebwerke mit einem Triebwerks-Rotor-Durchmesser von bspw. ca. 239 cm (ca. 94 Zoll), ca. 247 cm (97,4 Zoll) und/oder ca. 267 cm (105 Zoll) einbringbar.

Bei einer weiteren besonders bevorzugten Ausführungsform ist das Querschnittsprofil durch wenigstens vier Kreisbogenabschnitte gebildet, wobei ein erster Kreisbogenabschnitt das obere Deck zumindest teilweise überspannt, ein zweiter Kreisbogenabschnitt das untere Deck begrenzt und zwei dritte Kreisbogenabschnitte zwischen dem ersten und dem zweiten Kreisbogenabschnitt einander gegenüber angeordnet sind. Die zwei dritten Kreisbogenabschnitte sind bezogen auf die z-Achse spiegelsymmetrisch angeordnet. Die beiden dritten Kreisbogenabschnitte grenzen jeweils an den ersten und den zweiten Kreisbogenabschnitt an. Die wenigstens vier Kreisbogenabschnitte bilden zusammen eine geschlossene Kontur, die das Querschnittsprofil des Tonnenabschnitts bildet. Generell ist denkbar, dass das Querschnittsprofil alternativ durch weniger als vier Kreisbogenabschnitte oder durch genau vier Kreisbogenabschnitte gebildet ist.

Der Tonnenabschnitt bzw. der Rumpf kann aus vier Teiltonnensegmenten hergestellt werden, wobei jeweils ein Teiltonnensegment einen der vier Kreisbogenabschnitte aufweist und sich in Längsrichtung des Tonnenabschnitts erstreckt. Dies hat den Vorteil, dass der Tonnenabschnitt einen modularen Aufbau aufweist, wodurch die Herstellung sowie Konfiguration des Tonnenabschnitts bzw. des Rumpfs vereinfacht wird. Des Weiteren ist vorteilhaft, dass eine Variantenvielfalt des Flugzeugs erhöht wird, da die Möglichkeit besteht, in den Teiltonnensegmenten mit den dritten Kreisbogenabschnitten für die Passagiertransportkonfiguration des Flugzeugs wenigstens eine Fensterreihe oder für die Frachterkonfiguration des Flugzeugs fensterlose Teiltonnensegmente vorzusehen. Das Flugzeug ist somit vorteilhaft entsprechend der Anwendung individuell konfigurierbar.

Vorzugsweise sind die dritten Kreisbogenabschnitte derart ausgebildet, dass diese in z-Richtung eine Höhe von 80 cm bis 120 cm (32 Zoll bis 47 Zoll), insbesondere von ca. 104 cm (41 Zoll) aufweisen. Die Höhe bemisst sich ausgehend von einer Höhenposition der Mittelpunkte der dritten Kreisbogenabschnitte in z-Richtung. Mit anderen Worten sind die Mittelpunkte der dritten Kreisbogenabschnitte von der Oberkante des Bodens in z-Richtung beabstandet, wobei sich die Höhe der dritten Kreisbogenabschnitte ausgehend von den Höhen deren Mittelpunkte in z-Richtung erstreckt. Ausgehend von der Oberkante des Bodens können die dritten Kreisbogenabschnitte, insbesondere die Teiltonnensegmente, in z-Richtung eine Höhe von ca. 140 cm bis ca. 170 cm (ca. 55 Zoll bis ca. 67 Zoll) aufweisen. Bevorzugt weisen die dritten Kreisbogenabschnitte in z-Richtung ausgehend von der Oberkante des Bodens eine Höhe von ca. 162 cm (ca. 64 Zoll) auf.

Alternativ können sich die dritten Kreisbogensegmente in Bezug auf die Oberkante des Bodens in z-Richtung von einer Höhe von 62 cm bis 142 cm (ca. 24,5 Zoll bis 56 Zoll), insbesondere von 89 cm bis 127 cm (35 Zoll bis 50 Zoll) erstrecken. Mit anderen Worten können die dritten Kreisbogensegmente mit einem oberen Ende in z-Richtung zwischen 62 cm und 142 cm (ca. 24,5 Zoll bis 56 Zoll), insbesondere von 89 cm bis 127 cm (35 Zoll bis 50 Zoll), oberhalb der Oberkante des Bodens enden. Hierbei ergibt sich eine gerade Segmentlänge von ca. 38 cm bis 80 cm (15 Zoll bis ca. 31,5 Zoll).

Dies ermöglicht die Anordnung einer Fensterreihe in den dritten Kreisbogenabschnitten, da herkömmliche Fenster eine Höhe von ca. 45 cm bis ca. 48 cm (18 Zoll bis 19 Zoll) aufweisen. Ferner hat in der Passagierkonfiguration des Flugzeugs ein Passagier, der in der Fensterreihe sitzt, ausreichend Platz, ohne dabei seitlich beengt zu sein. In der Frachterkonfiguration des Flugzeugs wird dadurch im oberen Deck die Nebeneinander-Anordnung in y-Richtung von zwei genormten Frachtcontainern, insbesondere AAJ und/oder AAC, mit den Grundabmessungen 223,5 cm auf 317,5 cm (88 Zoll x 125 Zoll) ermöglicht. Das Flugzeug weist somit ein erhöhtes Ladevolumen auf.

Weiter vorzugsweise liegen die Mittelpunkte des ersten und zweiten Kreisbogenabschnitts auf einer gemeinsamen z-Achse des Flugzeugs, wobei der Mittelpunkt des zweiten Kreisbogenabschnitts zum Mittelpunkt des ersten Kreisbogenabschnitts nach oben versetzt ist. Konkret ist der Mittelpunkt des zweiten Kreisbogenabschnitts zum Mittelpunkt des ersten Kreisbogenabschnitts in z-Richtung nach oben versetzt. Dadurch weist der Rumpf vorteilhaft eine verbesserte Form auf.

Bei einer bevorzugten Ausführungsform liegen die Mittelpunkte der beiden dritten Kreisbogenabschnitte auf einer gemeinsamen y-Achse, insbesondere auf gleicher Höhe, wobei die beiden Mittelpunkte bezogen auf die z-Achse versetzt in entgegengesetzter Richtung einander gegenüber angeordnet sind. Die gemeinsame y-Achse kann von der y-Achse des Flugzeugs von der Oberkante des Bodens in z-Richtung, insbesondere nach oben beabstandet sein. Mit anderen Worten sind die Mittelpunkte der dritten Kreisbogenabschnitte von der z-Achse in entgegengesetzter Richtung beabstandet. Der Abstand von der z-Achse zum jeweiligen Mittelpunkt der dritten Kreisbogenabschnitte kann zwischen 4 cm und 35 cm (2 Zoll und ca. 14 Zoll) betragen. Alternativ kann der Abstand von der z-Achse zum jeweiligen Mittelpunkt der dritten Kreisbogenabschnitte zwischen 7,5 cm und 15 cm (3 Zoll und 6 Zoll) betragen. Der Abstand von der z-Achse zum jeweiligen Mittelpunkt der dritten Kreisbogenabschnitte kann auch im Wesentlichen 9 cm (ca. 3,5 Zoll) betragen. Alternativ ist denkbar, dass der Abstand von der z-Achse zum jeweiligen Mittelpunkt der dritten Kreisbogenabschnitte ca. 27,5 cm (ca. 10,75 Zoll) beträgt.

Bei einer Ausführungsform kann der Abstand zwischen den beiden Mittelpunkten der dritten Kreisbogenabschnitte in y-Richtung von 48 cm bis 120 cm (19 Zoll bis 47 Zoll), insbesondere von 52 cm bis 118 cm (20,5 Zoll bis 46,5 Zoll) betragen. Konkreter kann der Abstand zwischen den beiden Mittelpunkten der dritten Kreisbogenabschnitte in y-Richtung von 50 cm bis 60 cm (ca. 19,5 Zoll bis ca. 23,5 Zoll), bevorzugt 54,5 cm (21,5 Zoll), oder von 85 cm bis 118 cm (33,5 Zoll bis 46,5 Zoll) betragen. Der Abstand zwischen den beiden Mittelpunkten der dritten Kreisbogenabschnitte in y-Richtung kann 91 cm (36 Zoll) oder 116 cm (ca. 45,8 Zoll) betragen

Vorzugsweise weist der erste Kreisbogenabschnitt einen Radius R1 und der zweite Kreisbogenabschnitt einen Radius R2 auf, wobei der Radius R1 kleiner als der Radius R2 ist. Bevorzugt weisen die dritten Kreisbogenabschnitte einen gleichen Radius R3 auf, der kleiner als die Radien R1, R2 ist. Der Radius R1 kann 252 cm (99 Zoll), der Radius R2 kann 249 cm (98 Zoll) und der Radius R3 kann 226 cm (89 Zoll) betragen. Die Radien R1, R2, R3 bilden vorzugsweise Außenradien der Kreisbogenabschnitte.

Bei einer besonders bevorzugten Ausführungsform ist das untere Deck in Längsrichtung des Rumpfs durchgängig ausgebildet, wobei das untere Deck einen bugseitigen Laderaum, einen heckseitigen Laderaum und im Bereich des Flügelkastens einen Durchladeraum aufweist, der den bugseitigen Laderaum und den heckseitigen Laderaum verbindet. Bevorzugt ist das untere Deck in Längsrichtung des Rumpfs durchgängig ausgebildet, sodass im Bereich eines Flügelkastens und/oder im Bereich eines Fahrwerks wenigstens ein mobiler Zusatztank und/oder wenigstens eine Palette, insbesondere PAG- und/oder PMC-Palette aufnehmbar ist. Mit anderen Worten kann der mobile Zusatztank im Durchladeraum im Bereich des Flügelkastens und/oder im Bereich des Fahrwerks bei Bedarf eingebracht werden oder entnommen werden.

Die Palette kann die Grundabmessungen bzw. Grundfläche von 243,8 cm x 317,5 cm (96 Zoll x 125 Zoll) oder 223,5 cm x 317,5 cm (88 Zoll x 125 Zoll) oder 223,5 cm x 274 cm (88 Zoll x 108 Zoll) aufweisen. Die Palette kann dabei eine Höhe von 102 cm bis 127 cm (40 Zoll bis 50 Zoll), insbesondere 114,5 cm (45 Zoll) aufweisen. Der mobile Zusatztank kann ein Volumen für Treibstoff, insbesondere Kerosin, von ca. 8800 Liter umfassen. Hierbei ist vorteilhaft, dass durch den Durchladeraum eine Beladung des unteren Decks von einer Beladeöffnung aus ermöglicht wird. Dadurch werden Beladeöffnungen sowie Beladetüren eingespart und somit Gewicht und Kosten reduziert.

Aufgrund des Durchladeraums kann im Bereich des Flügelkastens sowie des Fahrwerks auf einen fest eingebetteten Zentraltank für Treibstoff verzichtet werden. Es ist allgemein bekannt, dass der Treibstoff in dem Zentraltank oftmals lediglich zur verbesserten Gewichtsverteilung im Flugzeug dient. Dies ist insbesondere bei Kurz- und Mittelstreckenflügen nachteilig, da das Flugzeug durch den ungenutzten Treibstoff im Zentraltank ein erhöhtes Gewicht aufweist. Durch den ausgebildeten Durchladeraum entfällt der Zentraltank, wodurch Gewicht und Kosten eingespart sowie ein Wartungsaufwand reduziert werden. Um beispielsweise für Langstreckenflüge eine erhöhte Menge an Treibstoff bereitstellen zu können, sind im Durchladeraum die mobilen Zusatztanks aufnehmbar. Die Zusatztanks können jeweils die Grundabmessungen 243,8 cm x 317,5cm (96 Zoll x 125 Zoll) mit einer Höhe von 114,5 cm bis 127 cm (45 Zoll bis 50 Zoll) aufweisen.

Das Flugzeug kann wenigstens ein Fahrwerk aufweisen, das am Flugzeugbug angeordnet und im ausgefahrenen Zustand höhenverstellbar ist. Durch das höhenverstellbare Fahrwerk kann bei einem Beladen des unteren Decks der Rumpf zum Heck hin geneigt werden, sodass die Frachtstücke, insbesondere Frachtcontainer, durch die Neigung vom bugseitigen Laderaum durch den Durchladeraum in den heckseitigen Laderaum durch die Gewichtskraft selbstständig durchgeladen werden oder das Durchladen der Fracht zumindest schwerkraftunterstützt wird. Ebenso kann der Rumpf durch das höhenverstellbare Fahrwerk zum Bug hin geneigt werden, um die Frachtstücke bzw. Frachtcontainer durch die Gewichtskraft selbständig oder schwerkraftunterstützt zu entladen. Hierbei ist vorteilhaft, dass ein Be- und Entladen des Flugzeugs erleichtert wird. Ferner kann dadurch eine Frachtraumkomplexität reduziert werden.

Bei einer weiteren besonders bevorzugten Ausführungsform ist der Durchladeraum im Bereich des Flügelkastens bzw. des Fahrwerks derart ausgebildet, dass bei einer Beladung des unteren Decks Frachtcontainer vom Flugzeugbug und/oder vom Flugzeugheck ausgehend durchladbar sind. Dadurch wird eine Be- bzw. Entladung des unteren Decks vereinfacht.

Besonders bevorzugt weist der Durchladraum eine minimale Breite in y-Richtung des Flugzeugs von mindestens 240 cm bis maximal 270 cm (94,5 Zoll bis 106,5 Zoll), insbesondere von mindestens 250 cm bis maximal 260 cm (98,5 Zoll bis 102,5 Zoll) auf. Alternativ kann der Durchladeraum eine minimale Breite in y-Richtung von 244 cm (96 Zoll) aufweisen. Der Durchladeraum kann eine lichte Weite in y-Richtung von 254 cm (100 Zoll) aufweisen. Bevorzugt weist der Durchladeraum eine Durchladehöhe von mindestens 124,5 cm (49 Zoll), insbesondere konkret von 124 cm (ca. 49 Zoll) auf. Der Durchladeraum ist hierbei im Querschnitt vorzugsweise rechteckig ausgebildet. Dies hat den Vorteil, dass bei der Anordnung bspw. von PMC-Paletten mit einer Breite von 243,8 cm (96 Zoll) und einer Höhe von 114 cm (45 Zoll) ein umlaufender Abstand von ca. 5 cm (2 Zoll) vorgesehen ist und dadurch eine optimale Freigängigkeit beim Be- und Entladen der Paletten erreicht wird. Die vorgenannten Abmessungen des Durchladeraums betreffen bevorzugt den Durchladeraum eines Flugzeugs, bei dem die Flugzeugtriebwerke unterhalb der Flügel angeordnet sind.

Alternativ ist denkbar, dass der Durchladeraum eine minimale Breite in γ-Richtung des Flugzeugs von mindestens 156 cm (ca. 61,5 Zoll) aufweist.

Bei der Ausgestaltungvariante des Flugzeugs mit den Flugzeugtriebwerken am Flugzeugheck und nicht unterhalb der Flügel, unterscheiden sich die Abmessungen des Durchladeraums. Bevorzugt weist der Durchladeraum eine minimale Breite, insbesondere lichte Durchladebreite, in y-Richtung des Flugzeugs von 300 cm bis 360 cm (118 Zoll bis 142 Zoll), insbesondere von 310 cm bis 350 cm (122 Zoll bis 138 Zoll), insbesondere von 320 cm bis 340 cm (126 Zoll bis 134 Zoll) auf. Besonders bevorzugt weist der Durchladeraum eine minimale Breite in y-Richtung von 328 cm (129 Zoll) auf. Bevorzugt weist der Durchladeraum eine minimale Höhe, insbesondere lichte Durchladehöhe, in z-Richtung des Flugzeugs von 150 cm bis 190 cm (59 Zoll bis 75 Zoll), insbesondere von 160 cm bis 180 cm (63 Zoll bis 71 Zoll) auf. Besonders bevorzugt weist der Durchladeraum eine minimale Höhe in z-Richtung von 173 cm (68 Zoll) auf. Die minimale Höhe bemisst sich im Wesentlichen von einer Bodenstruktur, die bevorzugt ein Rollenbahnsystem zur Beladung des unteren Decks und die Befestigung der Frachtstücke aufweist, bis zu einer Unterkante des Bodens, der das untere vom oberen Deck trennt.

Der Durchladeraum weist bevorzugt einen rechteckigen Querschnitt auf, der in Flugzeuglängsrichtung, insbesondere in x-Richtung, zum Boden hin abgeschrägt ist. Mit anderen Worten kombiniert der Querschnitt eine Rechtecks- und Trapezform. Der Durchladeraum bildet vorzugsweise im Wesentlichen die Querschnittsform von LD-Container, insbesondere LD8-Containern ab.

Das Flugzeug in der Variante mit den Flugzeugtriebwerken am Heck weist gegenüber dem Flugzeug in der Variante mit den Flugzeugtriebwerken unterhalb an den Flügeln ein in z-Richtung höheres unteres Deck auf. Dadurch wird im unteren Deck die Konfiguration des Flugzeugs zum Passagiertransport ermöglicht. Im Unterschied dazu, weist die Flugzeugvariante mit den Triebwerken unterhalb der Flügel ein in z-Richtung höheres oberes Deck auf und kann daher in der Frachterkonfiguration in z-Richtung größere bzw. höhere Container aufnehmen.

Die Fahrwerke können dabei in y-Richtung einen Abstand zwischen deren Rotationsachsen von 956,6 cm (376 Zoll) aufweisen. Hierbei ist vorteilhaft, dass Frachtstücke und/oder mobile Zusatztanks mit einer Breite von 244 cm (96 Zoll) im Durchladeraum angeordnet oder durchgeladen werden können. Bevorzugt sind im Durchladeraum lediglich quaderförmige Frachtcontainer mit einer Breite von 244 cm (96 Zoll) einbringbar bzw. durchladbar. Im Unterschied zu allgemein bekannten Flugzeugen können die beiden Fahrwerke des erfindungsgemäßen Flugzeugs in entgegengesetzter y-Richtung nach außen versetzt sein, um einen entsprechend breiten Durchladeraum zu ermöglichen.

Das Fahrwerk weist in y-Richtung auf beiden Seiten des Rumpfs zwei Fahrwerksbeine auf, an denen jeweils Räder angeordnet sind. Bei einer bevorzugten Ausführungsform sind die Fahrwerksbeine im ausgeklappten Zustand in x-Richtung des Flugzeugs nach hinten geneigt. Mit anderen Worten weisen die Fahrwerksbeine im ausgeklappten Zustand einen Winkel auf, sodass sich die Fahrwerksbeine schräg nach hinten erstrecken. Der Winkel ist dabei zwischen einer z-Achse des Flugzeugs, die die Rotationsachse des Fahrwerks schneidet, und einer Längsachse der Fahrwerksbeine aufgespannt. Der Winkel kann vorzugsweise minimal 5° bis maximal 30° betragen. Alternativ kann der Winkel minimal 10° bis maximal 20° betragen.

Die Fahrwerksbeine sind bevorzugt derart angeordnet, dass sich diese im eingeklappten Zustand schräg nach hinten erstrecken. Dies hat den Vorteil, dass im eingeklappten Zustand eine erforderliche Breite des Durchladeraums erreicht werden kann, um evtl. mobile Zusatztanks und/oder PMC-Paletten im Durchladeraum anzuordnen.

Bei einer bevorzugten Ausführungsform weist das untere Deck im Tonnenabschnitt eine Durchladehöhe von mindestens 140 cm (55 Zoll), insbesondere von mindestens 127 cm (50 Zoll) zumindest abschnittsweise auf. Bevorzugt kann das untere Deck im Tonnenabschnitt eine Durchladehöhe von mindestens 122,5 (48,25 Zoll) oder von mindestens 124,5 cm (49 Zoll) aufweisen. Die Durchladehöhe bemisst sich im Wesentlichen von einer Bodenstruktur, die bevorzugt ein Rollenbahnsystem zur Beladung des unteren Decks und die Befestigung der Frachtstücke aufweist, bis zu einer Unterkante des Bodens, der das untere vom oberen Deck trennt. Mit anderen Worten entspricht die Durchladehöhe einer lichten Weite, insbesondere Höhe, in z-Richtung des unteren Decks. Die Durchladehöhe kann durch den gesamten Tonnenabschnitt im Wesentlichen konstant sein. Hierbei ist vorteilhaft, dass Frachtcontainer mit einer Höhe von ca. 114 cm (45 Zoll) im unteren Deck eingebracht werden können.

Bei einer Ausführungsform weist das untere Deck im Tonnenabschnitt eine lichte, insbesondere nutzbare, Höhe von einem Mittelgangboden bis zu einer Unterkante des Bodens, der die beiden Decks trennt, von 185 cm bis 215 cm (73 Zoll bis 85 Zoll), insbesondere von 185 cm bis 208 cm (73 Zoll bis 82 Zoll) auf. Bevorzugt beträgt die lichte Höhe vom Mittelgangboden bis zur Unterkante des Bodens, der die beiden Decks trennt, 185 cm bis 201 cm (73 Zoll bis 79 Zoll). Unter dem Mittelgangboden des unteren Decks ist der begehbare, insbesondere zentrale, Bereich zwischen zwei Sitzreihen zu verstehen. Ferner ist der Mittelgangboden bevorzugt in Bezug auf die seitlichen Sitzreihen in z-Richtung nach unten versetzt, insbesondere vertieft ausgebildet, um die benötigte Standhöhe für Passagiere zu erhalten.

In der Frachterkonfiguration bietet das untere Deck bei dieser Ausführungsform die erforderliche Höhe für das Einbringen eines standardisierten Containers, beispielsweise eines LD-8 Containers mit 162,5 cm (64 Zoll) Höhe.

Vorzugsweise ist das obere Deck derart ausgebildet, dass zum Passagiertransport maximal sieben Sitzreihen einbringbar sind, wobei im eingebrachten Zustand wenigstens zwei Gänge in Längsrichtung, insbesondere in x-Richtung, zwischen den Sitzreihen verlaufen. Die Sitzreihen verlaufen in Längsrichtung des Flugzeugs. Bevorzugt ist eine Bestuhlung in 2-3-2-Konfiguration im oberen Deck vorgesehen. Dies kann den Economy-Bereich betreffen. Zusätzlich ist eine Bestuhlung in 1-2-1-Konfiguration bspw. für den Business-Bereich und/oder eine Bestuhlung in 2-2-2-Konfiguration bspw. für den Premium-Economy-Bereich denkbar. Die Gänge können jeweils eine Breite in y-Richtung zwischen den angrenzenden Sitzreihen von 38 cm bis 65 cm (15 Zoll bis 25,6 Zoll) aufweisen. Bevorzugt weisen die Gänge jeweils eine Breite in y-Richtung zwischen den angrenzenden Sitzreihen von ca. 52 cm (ca. 20,5 Zoll) auf.

Bei einer bevorzugten Ausführungsform sind wenigstens ein Küchenbereich und wenigstens ein Sanitärbereich vorgesehen, wobei der Küchenbereich an einem Rumpfende angeordnet ist und der Sanitärbereich in Längsrichtung zur Rumpfmitte hin vom Küchenbereich beabstandet angeordnet ist. Dies hat den Vorteil, dass Passagiere, welche den Sanitärbereich benutzen wollen, nicht durch den Küchenbereich gehen müssen oder nicht im Küchenbereich stehen, während die Passagiere vor dem Sanitärbereich warten. Hierbei wird eine Bewegungsfreiheit für Passagiere und das Flugzeugpersonal verbessert.

Vorzugsweise umfasst der Küchenbereich wenigstens eine Aufnahmeeinrichtung, insbesondere einen Galley-Ring, zur Aufnahme von Frachtstücken, insbesondere Küchenutensilien und/oder Gepäck, die im Rumpf ringförmig ausgebildet ist und sich zumindest teilweise durch die beiden Decks erstreckt. Eine derartige Aufnahmeeinrichtung ist aus der EP 2 602 187 B1 bekannt, welche auf die Anmelderin zurückgeht.

Bevorzugt sind wenigstens eine erste Ladetür zum Be- und Entladen des oberen Decks und/oder wenigstens eine zweite Ladetür zum Be- und Entladen des unteren Decks angeordnet. Die erste Ladetür des oberen Decks kommt lediglich in der Frachterkonfiguration oder einer Kombinationskonfiguration, bei der im oberen Deck Passagiere und Fracht transportiert werden, des Flugzeugs zur Anwendung. Die erste Ladetür und/oder die zweite Ladetür können im Tonnenabschnitt angeordnet sein. Die Anordnung der ersten Ladetür des oberen Decks im Tonnenabschnitt hat den Vorteil, dass bei der Herstellung im Falle eines Verlängerns oder Verkürzens ("stretching/shrinking") des Flugzeugs die Ladetür bzw. der Tonnenabschnitt nicht betroffen ist, wodurch standardisierte Sektionen der komplexen Bauabschnitte des Flugzeugs erhalten bleiben. Dies betrifft beispielsweise den Flugzeugbug, das Flugzeugheck oder den Flügelkastenbereich.

Vorzugsweise sind die erste Ladetür im Bugbereich und die zweite Ladetür im Heckbereich angeordnet oder die zweite Ladetür im Bugbereich und die erste Ladetür im Heckbereich an gegenüberliegenden Seiten des Flugzeugs angeordnet.

Vorzugsweise umfasst das untere Deck zwei Ladetüren, wobei durch eine vordere Ladetür der bugseitige Laderaum und durch eine hintere Ladetür der heckseitige Laderaum zum Be- und Entladen zugänglich ist. Die vordere Ladetür verschließt dabei eine vordere Ladeöffnung, die größer ist als eine hintere Ladeöffnung des heckseitigen Laderaums. Üblicherweise werden Paletten durch die vordere Ladetür und Container durch die hintere Ladetür geladen. Dies hat den Vorteil das die Paletten bereits frühzeitig vorne eingeladen werden können und somit ein "Tail-Tipping" verhindert wird. Die Beladung der Container in den heckseitigen Laderaum hat den Vorteil, dass dadurch "last-minute Passagierkoffer" noch eingeladen werden können, ohne das ein "Tail-Tipping" berücksichtigt werden muss.

Die vordere Ladeöffnung kann eine lichte Breite von mindestens ca. 332,5 cm (131 Zoll) aufweisen. Die vordere Ladeöffnung kann alternativ eine lichte Breite von mindestens 259 cm (102 Zoll) aufweisen. Ferner kann die hintere Ladeöffnung eine lichte Breite von mindestens 168 cm (66 Zoll) aufweisen. Die vordere Ladeöffnung und/oder die hintere Ladeöffnung können eine lichte Höhe von mindestens 124,5 cm (49 Zoll) oder 137 cm (54 Zoll) aufweisen. Besonders vorteilhaft weist das untere Deck lediglich eine einzige Ladetür zum Be- und Entladen auf, durch die eine bugseitige Ladeöffnung verschließbar ist. Dies hat den Vorteil, dass Gewicht und Kosten durch entfallende weitere Ladetüren eingespart werden.

Bei der Ausgestaltungsvariante des Flugzeugs mit den Flugzeugtriebwerken unter den Flügeln und in der Frachterkonfiguration des Flugzeugs weist das untere Deck bevorzugt wenigstens eine Ladeöffnung mit einer lichten Höhe von 124,5 cm (49 Zoll) auf. Des Weiteren ist hier bevorzugt eine weitere Ladeöffnung zum Be- und Entladen des oberen Decks vorgesehen. Vorzugsweise ist die weitere Ladeöffnung hinten oben links, d.h. vom Flugzeugheck aus gesehen in Längsrichtung hinten, insbesondere vor dem Flugzeugheck, in z-Richtung im Bereich des oberen Decks und in y-Richtung auf der linken Flugzeugseite ausgebildet. Dabei ist besonders bevorzugt die Ladeöffnung des unteren Decks vom Flugzeugheck aus gesehen in Längsrichtung vorne, insbesondere in der Nähe des Flugzeugbugs, in z-Richtung im Bereich des unteren Decks und in y-Richtung auf der rechten Flugzeugseite ausgebildet. Dadurch ist vorteilhaft ein gleichzeitiges Beladen beider Decks möglich, ohne ein "Tail-Tipping" zu provozieren.

Bei der Ausgestaltungsvariante des Flugzeugs mit den Flugzeugtriebwerken am Flugzeugheck, insbesondere nicht unter den Flügeln, weist das untere Deck vorzugsweise wenigstens eine Ladeöffnung mit einer lichten Höhe von 172 cm (68 Zoll) auf. Des Weiteren ist hier vorzugsweise eine weitere Ladeöffnung zum Be-und Entladen des oberen Decks vorgesehen, die vorne oben links angeordnet ist. Mit anderen Worten ist die weitere Ladeöffnung des oberen Decks vom Flugzeugheck aus gesehen in Längsrichtung vorne, insbesondere in der Nähe des Flugzeugbugs, in z-Richtung im Bereich des oberen Decks und in γ-Richtung auf der linken Flugzeugseite ausgebildet. Zusätzlich ist bevorzugt die Ladeöffnung des unteren Decks vom Flugzeugheck aus gesehen in Längsrichtung hinten, insbesondere in der Nähe des Flugzeughecks, in z-Richtung im Bereich des unteren Decks und in y-Richtung auf der linken Flugzeugseite ausgebildet. Auch bei dieser Variante wird durch ein gleichzeitiges Beladen der Decks ein "Tail-Tipping" verhindert. Vorteilhaft ist hier die linksseitige Anordnung der Ladeöffnungen, da dadurch eine Beschädigung der "Tailing-Edge"-Klappen des Flugzeugs durch Anstossen eines Be- und Entladefahrzeugs, insbesondere mit dem Führerstand, verhindert wird. Als Be- und Entladefahrzeug kann ein Hochlader ("High-Loader") zum Einsatz kommen.

Weiter vorzugsweise weist der Rumpf eine Rumpfstruktur mit einer Vielzahl von Spanten auf, die in x-Richtung voneinander beabstandet angeordnet sind, wobei der Abstand zwischen den jeweils benachbarten Spanten 53 cm oder 64 cm (21 Zoll oder 25,2 Zoll) beträgt. Dies hat den Vorteil, dass die Decks mit Paletten mit einem genormten Maß von 317,5 cm (125 Zoll) Länge und einem Riegelspaltmaß von 2,5 cm (1 Zoll) beladbar sind.

In einer Ausführungsform ist mindestens eine Trittpfanne mit einem Trittbereich des unteren Decks vorgesehen, wobei die mindestens eine Trittpfanne in mindestens einem Seitenabschnitt eines Bodens des unteren Decks angeordnet ist. Der Trittbereich kann derart ausgebildet sein, dass dieser im Wesentlichen parallel zum Horizontalabschnitt des Bodens verläuft. In einer Ausführungsform sind die Trittpfannen einstückig in den jeweiligen Seitenabschnitt integriert. Bei einer bevorzugten Ausführungsform ist wenigstens ein Frachtraummodul im unteren Deck angeordnet, um die Rumpfstruktur des Rumpfs zu verstärken und den Boden abzustützen. Das Flugzeug kann frei von vertikalen Verstärkungsstreben sein. Hierbei ist vorteilhaft, dass im unteren Deck seitlich fest installierte Verstärkungsstreben entfallen können, sodass das Raumvolumen des unteren Decks zur Frachtanordnung verbessert ausgenutzt werden kann.

Bei einer Ausführungsform weist der Durchladeraum einen durchgängigen Durchladequerschnitt auf, der kleiner als ein durchgängiger Laderaumquerschnitt des bugseitigen und heckseitigen Laderaums ist. Der in Bezug auf den bugseitigen und heckseitigen Laderaum verengte Durchladequerschnitt des Durchladeraums ergibt sich durch die Fahrwerke, die im eingeklappten Zustand im Rumpf beidseitig einen Platz belegen. Mit anderen Worten ragen die Fahrwerke im eingeklappte Zustand von außen in den Rumpf seitlich ein, sodass der Durchladeraum im Vergleich zu dem bugseitigen und heckseitigen Laderaum im Querschnitt kleiner ist. Dies ermöglicht ein Verstauen der Fahrwerke im Flugbetrieb, wobei gleichzeitig der Durchladeraum zum bug- oder heckseitigen Durchladen von Frachtstücken bzw. zum Platzieren von mobilen Zusatztanks ausgebildet ist. Der verengte Durchladeraum ist beispielsweise bei Flugzeugen möglich, deren Flugzeugtriebwerke unterhalb an den Flügeln angeordnet sind. Dies trifft besonders für Flugzeuge in Tiefdecker-Konfiguration zu. Andere Konfigurationen sind möglich.

Bei einer (dazu alternativen) Ausführungsform bildet der Durchladeraum mit dem bugseitigen und heckseitigen Laderaum einen gemeinsamen, durchgängigen Laderaum mit einem im Wesentlichen gleichbleibenden Laderaumquerschnitt. Mit anderen Worten weist das untere Deck einen Laderaumquerschnitt auf, der zwischen dem Flugzeugbug und Flugzeugheck konstant ist. Dies hat den großen Vorteil, dass eine Beladung des unteren Decks vollständig von einer Laderaumseite, insbesondere Flugzeugheck oder -bug, aus durchgeführt werden kann. Dies ermöglicht, dass lediglich eine Laderaumtür vorgesehen werden muss, die bevorzugt heckseitig angeordnet ist. Der durchgängige Laderaum ist bevorzugt in Flugzeugen mit kurzen Fahrwerksbeinen möglich, d.h. die Fahrwerke beanspruchen im eingeklappten Zustand nur einen geringen Bereich seitlich im Rumpf, sodass der Ladraumquerschnitt durchgängig gleich sein kann. Dies ist insbesondere bei Flugzeugen möglich, bei denen die Flugzeugtriebwerke am Flugzeugheck angeordnet sind, d.h. die Triebwerke nicht an den Flügeln angeordnet sind. Dies trifft für Flugzeuge in Tiefdecker-Konfiguration zu. Andere Konfigurationen sind möglich.

In einer Ausführungsform sind im Bereich der Flügel mehrere quer zur Längsrichtung des Flugzeugs verlaufende Platten und/oder Träger vorgesehen, die in Flugzeuglängsrichtung voneinander beabstandet und mit einer Rumpfstruktur, insbesondere Spanten, des Flugzeugs verbunden sind. Bei den Platten kann es sich um im Wesentlichen flächige Elemente handeln, die sich von der einen Seite des Flugzeugs zur gegenüberliegenden Seite des Flugzeugs, vorzugsweise durchgängig erstrecken. Im Querschnitt umspannen bzw. umlaufen die Platten oder Träger in zumindest einem Ausführungsbeispiel den Durchladeraum. Die Platten oder Träger können zumindest teilweise als Faserverbundwerkstoff ausgebildet sein. Sie können im Querschnitt - quer zur x-Richtung des Flugzeugs - zumindest abschnittsweise eine C-förmig Ausgestaltung haben.

Die Platten können eine Bauteilstruktur mit mehreren T- oder I-förmigen Stegen aufweisen, die miteinander verbunden sind. Dazu kann zwischen den Stegen wenigstens ein Verbindungssteg angeordnet sein, um die Bauteilstruktur auszusteifen. Mit anderen Worten können die Platten eine Vielzahl von Stegen aufweisen, die eine Bauteilstruktur bilden. Die Stege sind dabei zumindest abschnittsweise miteinander verbunden. Zwischen den Stegen können flächige Elemente angeordnet sein, die in ihrer Dicke dünner sind, als die Stege selbst. Die Stege können miteinander integral ausgebildet sein. Alternativ oder zusätzlich können die Stege miteinander vernietet sein. Andere Verbindungvarianten sind möglich.

Zusätzlich können die Platten Strukturträger zur weiteren Aussteifung aufweisen. Diese können in z-Richtung und/oder in y-Richtung in der Plattenebene angeordnet sein.

Die Platten können jeweils einen zumindest teilweise umlaufenden Kragen aufweisen. Der Kragen kann Teil wenigstens eines Stegs sein. Bevorzugt weisen die Platten einen vollständig umlaufenden Kragen auf. Die Platten können jeweils durch ein Frästeil und/oder ein Verbundstrukturteil gebildet sein. Alternativ oder zusätzlich ist möglich, dass die Platten jeweils durch eine Nietkonstruktion gebildet sind.

Die Platten weisen in Dickenrichtung flächige Vertiefungen, insbesondere Ausfräsungen, auf. Dies hat den Vorteil, dass Gewicht eingespart wird. Die flächigen Vertiefungen können an den Platten an zwei gegenüberliegenden Plattenseiten ausgebildet sein. Die flächigen Vertiefungen können in Flugzeuglängsrichtung ausgebildet sein. Die flächigen Vertiefungen sind in Bezug auf den Kragen in Dickenrichtung zur Plattenmitte hin versetzt. Mit andere Worten steht der Kragen quer zur Plattenerstreckung, insbesondere in Flugzeuglängsrichtung vor. Der Kragen kann an den Platten quer zur Plattenerstreckung beidseitig vorstehen.

Die Platten weisen vorzugsweise jeweils eine Plattendicke von 5 cm bis 6,5 cm (2 Zoll bis ca. 2,5 Zoll) auf. Bevorzugt kann der Kragen quer zur Plattenerstreckung eine Breite von 5 cm bis 6,5 cm (2 Zoll bis ca. 2,5 Zoll) aufweisen. Die Platten sind bevorzugt mit den Spanten des Flugzeugs fest verbunden. In einer Ausführungsform können die Spanten zumindest abschnittsweise integraler Bestandteil der Platten oder Träger sein. In einer Ausführungsform verlaufen die Platten oder Träger zumindest abschnittsweise parallel zum Frachtboden des Durchladeraums. Es ergibt sich also eine Verstärkungsstruktur, die von der einen Seite des Flugzeugs zur anderen Seite des Flugzeugs verläuft und die auf die Flügel wirkenden Kräfte aufnimmt.

Jeweils eine der Platten kann in Flugzeuglängsrichtung hinter oder vor einem Spanten angeordnet und mit diesem fest verbunden sein. Die Platten können auch an der Position der Spanten angeordnet sein. Die Platten können mit der Rumpfstruktur, insbesondere den Spanten, stoffschlüssig und/oder formschlüssig und/oder kraftschlüssig verbunden sein. Die Platten können mit der Rumpfstruktur integral ausgebildet sein. Wie bereits erläutert, können die Platten mit den Spanten integral ausgebildet sein. Mit anderen Worten können die Platten und die Spanten einteilig ausgebildet sein. Die Platten sind vorzugsweise starr ausgebildet. Des Weiteren können die Platten einstückig ausgebildet sein. Durch die Platten ist der Flügelkasten in y-Richtung besonders steif ausgebildet. Ferner ermöglicht eine derartige Plattenkonstruktion bei entsprechender Materialwahl eine besonders leichte und stabile Bauweise des Flügelkastens. Zwischen den Platten kann jeweils ein Luftspalt vorgesehen sein, der parallel zu den Platten quer zur Flugzeuglängsrichtung verläuft.

Aufgrund der sehr steifen Flügelkastenstruktur sind etwaige Zusatztanks bevorzugt im Flügelkastenbereich angeordnet. Im Flügelkastenbereich ist die Mindestanforderung an die Befestigung der Zusatztanks verbessert umsetzbar. Die Mindestanforderungen beziehen sich in Flugzeuglängsrichtung auf 9G (9-fache g-Kraft) und in y-Richtung des Flugzeugs auf 3G (3-fache g-Kraft).

Weiter bevorzugt bilden die Platten oder Träger wenigstens einen Aufnahmestummel für jeweils einen Flügel, in dem sich die Platten quer zur Flugzeuglängsrichtung über die Rumpfaußenhaut des Flugzeugs hinaus erstrecken. Mit anderen Worten stehen die Platten mit deren Plattenenden in y-Richtung über den Rumpfbereich vor, sodass die Flügel auf die Plattenenden aufgeschoben werden können. Die auf einer Querseite des Rumpfs vorstehenden Plattenenden bilden gemeinsam einen Aufnahmestummel für einen Flügel. Da die Platten vorzugsweise beidseitig über die Rumpfaußenhaut des Flugzeugs vorstehen, bilden diese am Rumpf zwei gegenüberliegende Aufnahmestummel für die Flügel. Die Flügel sind bevorzugt auf die Aufnahmestummel aufgesteckt. Über die Aufnahmestummel sind auftretende Kräfte an den Flügeln bzw. durch die Flügel direkt in die Flügelkastenstruktur einleitbar. Durch die Platten können Zug- und Schubkräfte besonders gut aufgenommen und in die Rumpfstruktur eingeleitet werden. Ferner hat diese Ausführungsform den Vorteil, dass die Platten, die sich quer durch den Flügelkasten erstrecken, mit den Plattenenden jeweils in die Flügel hineinragen. Es ist dadurch ein ineinandergreifender Übergang zwischen den Flügeln und dem Flügelkasten ausgebildet, sodass der Anschlussbereich der Flügel am Rumpf entlastet wird. Durch das fächerförmige Eingreifen der Plattenenden in die Flügel wird die Kraftübertragung erheblich verbessert.

In einer Ausführungsform weisen die Platten jeweils wenigstens eine in Flugzeuglängsrichtung ausgebildete Durchgangsöffnung auf, durch die der Durchladeraum verläuft. Mit anderen Worten weisen die Platten im Bereich des Laderaums des unteren Decks in Flugzeuglängsrichtung wenigstens eine Aussparung für den Durchladeraum auf. Die Platten sind bevorzugt derart in Längsrichtung des Flugzeugs hintereinander angeordnet, dass die Durchgangsöffnungen gleicher Größe miteinander fluchten. Die Durchgangsöffnungen der Platten bilden somit einen gemeinsamen Durchgang in Flugzeuglängsrichtung durch den Flügelkasten sowie im Bereich der Fahrwerke. Der Durchladeraum ist durch die sehr stabile Flügelkastenstruktur zumindest abschnittsweise umschlossen.

Die Durchgangsöffnungen begrenzen vorzugsweise den Durchladeraum in y-Richtung zumindest teilweise umlaufend. Mit anderen Worten bilden die Durchgangsöffnungen im Wesentlichen die Querschnittskontur des Durchladeraums ab. Die Durchgangsöffnungen können in Flugzeuglängsrichtung eine Querschnittsform aufweisen, die rechteckig und/oder trapezförmig ist. Andere Querschnittsformen sind möglich.

Bei einer weiteren bevorzugten Ausführungsform weist der Flügelkasten mehrere in y-Richtung verlaufende Querträger auf, die in z-Richtung oberhalb der Platten angeordnet sind und mit den Platten zur Aussteifung der Rumpfstruktur zusammenwirken. Mit anderen Worten bilden die Querträger vorzugsweise den in z-Richtung obenliegenden Teil der Queraussteifungsstruktur. Die Querträger sind im Vergleich zu Querträgern der Rumpfstruktur, die in Flugzeuglängsrichtung außerhalb des Flügelkastens angeordnet sind, zur Aufnahme von erhöhten Kräften verstärkt ausgebildet. Die Querträger des Flügelkastens sind mit den Platten vorzugsweise kraftübertragend verbunden. Die Querträger bilden mit den Platten eine besonders stabile Aussteifungseinheit, sodass die Stabilität des Flügelkastens weiter erhöht wird. Die Querträger versteifen insbesondere die Rumpfstruktur in y-Richtung, besonders im Bereich der Flügel. Die Querträger stützen die Spanten in y-Richtung im Flügelbereich ab, sodass nicht nur die Stabilität des Flügelkastens, sondern auch die Stabilität des gesamten Tonnenabschnitts im Bereich der Flügel ausgesteift ist.

Bevorzugt weist der Flügelkasten mehrere in Flugzeuglängsrichtung verlaufende Längsträger auf, die die Querträger miteinander verbinden. Die Längsträger verbinden bevorzugt die Querträger in Flugzeuglängsrichtung miteinander. Die Längsträger bilden dabei mit den Querträgern eine Rasterstruktur, die im Wesentlichen in z-Richtung oberhalb der Platten angeordnet ist. Die Längsträger sind in Flugzeuglängsrichtung bevorzugt im Flügelkastenbereich sowie im Bereich der Fahrwerke angeordnet. Die Längsträger versteifen die Rumpfstruktur, insbesondere den Flügelkasten, in Flugzeuglängsrichtung. Die Längsträger können in Flugzeuglängsrichtung über den Flügelkasten bzw. die Fahrwerke hinauserstrecken, um die Stabilität weiter zu erhöhen. Insgesamt bildet der Flügelkasten mit den Platten sowie den Quer- und Längsträgern eine sehr stabile Struktur, die der steifste Teil der Rumpfstruktur ist.

Besonders bevorzugt verlaufen in z-Richtung des Flugzeugs oberhalb der Längsträger Sitzschienen zur Befestigung von Passagiersitzen bzw. von Frachtstücken. Da der Flügelkasten, insbesondere im Bereich der Flügel, den steifsten Bereich der Rumpfstruktur bildet, ist vorzugsweise in einem Übergangsbereich zwischen dem Flügelkasten und anschließenden weiteren Tonnenabschnitten des Flugzeugs wenigstens ein Gelenk angeordnet, das die Sitzschienen im Flügelkastenbereich mit den Sitzschienen der anschließenden Tonnenabschnitte gelenkig verbindet. Im Übergangsbereich können bewegliche Sitzschienenstücke angeordnet sein, die die Sitzschienen der anschließenden Tonnenabschnitte mit den Sitzschienen im Flügelkastenbereich verbinden. Die an den Flügelkastenbereich anschließenden Tonnenabschnitte weisen vorzugsweise weitere in Flugzeuglängsrichtung verlaufende Längsträger auf, auf denen die weiteren Sitzschienen verlaufen. Die Längsträger der anschließenden Tonnenabschnitte sind vorzugsweise mit der Flugzeugstruktur, insbesondere den Spanten und der Rumpfaußenhaut, fest verbunden. Die beweglichen Sitzschienenstücke sind vorzugsweise dazu angepasst, die vertikale Verformung der Längsträger unter Last relativ zum steifen Flügelkasten auszugleichen. Der Übergangsbereich bildet bei Belastung bspw. im Flugbetrieb den Bereich der maximalen Biegung des Flugzeugrumpfs. Dies hat den Vorteil, dass bspw. im Flugbetrieb die im Vergleich zum Flügelkastenbereich flexibleren Tonnenabschnitte entsprechend verformen bzw. verbiegen können, ohne eine Beschädigung im Übergangsbereich zwischen den flexiblen und steifen Tonnenabschnitten hervorzurufen.

Generell ist es möglich, dass die Längsträger einen bestimmten Grad an Flexibilität bzw. Beweglichkeit gegenüber den weiteren Tonnenabschnitten des Flugzeugs aufweisen. Dadurch wird eine optimal abgestimmte Verformbarkeit des Rumpfs erreicht.

Bei einer bevorzugten Ausführungsform sind die Flügel des Flugzeugs in z-Richtung abgewinkelt ausgebildet. Anders gesagt, weisen die Flügel des Flugzeugs bei dieser Ausführungsform in z-Richtung einen Knick auf. Die Flügel weisen vorzugsweise bezogen auf eine in y-Richtung verlaufende Referenzachse jeweils ausgehend vom Rumpf einen größeren Steigungswinkel auf als zu einem freien Flügelende der Flügel hin. Mit anderen Worten verlaufen die Flügel in y-Richtung ausgehend vom Rumpf zuerst mit einem Steigungswinkel, der steiler als ein Steigungswinkel zu den Flügelenden hin ist. Dies betrifft bevorzugt Flugzeuge in Tiefdecker-Konfiguration. Die Flügel erstrecken sich ausgehend von einem in z-Richtung unteren Rumpfbereich seitlich nach außen, wobei in einem rumpfnahen Bereich der Flügel der Steigungswinkel des jeweiligen Flügelverlaufs größer ist, als in einem rumpffernen Bereich der Flügel.

Unter dem Steigungswinkel sind Winkel zu verstehen, die ausgehend vom Rumpf zum freien Flügelende hin in z-Richtung ansteigen.

Die Flügel können im rumpfnahen Bereich einen Steigungswinkel bezogen auf die Referenzachse zwischen 12 Grad und 22 Grad, bevorzugt zwischen 14 Grad und 20 Grad, besonders bevorzugt zwischen 16 Grad und 18 Grad aufweisen. Vorzugsweise beträgt der Steigungswinkel des Flügelverlaufs im rumpfnahen Bereich 17,5 Grad. Im rumpffernen Bereich, insbesondere zum freien Flügelende hin, können die Flügel einen Steigungswinkel bezogen auf die Referenzachse zwischen 5 Grad und 12 Grad, bevorzugt zwischen 7 Grad und 10 Grad, besonders bevorzugt zwischen 8 Grad und 9 Grad aufweisen. Vorzugsweise beträgt der Steigungswinkel des Flügelverlaufs im rumpffernen Bereich ca. 8,5 Grad. Andere Winkelbeträge der Steigungswinkel sind möglich.

Die abgewinkelte Form bewirkt eine Erhöhung der Flügellage im rumpffernen Bereich und somit eine Erhöhung der Bodenfreiheit der Flügel in diesem Bereich. Die Fahrwerke sind hierbei bevorzugt im rumpfnahen Bereich der Flügel und die Flugzeugtriebwerke im rumpffernen Bereich der Flügel angeordnet. Durch die abgewinkelte Form der Flügel wird der Einsatz von größeren Flugzeugtriebwerken ermöglicht, ohne die Länge der Fahrwerksbeine zu erhöhen. Dies hat den großen Vorteil, dass bei dem Einsatz von großen Flugzeugtriebwerken die Fahrwerke im eingeklappten Zustand keinen erhöhten Platzbedarf im seitlichen Rumpfbereich im unteren Deck benötigen und dadurch der erforderliche Platz für den Durchladeraum bereitgestellt wird. Ferner wird dadurch ermöglicht, dass die Fahrwerke an deren Positionen in y-Richtung an den Flügeln und somit der Fußabdruck ("foot print") des Flugzeugs unverändert bleibt.Wie allgemein bekannt ist, sind die Fußabdrücke ("foot prints") bspw. durch die Federal Aviation Administration in dem Airport Design Dokument "AC 150/5300-13A", sowie die Airport Design Group (ADG), die International Civil Aviation Organisation (ICAO), die Taxiway Design Group (TDG) und die Wake Turbulence Category (WTC) definiert.

Bei einer weiteren bevorzugten Ausführungsform weist der Rumpf zur Aufnahme der Fahrwerke beidseitig in y-Richtung eine Rumpfstrukturerweiterung auf, die einen Freiraum bildet, in den das jeweilige Fahrwerk zumindest abschnittsweise einklappbar ist. Mit anderen Worten ist der Rumpf vorzugsweise im Bereich der Fahrwerke seitlich erweitert, sodass ein Freiraum zum Verstauen der Fahrwerke gebildet ist. Die Rumpfstrukturerweiterung ist bevorzugt im Bereich des Flügelkastens ausgebildet. Im Querschnitt ist die Rumpfstrukturerweiterung vorzugsweise durch wenigstens eine geradlinige Verlängerung wenigstens eines obenliegenden, kreissegmentförmigen Rumpfsegments zu einem Anschlussbereich des Flügels hin gebildet. Die geradlinige Verlängerung kann als Tangente des kreissegmentförmigen Rumpfsegments zu dem Flügel hin ausgebildet sein. Im Querschnitt kann der Rumpf im Bereich der Rumpfstrukturerweiterung im Wesentlichen dreieckförmig ausgebildet sein, wobei die Spitzen der Dreieckform durch abgerundete kreissegmentförmige Rumpfsegmente gebildet sind. Die beidseitige Rumpfsegmenterweiterung hat den Vorteil, dass für die Aufnahme der Fahrwerke ein separater Platz geschaffen wird und somit der Durchladeraum keine Verengung des Durchladequerschnitts aufweist.

Bevorzugt weisen die Flügel einen Profilquerschnitt auf, der sich ausgehend von den Flugzeugstriebwerken zu dem Flügelanschlussbereich am Rumpf hin vergrößert. Dadurch kann der Freiraum zum Verstauen der Fahrwerke weiter vergrößert werden.

Herkömmlicherweise weisen Flugzeugflügel einen Profilquerschnitt auf, bei dem die Profilhöhe zwischen 10 Prozent bis 12 Prozent der Profiltiefe beträgt. Dabei ist es üblich, dass die Profilhöhe zu den freien Flügelenden hin auf zirka 9 Prozent der Profiltiefe verkleinert ist und im Bereich der Flugzeugtriebwerke zwischen 11 Prozent und 12 Prozent der Profiltiefe beträgt. Bei dem erfindungsgemäßen Flugzeug kann die Profilhöhe im Anschlussbereich der Flügel am Rumpf zwischen 13 Prozent und 19 Prozent, bevorzugt zwischen 14 Prozent und 18 Prozent, besonders bevorzugt zwischen 15 Prozent und 17 Prozent, der Profiltiefe betragen. Mit anderen Worten beträgt die Profilhöhe im Anschlussbereich der Flügel bevorzugt 16 Prozent der Profiltiefe.

Die Fahrwerke weisen bevorzugt jeweils wenigstens eine Rotationsachse auf, um die die Fahrwerke zum Ein- und Ausfahren schwenkbar sind. Die beiden Rotationsachsen können in y-Richtung einen Abstand zwischen 930 cm und 970 cm (366 Zoll bis 382 Zoll) und der Durchladeraum eine lichte Breite zwischen 240 cm bis 270 cm (94,5 Zoll bis ca. 106 Zoll) aufweisen. Vorzugsweise weisen die beiden Rotationsachsen in y-Richtung einen Abstand zwischen 940 cm und 960 cm (370 Zoll bis 378 Zoll) und der Durchladeraum eine lichte Breite zwischen 250 cm bis 260 cm (ca. 98 Zoll bis ca. 102 Zoll) auf.

Besonders bevorzugt weisen die beiden Rotationsachsen in y-Richtung einen Abstand von 955 cm (376 Zoll) und der Durchladeraum eine lichte Breite von 254 cm (100 Zoll) auf. Hierbei weist der Durchladeraum bevorzugt eine lichte Höhe von 124,5 cm (49 Zoll) auf. Bei einem Flugzeug mit einem Rumpf, der eine äußere maximale Höhe von 485 cm (191 Zoll) und eine äußere maximale Breite von ca. 497 cm (196 Zoll) aufweist, wird ein Durchladeraum mit einer lichten Breite von 254 cm (100 Zoll) bereitgestellt. Dies hat den Vorteil, dass dementsprechend Frachtstücke oder mobile Zusatztanks für Treibstoff in den Durchladeraum eingebracht werden können. Bevorzugt ist das Flugzeug hier mit Flugzeugtriebwerken ausgestattet, die unterhalb an den Flügeln angeordnet sind. Bei folgenden Vorgaben der ICAO = D = Flügelspannweite < 52 m, ADG = IV = Flügelspannweite < 52 m, TDG = 5 = 1371,6 cm (45 Fuß), WTC = H = > 136 Tonnen (300000 lbs) und AC-Parking Stand Size = 5, bevorzugt 4 ergeben sich hierbei für die Flugzeugvariante mit den Flugzeugtriebwerken unter den Flügeln die vorstehend dargelegten bevorzugten Maße für die Rotationsachsen und den Durchladeraum.

Allgemein bekannte Parkplatzstandgrößen für Flugzeuge sind bspw. 38 m x 47 m ("Parking Stand 3"), 48 m x 58 m ("Parking Stand 4") oder 52 m x 62 m ("Parking Stand 5").

Alternativ können die beiden Rotationsachsen in γ-Richtung einen Abstand zwischen 750 cm und 800 cm (ca. 295 Zoll bis 315 Zoll) und der Durchladeraum eine lichte Breite zwischen 300 cm bis 340 cm (ca. 118 Zoll bis ca. 134 Zoll) aufweisen. Vorzugsweise weisen die beiden Rotationsachsen in y-Richtung einen Abstand zwischen 760 cm und 790 cm (ca. 299 Zoll bis 311 Zoll) und der Durchladeraum eine lichte Breite zwischen 310 cm bis 335 cm (122 Zoll bis ca. 132 Zoll) auf. Besonders bevorzugt weisen die beiden Rotationsachsen in y-Richtung einen Abstand von 775 cm (ca. 305 Zoll) und der Durchladeraum eine lichte Breite von 328 cm (ca. 129 Zoll) auf. Hierbei weist der Durchladeraum bevorzugt eine lichte Höhe von 173 cm (68 Zoll) auf. Bei einem Flugzeug mit einem Rumpf, der einen Außendurchmesser von ca. 477 cm (188 Zoll), insbesondere von 472 cm (186 Zoll), aufweist, wird ein Durchladeraum mit einer lichten Breite von 328 cm (ca. 129 Zoll) bereitgestellt. Dies hat den Vorteil, dass der Durchladeraum keinen verengten Laderaumquerschnitt in Bezug auf den bug- und heckseitigen Laderaum aufweist. Hierbei wird somit ein Laderaumquerschnitt des Durchladeraums ermöglicht, der vom Bug bis zum Heck konstant ist, d.h. keine Verengung im Durchladeraum aufweist. Bevorzugt ist das Flugzeug hier mit Flugzeugtriebwerken ausgestattet, die am Flugzeugheck, insbesondere nicht unter den Flügeln, angeordnet sind. Bei folgenden Vorgaben der ICAO = C = Flügelspannweite < 36 m, ADG = 3 = Flügelspannweite < 36 m, TDG = 4 = 914,4 cm (30 Fuß), WTC = M = < 136 Tonnen (300000 lbs) und AC-Parking Stand Size = 4, bevorzugt 3 ergeben sich hierbei für die Flugzeugvariante mit den Flugzeugtriebwerken am Flugzeugheck die vorstehend dargelegten bevorzugten Maße für die Rotationsachsen und den Durchladeraum.

Beispielsweise fällt das Flugzeug bei der Flugzeugvariante mit den Flugzeugtriebwerken am Heck und mit Passagierbestuhlung im oberen Deck sowie zumindest teilweise im unteren Deck in eine Größenklasse, welche eine Flügelspannweite > 36 m, des äußeren Fahrwerksabstands in y-Richtung von > 914,4 cm (30 Fuß) und ein Gewicht von WTC = M, d.h. bis zu 136 Tonnen (30000 lbs) umfasst. Mit dieser Flugzeugvariante ist somit vorteilhaft ohne "Stretching" und "Shrinking" des Rumpfs ein Passagiertransport von ca. 200 bis 270 Passagieren in einer 79 cm (31 Zoll) Single Class Configuration möglich, wobei das untere Deck vorzugsweise zur Variierung der Passagieranzahl zusätzlichen Raum zur Verfügung stellt.

Vorzugsweise liegen die Rotationsachsen der Fahrwerke in y-Richtung innerhalb der Platten des Flügelkastens. Mit anderen Worten überragen vorzugsweise die Plattenenden der Platten die Rotationsachsen der Fahrwerke in y-Richtung. Bevorzugt sind die Rotationsachsen der Fahrwerke in den Platten eingebettet. Besonders bevorzugt sind die Fahrwerke mit den Platten direkt kraftübertragend verbunden. Dazu können die Fahrwerke über Gelenke mit den Platten verbunden sein. Hier ist vorteilhaft, dass die Flügeltragstruktur entlastet wird und auftretende Kräfte, bspw. bei einem Start- oder Landevorgang, direkt in die steife Flügelkastenstruktur eingeleitet werden.

Das erfindungsgemäße Flugzeug kann wenigstens zwei Flugzeugtriebwerke aufweisen, die zumindest abschnittsweise unterhalb an den Flügeln angeordnet sind. Alternativ oder zusätzlich kann das Flugzeug wenigstens zwei Flugzeugtriebwerke aufweisen, die in einem Bereich eines Hecks des Flugzeugs angeordnet sind.

Bei einer bevorzugten Ausführungsform umfasst das Flugzeug im unteren Deck wenigstens ein faltbares Frachtraummodul, insbesondere mehrere faltbare Frachtraummodule, die in einem entfalteten Zustand einen Innenraum bilden. Der Innenraum kann ein Frachtraum zum Transportieren von Frachtstücken oder ein Passagierraum für den Passagiertransport sein. Das faltbare Frachtraummodul ist bevorzugt auswechselbar im unteren Deck angeordnet. Dadurch wird eine schnelle und einfache Umkonfiguration des unteren Decks bspw. von einer reinen Frachterkonfiguration zu einer Passagier-/Frachterkonfiguration im unteren Deck ermöglicht. Für den Passagiertransport kann das faltbare Frachtraummodul mit einer Passagierbestuhlung bereits vor dem Einbringen des Moduls in das untere Deck ausgestattet sein. Mit anderen Worten kann das faltbare Frachtraummodul fertig bestückt in das untere Deck eingebracht werden, sodass eine nachträgliche Bestuhlung entfällt. Dies spart Zeit und Kosten.

Bei der Konfiguration des Flugzeugs als Frachter können die faltbaren Frachtraummodule mit Frachtsystemkomponenten vorausgestattet sein. Die Module werden bei der Konfiguration des unteren Decks mit den vormontierten Frachtsystemkomponenten in das untere Deck eingebracht. Dadurch ist eine Konfiguration des unteren Decks schnell und einfach durchführbar.

Bspw. kann das vorab bestückte Frachtraummodul bei der Variante des Flugzeugs mit den Triebwerken am Heck durch die hintere Ladeöffnung in das untere Deck eingebracht werden und aufgrund des konstant durchgängigen Laderaumquerschnitts in Flugzeuglängsrichtung von hinten nach vorne eingeschoben werden. Dies ermöglicht die Konfiguration bzw. Umkonfiguration des unteren Decks mit sehr geringem Zeitaufwand.

Es ergeben sich somit folgende mögliche Konfigurationen des Flugzeugs zum Passagier- und/oder Frachttransport:
- Oberes Deck mit Passagierbestuhlung zum reinen Passagiertransport im oberen Deck und unteres Deck als Frachtstück-Laderaum zum reinen Frachtstücktransport;
- Oberes Deck mit Passagierbestuhlung zum reinen Passagiertransport und unteres Deck mit abschnittsweiser Passagierbestuhlung zum Passagiertransport und als abschnittsweisen Frachtstück-Laderaum zum Frachtstücktransport. Hier ist das untere Deck zum Passagier- und Frachtstücktransport ausgestaltet; und/oder
- Oberes Deck und unteres Deck als Frachtstück-Laderaum zum reinen Frachtstücktransport. Bei dieser Variante ist kein Passagiertransport, außer der Flugzeug-Crew vorgesehen.

Bei den vorgenannten Flugzeugkonfigurationen ist es möglich, im Flügelkastenbereich anstatt von Frachtcontainern bzw. Frachtstücken mobile Zusatztanks für Treibstoff vorzusehen, um die Reichweite des Flugzeugs bei Bedarf zu erweitern.

Das faltbare Frachtraummodul kann zusätzlich oder alternativ wenigstens einen vormontierten Galley-Ring und/oder wenigstens einen vormonierten Sanitärbereich, insbesondere einen Toilettenbereich, des unteren Decks aufweisen.

Hinsichtlich des faltbaren Frachtraummoduls wird ferner Bezug genommen auf die Anmeldung DE 10 2019 132 292.8, deren Inhalt hiermit, insbesondere mit Blick auf die Ausführbarkeit, in diese Anmeldung aufgenommen wird.

Ein nebengeordneter Aspekt der Erfindung betrifft ein Flugzeug für den Fracht- und Passagiertransport mit einem Rumpf, der sich in Längsrichtung erstreckt und ein oberes Deck, insbesondere Hauptdeck, und ein unteres Deck aufweist, die durch einen Boden voneinander getrennt sind. Der Rumpf weist einen Tonnenabschnitt mit einem Querschnittsprofil zur Aufnahme von Frachtstücken und/oder Passagieren auf. Das Querschnittsprofil ist durch einen einzelnen, insbesondere durchgängigen, Kreis gebildet, sodass in das obere Deck und das untere Deck Frachtstücke mit unterschiedlichen Größenmaßen, insbesondere Frachtcontainer mit unterschiedlichen Höhen- und Breitenmaßen, aufnehmbar sind. Das Flugzeug gemäß dem nebengeordneten Aspekt ist mit den Merkmalen der vorstehend beschriebenen Ausführungsformen des erfindungsgemäßen Flugzeugs kombinierbar.

Nach dem nebengeordneten Anspruch 16 betrifft die Erfindung einen Frachtcontainer zum Transport von Frachtstücken in einem Flugzeug, der einen trapezförmigen Grundkörper mit einem Bodenbereich und einem Deckenbereich aufweist, die einander gegenüber angeordnet sind, wobei der Bodenbereich wenigstens ein Befestigungselement umfasst, das mit einer Befestigungsvorrichtung des Flugzeugs verbindbar ist, und wobei der Bodenbereich wenigstens eine erste Längsseite von mindestens 240 cm (94,5 Zoll), insbesondere 244 cm (96 Zoll), und der Deckenbereich wenigstens eine zweite Längsseite von mindestens 315 cm (124 Zoll), insbesondere 317 cm (125 Zoll), umfasst, wobei der Frachtcontainer eine Gesamthöhe von mindestens 99 cm bis maximal 130 cm (39,5 Zoll bis 51 Zoll) aufweist.

Bei einer bevorzugten Ausführungsform weist der Frachtcontainer eine Gesamthöhe von mindestens 102 cm bis maximal 127 cm (40 Zoll bis 50 Zoll) auf. Vorzugswiese weist der Frachtcontainer eine Gesamthöhe von 114,5 cm (45 Zoll) auf. Alternativ kann der Frachtcontainer eine Gesamthöhe von ca. 127 cm (ca. 50 Zoll) aufweisen. Bevorzugt weist der Frachtcontainer eine Tiefe von 153,5 cm (60,4 Zoll) auf.

Nach dem nebengeordneten Anspruch 17 betrifft die Erfindung ein Verfahren zum Beladen eines erfindungsgemäßen Flugzeugs, wobei das untere Deck des Flugzeugs einen bugseitigen Laderaum, einen heckseitigen Laderaum und im Bereich eines Flügelkastens einen Durchladeraum aufweist, der den bugseitigen Laderaum und den heckseitigen Laderaum verbindet. Das untere Deck weist eine bugseitige Ladeöffnung auf, die durch eine Ladetür verschließbar ist. Bei einem Beladevorgang wird wenigstens ein Frachtstück, insbesondere ein Frachtcontainer, durch die bugseitige Ladeöffnung in den bugseitigen Laderaum eingebracht und anschließend durch den Durchladeraum in den heckseitigen Laderaum durchgeladen.

Die Erfindung kann auch in einem Verfahren zum Umkonfigurieren eines Flugzeugs, insbesondere eines Flugzeugs wie vorab beschrieben, gesehen werden. Bei diesem Verfahren zum Umkonfigurieren werden faltbare Frachtraummodule bzw. faltbare Module eingesetzt, um das Flugzeug schnell zwischen unterschiedlichen Konfigurationen, z.B. den bereits beschriebenen Konfigurationen, umzurüsten. Vorzugsweise werden hierfür die bereits beschriebenen faltbaren Module eingesetzt, die auch in der Anmeldung DE 10 2019 132 292.8 näher erläutert werden.

In einer Ausführungsform der Frachtraummodule können diese mit einem Boden und mindestens zwei an dem Boden vorzugsweise gelenkig befestigten Seitenwänden versehen sein. Diese können über eine Ladetür in das Flugzeug, vorzugsweise in den (unteren) Frachtraum eingebracht und montiert werden. Vorzugsweise erfolgt eine Montage am Unterdeck, beispielsweise im vorderen Bereich des Flugzeugs. Hierbei erweist es sich als vorteilhaft, dass das erfindungsgemäße Flugzeug den bereits beschriebenen Durchladeraum aufweisen kann. In einer Ausführungsform wird das Frachtraummodul montiert, um Passagiersitze im Unterdeck bereitzustellen, wobei das Modul vorzugsweise beim Einbringen vormontierte Sitze und/oder Halteeinrichtungen zur Montage von Sitzen aufweist.

In einer Ausführungsform kann vor dem Einbringen der Frachtraummodule für Passagiersitze mindestens ein Frachtraummodul für Paletten und/oder Container ausgebaut und durch dieselbe Ladetür aus dem Innenraum des Flugzeugs entfernt werden. Auch bei diesem mindesten einen Frachtraummodul für Paletten und/oder Container kann es sich um ein faltbares Modul handeln. Es können Teile eines Frachtladesystems, beispielsweise Rollenbahnen, Riegel, Seitenführungen und/oder Anschläge vormontiert sein.

In einer Ausführungsform werden zunächst eine Vielzahl von Frachtraummodulen für Passagiersitz und dann Frachtraummodule für Paletten und/oder Container in das Flugzeug eingebracht und montiert, so dass der Frachtraum teilweise für die Unterbringung von Passagieren und teilweise für die Unterbringung von Fracht, insbesondere von Paletten und/oder Containern, genutzt werden kann.

Zu den Vorteilen des Frachtcontainers sowie des Verfahrens zum Beladen eines Flugzeugs wird auf die im Zusammenhang mit dem Flugzeug erläuterten Vorteile verwiesen, die entsprechend Anwendung finden. Darüber hinaus können der Frachtcontainer und das Verfahren alternativ oder zusätzlich einzelne oder eine Kombination mehrerer zuvor in Bezug auf das Flugzeug genannte Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie das erfindungsgemäße Flugzeug und der erfindungsgemäße Frachtcontainer ausgestaltet sein können.

In diesen zeigen,
- Fig. 1: einen Querschnitt eines Tonnenabschnitts des Rumpfs eines Flugzeugs nach einem bevorzugten erfindungsgemäßen Ausführungsbeispiel in einer Frachterkonfiguration mit einer ersten Beladungsvariante;
- Fig. 2: einen Querschnitt des Tonnenabschnitts des Rumpfs gemäß Fig. 1 in der Frachterkonfiguration mit einer zweiten Beladungsvariante;
- Fig. 3: einen Querschnitt des Tonnenabschnitts des Rumpfs gemäß Fig. 1 in einer Frachterkonfiguration mit einer dritten Beladungsvariante;
- Fig. 4: einen Querschnitt des Tonnenabschnitts des Rumpfs gemäß Fig. 1 in einer Passagierkonfiguration mit einer ersten Transportvariante;
- Fig. 5: einen Querschnitt des Tonnenabschnitts des Rumpfs gemäß Fig. 1 in einer Passagierkonfiguration mit einer zweiten Transportvariante;
- Fig. 6: einen Querschnitt durch das Flugzeug gemäß Fig. 1 im Bereich des Flügelkastens;
- Fig. 7: einen Querschnitt durch das Flugzeug gemäß Fig. 1 im Bereich des Fahrwerks;
- Fig. 8: eine perspektivische Unteransicht des Flugzeugs gemäß Fig. 1;
- Fig. 9: eine perspektivische Draufsicht des Flugzeugs gemäß Fig. 1;
- Fig. 10: einen Längsschnitt durch das Flugzeug gemäß Fig. 1, wobei das untere Deck mit Frachtstücken beladen ist;
- Fig. 11: einen Längsschnitt durch das Flugzeug gemäß Fig. 1, wobei im unteren Deck im Bereich des Flügelkastens mehrere mobile Zusatztanks angeordnet sind;
- Fig. 12: eine perspektivische Ansicht eines Frachtcontainers nach einem erfindungsgemäßen Ausführungsbeispiel;
- Fig. 13: eine Vorderansicht des Frachtcontainers gemäß Fig. 12;
- Fig. 14: einen Querschnitt eines Tonnenabschnitts des Rumpfs eines Flugzeugs nach einem weiteren erfindungsgemäßen Ausführungsbeispiel;
- Fig. 15: einen Querschnitt eines Tonnenabschnitts des Rumpfs eines Flugzeugs nach einem weiteren erfindungsgemäßen Ausführungsbeispiel;
- Fig. 16: mehrere unterschiedliche Beladungs- bzw. Ausstattungskonfigurationen des oberen Decks des Flugzeugs gemäß Fig. 1, Fig. 14 und Fig. 15;
- Fig. 17: mehrere unterschiedliche Beladungskonfigurationen des unteren Decks des Flugzeugs gemäß Fig. 1 und Fig. 14;
- Fig. 18: einen Ausschnitt einer Seitenansicht eines Flugzeugs nach einem weiteren erfindungsgemäßen Ausführungsbeispiel;
- Fig. 19a-d: Querschnitte durch das Flugzeug gemäß Fig. 18 an unterschiedlichen Positionen in Flugzeuglängsrichtung;
- Fig. 20: eine perspektivische Ansicht eines Längsschnitts durch das Flugzeug gemäß Fig. 18 im Bereich des Flügelkastens;
- Fig. 21: eine Frontansicht des Flugzeugs gemäß Fig. 18;
- Fig. 22: einen Querschnitt durch das Flugzeug gemäß Fig. 18 im Bereich der Fahrwerke, wobei diese im ausgeklappten Zustand dargestellt sind;
- Fig. 23: einen Querschnitt durch das Flugzeug gemäß Fig. 18 im Bereich der Fahrwerke, wobei diese im eingeklappten Zustand dargestellt sind;
- Fig. 24: eine perspektivische Ansicht eines Flugzeugs nach einem weiteren erfindungsgemäßen Ausführungsbeispiel;
- Fig. 25: einen Querschnitt durch das Flugzeug gemäß Fig. 24 im Bereich der Fahrwerke, wobei diese im eingeklappten und ausgeklappten Zustand dargestellt sind;
- Fig. 26: eine schematische Draufsicht auf einen Tonnenabschnitt des Flugzeugs gemäß Fig. 24 im Bereich des Flügelkastens bzw. der Fahrwerke;
- Fig. 27: eine Seitenansicht des Flugzeugs gemäß Fig. 24 in einer ersten Deckkonfiguration;
- Fig. 28: eine Seitenansicht des Flugzeugs gemäß Fig. 24 in einer zweiten Deckkonfiguration;
- Fig. 29: eine Seitenansicht des Flugzeugs gemäß Fig. 24 in einer dritten Deckkonfiguration; und
- Fig. 30: eine Seitenansicht des Flugzeugs gemäß Fig. 24 in der ersten Deckkonfiguration gemäß Fig. 27, wobei zumindest die Rumpfaußenhaut sowie die Konfiguration des oberen Decks ausgeblendet sind;
- Fig. 31: eine Seitenansicht des Flugzeugs gemäß Fig. 24 in der zweiten Deckkonfiguration gemäß Fig. 28 bzw. in der dritten Deckkonfiguration gemäß Fig. 29, wobei zumindest die Rumpfaußenhaut sowie die Konfiguration des oberen Decks ausgeblendet sind; und
- Fig. 32: einen Querschnitt eines Tonnenabschnitts des Rumpfs eines Flugzeugs nach einem weiteren erfindungsgemäßen Ausführungsbeispiel.

Bei der nachfolgenden Beschreibung werden für gleiche und gleich wirkende Teile dieselben Bezugsziffern verwendet.

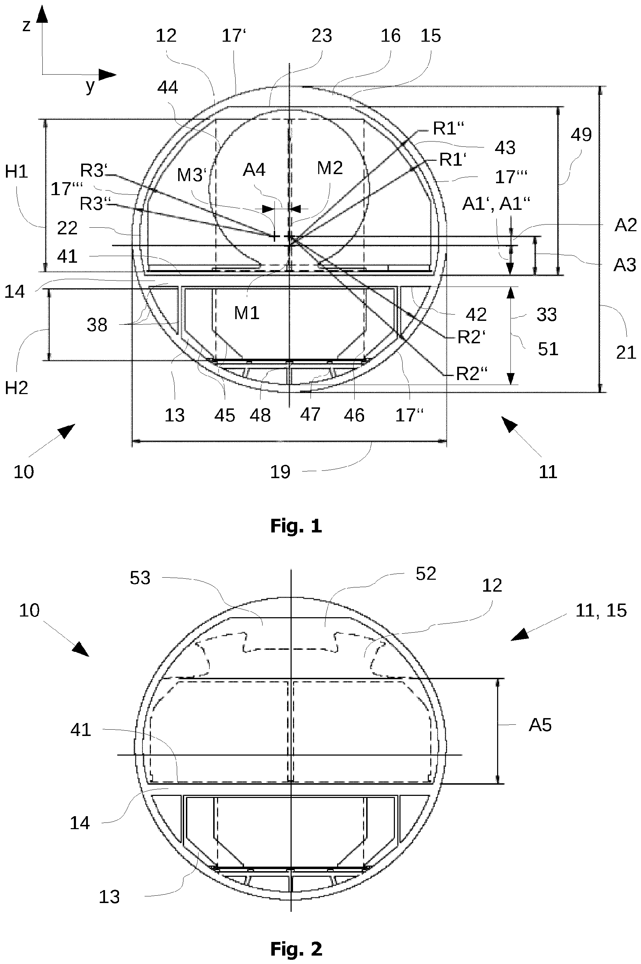

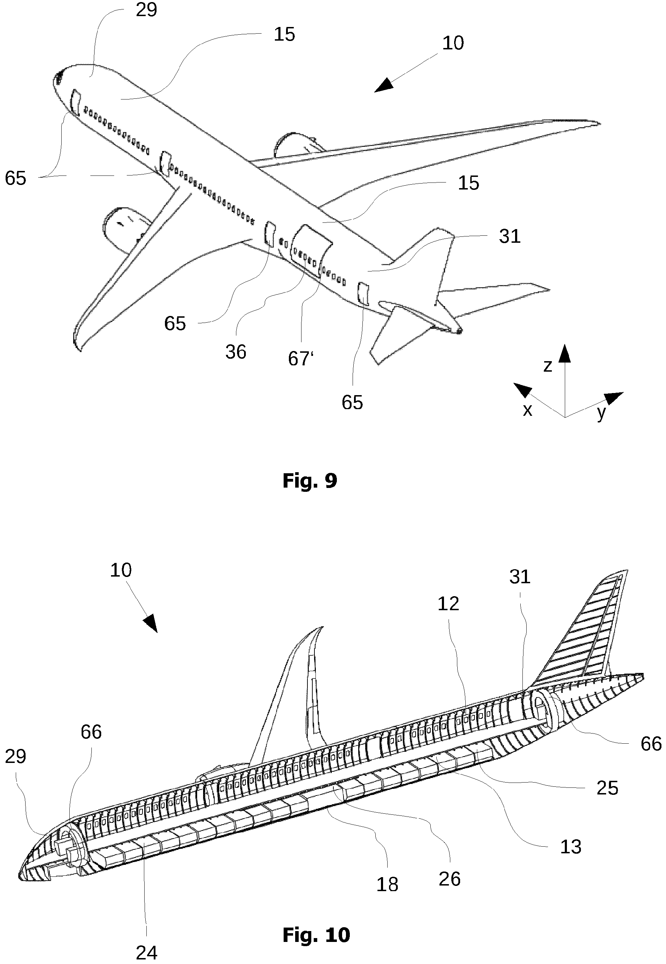

Üblicherweise verwendet man ein kartesisches Koordinatensystem, um innerhalb eines Flugzeugs einzelne Richtungsangaben bereitzustellen. Hierbei erstreckt sich die x-Achse vom Flugzeugheck zum Flugzeugbug, die y-Achse verläuft quer zur x-Achse und liegt im Wesentlichen in der von den Flügeln aufgespannten Ebene. Die z-Achse steht senkrecht auf der x- und y-Achse (vgl. Fig. 1 und Fig. 9). Die Längsrichtung entspricht der x-Richtung des Flugzeugs und verläuft parallel zur x-Achse. Die y-Richtung des Flugzeugs verläuft parallel zur y-Achse und die z-Richtung parallel zur z-Achse.

Die Fig. 1 bis 5 zeigen einen Querschnitt durch ein Flugzeug 10 nach einem erfindungsgemäßen Ausführungsbeispiel. Das Flugzeug 10 ist als Tiefdecker ausgebildet. Konkret ist in den Fig. 1 bis 5 ein Querschnitt durch einen Tonnenabschnitt 15 eines Rumpfs 11 des Flugzeugs 10 gezeigt, wobei sich der Tonnenabschnitt 15 in Längsrichtung erstreckt und einen Teil des oberen Decks 12 und einen Teil des unteren Decks 13 umfasst. Das obere Deck 12 kann auch als Hauptdeck und das untere Deck 13 als Frachtdeck bezeichnet werden. Die beiden Decks 12, 13 sind durch einen Boden 14 voneinander getrennt.

Der Boden 14 weist eine Oberkante 41 und eine Unterkante 42 auf, wobei die Oberkante 41 dem oberen Deck 12 und die Unterkante 42 dem unteren Deck 13 zugewandt ist. Die nachfolgenden Höhenmaße betreffend das obere Deck 12 bemessen sich ausgehend von der Oberkante 41 des Bodens 14 in z-Richtung nach oben. Ferner bemessen sich die nachfolgenden Höhenmaße betreffend das untere Deck 13 ausgehend von der Unterkante 42 des Bodens 14 in z-Richtung nach unten. Die Oberkante 41 und die Unterkante 42 bilden jeweils die maximale Erstreckung des Bodens 14 in z-Richtung.

Der Boden 14 ist von der γ-Achse des Flugzeugs 10 in negativer z-Richtung beabstandet. Vorzugsweise weist die Oberkante 41 des Bodens 14 einen Abstand A1' von mindestens 40 cm bis maximal 55 cm auf (16 Zoll bis 22 Zoll). Gemäß Fig. 1 ist der Abstand A1' der Oberkante 41 des Bodens 14 von der y-Achse des Flugzeugs 10 ca. 47 cm (ca. 18,5 Zoll) groß.

Der Tonnenabschnitt 15 weist ein Querschnittsprofil 16, das durch mehrere Kreisbogenabschnitte 17 gebildet ist, die Radien R1, R2, R3 mit jeweils voneinander abweichenden Mittelpunkten M1, M2, M3', M3" aufweisen. Die Kreisbogenabschnitte 17 umfassen jeweils einen Innenradius R1', R2', R3' und einen Außenradius Rl", R2", R3", auf die später näher eingegangen wird. Das Querschnittsprofil 16 ist derart ausgebildet, dass in das obere Deck 12 und das untere Deck 13 Frachtstücke 18 mit unterschiedlichen Größenmaßen, insbesondere Frachtcontainer 18 mit unterschiedlichen Höhen- und Breitenmaßen, aufnehmbar sind.

Gemäß den Fig. 1 bis 5 ist das Querschnittsprofil 16 oval ausgebildet. Der Tonnenabschnitt 15 weist in y-Richtung eine äußere maximale Breite 19 von 497 cm (196 Zoll) und in z-Richtung eine äußere maximale Höhe 21 von 485 cm (191 Zoll) auf. Ferner weist der Tonnenabschnitt 15 in y-Richtung eine erste lichte Weite 22, insbesondere eine innere maximale Breite, von 472,5 cm (186 Zoll) und in z-Richtung eine zweite lichte Weite 23, insbesondere eine innere maximale Höhe, von 460 cm (181 Zoll) auf.

Mit anderen Worten weist der Tonnenabschnitt 15 in z-Richtung eine äußere maximale Höhe von 485 cm (191 Zoll) und eine innere maximale Höhe, insbesondere zweite lichte Weite 23, von 460 cm (181 Zoll) auf. Ferner weist der Tonnenabschnitt 15 in γ-Richtung eine äußere maximale Breite von 497 cm (196 Zoll) und eine innere maximale Breite, insbesondere erste lichte Weite 22, von 472,5 cm (186 Zoll) auf. Vorzugsweise umfasst der Rumpf 11 bzw. der Tonnenabschnitt 15 eine Wandstärke der Rumpfaußenhaut 43 von ca. 13 cm (5 Zoll). Die äußere maximale Breite 19 und die äußere maximale Höhe 21 können eine Maßtoleranz von +/- 5%, insbesondere eine Maßtoleranz von kleiner 2%, insbesondere eine Maßtoleranz von +/- 0,5% aufweisen. Die beiden lichten Weiten 22, 23 können eine Maßtoleranz von +/- 5%, insbesondere eine Maßtoleranz von kleiner +2%, insbesondere eine Maßtoleranz von +/- 1% oder +/- 0,7% aufweisen. Mit anderen Worten können die äußere maximale Breite 19 und die äußere maximale Höhe 21 im Bereich von +/- 5%, bevorzugt im Bereich von +/- 0,5% variieren. Die beiden lichten Weiten 22, 23 können im Bereich von +/- 5%, bevorzugt im Bereich von +/- 1% oder +/- 0,7% variieren. Diese Maßtoleranz gilt ebenso für die Wandstärke der Rumpfaußenhaut 43.

Das obere Deck 12 kann im Tonnenabschnitt 15 ausgehend von der Oberkante 41 des Bodens 14 eine lichte Weite 49, insbesondere lichte Höhe, in z-Richtung des Flugzeugs 10 von mindestens 254 cm bis maximal 287 cm (100 Zoll bis 113 Zoll), insbesondere von mindestens 264 cm bis 273 cm (104 Zoll bis 107 Zoll) aufweisen. Konkret weist das obere Deck 12 im Tonnenabschnitt 15 in z-Richtung eine lichte Weite 49 von 268,6 cm (105,75 Zoll) auf. Es ist alternativ denkbar, dass das obere Deck 12 im Tonnenabschnitt 15 in z-Richtung eine lichte Weite 49 von 284,75 cm (112,5 Zoll) aufweist.

Das Querschnittsprofil 16 des Tonnenabschnitts 15 kann derart ausgebildet sein, dass das obere Deck 12 in z-Richtung eine lichte Weite 49, insbesondere Höhe, von mindestens 280 cm bis maximal 300 cm (ca. 110 Zoll bis ca. 118 Zoll), insbesondere von mindestens 285 cm bis 290 cm (ca. 112 Zoll bis ca. 114 Zoll) aufweist. Bevorzugt kann das obere Deck 12 im Tonnenabschnitt 15 in z-Richtung eine lichte Weite 49 von 288 cm (ca. 113,5 Zoll) aufweisen.

Das untere Deck 13 kann im Tonnenabschnitt 15 eine lichte Weite 51, insbesondere lichte Höhe, in z-Richtung von mindestens 140 cm (55 Zoll), insbesondere von mindestens 127 cm (50 Zoll) aufweisen. Konkret weist das untere Deck 13 im Tonnenabschnitt 15 eine lichte Weite 51 von mindestens 124,5 cm (49 Zoll) auf. Die lichte Weite 51 des unteren Decks 13 bemisst sich im Wesentlichen von einer Bodenstruktur 47, die ein Rollenbahnsystem 48 zur Beladung des unteren Decks 13 und die Befestigung der Frachtstücke aufweist, bis zur Unterkante 42 des Bodens 14. Auf die Bodenstruktur 47 wird später näher eingegangen. Die lichten Weiten 49, 51 der beiden Decks 12, 13 können durch den gesamten Tonnenabschnitt 15 im Wesentlichen konstant sein.

Das untere Deck 13 kann im Tonnenabschnitt 15 eine minimal nutzbare Breite in y-Richtung von ca. 317,5 cm (ca. 125 Zoll) aufweisen. Bevorzugt weist das untere Deck 13 im Tonnenabschnitt 15 eine Breite in y-Richtung von ca. 328 cm (ca. 129 Zoll) auf.

Wie vorstehend beschrieben, weist das Querschnittsprofil 16 mehrere Kreisbogenabschnitte 17 auf, wobei das Querschnittsprofil 16 durch insgesamt vier Kreisbogenabschnitte 17', 17", 17"' gebildet ist. Ein erster Kreisbogenabschnitt 17' überspannt teilweise das obere Deck 12, ein zweiter Kreisbogenabschnitt 17" begrenzt das untere Deck 13 und zwei dritte Kreisbogenabschnitte 17"' sind zwischen dem ersten und dem zweiten Kreisbogenabschnitt 17', 17" angeordnet. Die dritten Kreisbogenabschnitte 17'" sind bezogen auf die z-Achse des Flugzeugs 10 einander gegenüber angeordnet. Die beiden dritten Kreisbogenabschnitte 17"' grenzen jeweils an den ersten Kreisbogenabschnitt 17' und den zweiten Kreisbogenabschnitt 17" an. Mit anderen Worten verbinden die dritten Kreisbogenabschnitt 17"' jeweils den ersten Kreisbogenabschnitt 17' und den zweiten Kreisbogenabschnitt 17" miteinander. Die vier Kreisbogenabschnitte 17 sind derart angeordnet, dass das Querschnittsprofil 16 symmetrisch ausgebildet ist. Konkret ist das Querschnittsprofil 16 bezogen auf die z-Achse spiegelsymmetrisch ausgebildet.

Wie in Fig. 1 ersichtlich ist, weist der erste Kreisbogenabschnitt 17' einen Innenradius R1' und einen Außenradius R1" auf. Der Innenradius R1' beträgt 239 cm (94 Zoll) und der Außenradius R1" beträgt 252 cm (99 Zoll). Der Mittelpunkt M1 der beiden Radien R1 liegt auf der z-Achse des Flugzeugs 10 und ist vom Boden 14 in positiver z-Richtung, insbesondere nach oben beabstandet. Der Mittelpunkt M1 der beiden Radien R1 ist durch den Schnittpunkt der z- und y-Achse des Flugzeugs 10 gebildet. Mit anderen Worten liegt der Mittelpunkt M1 genau auf dem Schnittpunkt der z- und γ-Achse des Flugzeugs 10. Vorzugsweise weist der Mittelpunkt M1 der beiden Radien R1 von der Oberkante 41 des Bodens 14 einen Abstand A1" von mindestens 40 cm bis maximal 55 cm auf (16 Zoll bis 22 Zoll) auf. Gemäß Fig. 1 ist der Abstand A1" des Mittelpunkts M1 der beiden Radien R1 von der Oberkante 41 des Bodens 14 ca. 47 cm (ca. 18,5 Zoll) groß.

Ferner zeigt Fig. 1, dass der zweite Kreisbogenabschnitt 17" ebenso einen Innenradius R2' und einen Außenradius R2" aufweist. Der Innenradius R2' beträgt 236 cm (93 Zoll) und der Außenradius R2" beträgt 249 cm (98 Zoll). Der Mittelpunkt M2 der beiden Radien R2 liegt auf der z-Achse des Flugzeugs 10. Der Mittelpunkt M2 des zweiten Kreisbogenabschnitts 17" ist vom Mittelpunkt M1 des ersten Kreisbogenabschnitts 17' in positiver z-Richtung beabstandet. Mit anderen Worten ist der Mittelpunkt M2 des zweiten Kreisbogenabschnitts 17" vom Mittelpunkt M1 des ersten Kreisbogenabschnitts 17' weg in z-Richtung nach oben versetzt. Der Mittelpunkt M2 des zweiten Kreisbogenabschnitts 17" ist somit von der y-Achse in positiver z-Richtung, insbesondere nach oben beabstandet. Vorzugsweise weist der Mittelpunkt M2 des zweiten Kreisbogenabschnitts 17" vom Mittelpunkt M1 des ersten Kreisbogenabschnitts 17' einen Abstand A2 von mindestens 5 cm bis maximal 25 cm (2 Zoll bis 10 Zoll) auf. Gemäß Fig. 1 ist der Abstand A2 des Mittelpunkts M2 des zweiten Kreisbogenabschnitts 17" vom Mittelpunkt M1 des ersten Kreisbogenabschnitts 17' ca. 15 cm (6 Zoll) groß.

Des Weiteren ist der Mittelpunkt M2 des zweiten Kreisbogenabschnitts 17" von der Oberkante 41 des Bodens 14 in positiver z-Richtung beabstandet. Vorzugsweise weist der Mittelpunkt M2 des zweiten Kreisbogenabschnitts 17" von der Oberkante 41 des Bodens 14 einen Abstand A3 von mindestens 50 cm bis maximal 70 cm (20 Zoll bis 28 Zoll) auf. Gemäß Fig. 1 ist der Abstand A3 des Mittelpunkts M2 des zweiten Kreisbogenabschnitts 17" von der Oberkante 41 des Bodens 14 ca. 62 cm (24,5 Zoll) groß.

Die Mittelpunkte M3', M3" der dritten Kreisbogenabschnitte 17'" können in z-Richtung auf einer gleichen Höhe wie der Mittelpunkt M2 des zweiten Kreisbogenabschnitts 17" liegen. Die Mittelpunkte M3', M3" der dritten Kreisbogenabschnitte 17'" weisen in z-Richtung einen Abstand von der Oberkante 41 des Bodens 14 von ca. 58,5 cm (23 Zoll) auf. Die Mittelpunkte M3', M3" der dritten Kreisbogenabschnitte 17'" sind von der z-Achse in entgegengesetzter y-Richtung versetzt. Die Mittelpunkte M3', M3" sind an der z-Achse einander gegenüber angeordnet, wobei die Mittelpunkte M3', M3" denselben Abstand zur z-Achse aufweisen. Es ist auch denkbar, dass die Mittelpunkte M3', M3" unterschiedlich von der z-Achse beabstandet sind. Der übersichtlicheren Darstellung halber sind in Fig. 1 lediglich die beiden Radien R3 sowie der Mittelpunkt M3' eines der beiden dritten Kreisbogenabschnitte 17"' gezeigt. Die nachfolgende Beschreibung trifft aber auf beide dritte Kreisbogenabschnitte 17'" sowie deren Radien R3 und Mittelpunkte M3', M3" zu. Der Mittelpunkt M3 weist in y-Richtung einen Abstand A4 zur z-Achse auf, der vorzugweise mindestens 15 cm bis maximal 35 cm (6 Zoll bis 14 Zoll) beträgt. Gemäß Fig. 1 beträgt der Abstand A4 des Mittelpunkt M3' zur z-Achse ca. 22,5 cm (ca. 9 Zoll).

Des Weiteren zeigt Fig. 1, dass der dritte Kreisbogenabschnitt 17'" ebenso einen Innenradius R3' und einen Außenradius R3" aufweist. Die beiden dritten Kreisbogenabschnitte 17'" sind gleich bzw. identisch ausgebildet. Der Innenradius R3' beträgt 213 cm (84 Zoll) und der Außenradius R3" beträgt 226 cm (89 Zoll).

Der Innenradius R1' des ersten Kreisbogenabschnitts 17' ist kleiner als der Innenradius R2' des zweiten Kreisbogenabschnitts 17". Ferner ist der Außenradius R1" des ersten Kreisbogenabschnitts 17' kleiner als der Außenradius R2" des zweiten Kreisbogenabschnitts 17". Die Innenradien R3' der beiden dritten Kreisbogenabschnitte 17'" sind kleiner als die Innenradien R1', R2' des ersten und zweiten Kreisbogenabschnitts 17', 17". Des Weiteren sind die Außenradien R3" der beiden dritten Kreisbogenabschnitte 17'" kleiner als die Außenradien Rl", R2" des ersten und zweiten Kreisbogenabschnitts 17', 17".

Generell sind die Maße der Radien R1, R2, R3 nicht auf die vorstehend genannten Maße eingeschränkt. Es sind auch andere nicht genannte Maße der Radien R1, R2, R3 möglich.

Gemäß den Fig. 1 bis 5 sind die dritten Kreisbogenabschnitte 17'" derart ausgebildet, dass diese in z-Richtung eine Höhe von 80 cm bis 120 cm (32 Zoll bis 47 Zoll), insbesondere eine Höhe von ca. 104 cm bis ca. 109 cm (40 Zoll bis 443 Zoll) aufweisen. Die dritten Kreisbogenabschnitte 17'" weisen konkret eine Höhe von ca. 104 cm (41 Zoll) auf. Die Höhe bemisst sich ausgehend von einer Höhenposition der Mittelpunkte M3', M3" der dritten Kreisbogenabschnitte 17'" in z-Richtung. In den dritten Kreisbogenabschnitten 17'" kann wenigstens eine Fensterreihe des Flugzeugs 10 vorgesehen sein. Ausgehend von der Oberkante 41 des Bodens 14 können die dritten Kreisbogenabschnitte 17"' in z-Richtung eine Höhe von ca. 140 cm bis ca. 170 cm (ca. 55 Zoll bis ca. 67 Zoll) aufweisen. Konkret weisen die dritten Kreisbogenabschnitte 17"' in z-Richtung ausgehend von der Oberkante 41 des Bodens 14 eine Höhe von ca. 162 cm (ca. 64 Zoll) auf. Dies ermöglicht die Anordnung der Fensterreihe in den dritten Kreisbogenabschnitten 17"', da herkömmliche Fenster eine Höhe von ca. 45 cm bis ca. 48 cm (18 Zoll bis 19 Zoll) aufweisen.

Wie in Fig. 1 gut erkennbar, ist das Flugzeug 10 für den Frachttransport konfiguriert, wobei eine erste Beladungsvariante des oberen und unteren Decks 12, 13 gezeigt ist. Bei der ersten Beladungsvariante können in das obere Deck 12 ein Flugzeugtriebwerk 44, insbesondere des eigenen Flugzeugstyps, eingebracht werden. Ferner können im oberen Deck 12 zwei erste Frachtcontainer 18', insbesondere AAJ-Container, mit den Grundabmessungen 223,5 cm auf 317,5 cm (88 Zoll x 125 Zoll) und einer Höhe H1 von 243,8 cm (96 Zoll) in γ-Richtung nebeneinander angeordnet werden. Alternativ oder zusätzlich kann in das obere Deck 12 wenigstens ein zweiter Frachtcontainer 18", insbesondere AMA-Container, mit den Grundabmessungen 243,8 cm auf 317,5 cm (96 Zoll x 125 Zoll) und einer Höhe H1 von 243,8 cm (96 Zoll) eingebracht werden.

Des Weiteren können bei der ersten Beladungsvariante im unteren Deck 13 trapezförmige Frachtcontainer 45 mit den Grundabmessungen 153,4 cm x 156,2 cm (60,4 Zoll x 61,5 Zoll) und/oder 153,4 cm x 243,8 cm (60,4 Zoll x 96 Zoll) und jeweils mit einer Höhe H2 von ca. 114 cm bis ca. 127 cm (ca. 45 Zoll bis ca. 50 Zoll) eingebracht werden. Des Weiteren kann in das untere Deck 13 wenigstens eine Palette 46, insbesondere PMC, mit den Abmessungen 243,8 cm x 317,5 cm (96 Zoll x 125 Zoll) und einer Höhe H2 von ca. 114 cm bis ca. 127 cm (ca. 45 Zoll bis ca. 50 Zoll) in Längsbeladung eingebracht werden.

Das untere Deck 13 weist zur Aufnahme und Sicherung der Frachtstücke 18 bzw. Frachtcontainer 18', 18", 45 und/oder Paletten 46 eine Bodenstruktur 47 mit einem Rollenbahnsystem 48 auf.

Gemäß Fig. 2 ist das Flugzeug 10 für den Frachttransport konfiguriert, wobei eine zweite Beladungsvariante des oberen Decks 12 gezeigt ist. Die Beladung des unteren Decks 13 entspricht dabei jener der ersten Beladungsvariante gemäß Fig. 1. Bei der zweiten Beladungsvariante ist im Deckenbereich 53 des oberen Decks 12 eine Aufnahmeeinrichtung 52 für Frachtstücke, insbesondere Gepäckstücke, angeordnet. Der minimalste Abstand A5 zwischen der Aufnahmeeinrichtung 52 und der Oberkante 41 des Bodens 14 kann zwischen 160 cm und 180 cm (63 Zoll und 71 Zoll) betragen.

Konkret beträgt der minimalste Abstand A5 zwischen der Aufnahmeeinrichtung 52 und der Oberkante 41 des Bodens 14 ca. 175 cm (ca. 69 Zoll). Im oberen Deck 12 können daher Frachtcontainer und/oder Paletten mit einer Höhe von 163 cm (64 Zoll) unter der Aufnahmeeinrichtung 52 angeordnet werden. Konkret können im oberen Deck 12 zwei dritte Frachtcontainer 18"', insbesondere LAJ-Container, mit den Grundabmessungen 223,5 cm auf 317,5 cm (88 Zoll x 125 Zoll) und einer Höhe von 163 cm (64 Zoll) und/oder zwei Paletten, insbesondere PAG-Paletten, mit den Grundabmessungen 223,5 cm auf 317,5 cm (88 Zoll x 125 Zoll) und einer Höhe von 163 cm (64 Zoll) und/oder zwei Paletten, insbesondere HCU-6E-Paletten, mit den Grundabmessungen 223,5 cm auf 274,3 cm (88 Zoll x 108 Zoll) und einer Höhe von 163 cm (64 Zoll) in y-Richtung nebeneinander angeordnet werden.

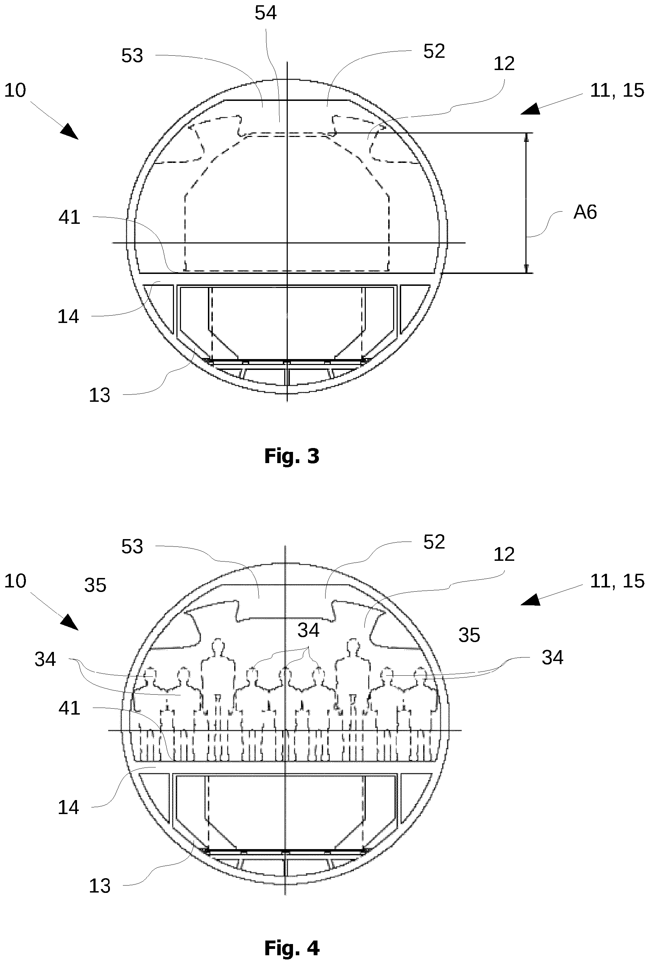

Gemäß Fig. 3 ist das Flugzeug 10 mit einer dritten Beladungsvariante des oberen Decks 12 gezeigt. Die Beladung des unteren Decks 13 entspricht wieder jener der ersten Beladungsvariante gemäß Fig. 1. Im oberen Deck 12 ist die Aufnahmeeinrichtung 52 für Frachtstücke, wie in Fig. 2 beschrieben, im Deckenbereich 53 vorgesehen, wobei die Aufnahmeeinrichtung 52 einen zentralen Bereich 54, insbesondere im Bereich der z-Achse des Flugzeugs 10 aufweist. Zwischen dem zentralen Bereich 54 und der Oberkante 41 des Bodens 14 ist ein Abstand A6 vorgesehen, der zwischen 203 cm und 229 cm (80 Zoll und 90 Zoll) betragen kann. Gemäß Fig. 3 beträgt der Abstand A6 ca. 217 cm (ca. 86 Zoll).

Gemäß Fig. 4 ist das Flugzeug 10 für den Passagiertransport konfiguriert, wobei eine erste Transportvariante des oberen Decks 12 gezeigt ist. Die Beladung des unteren Decks 13 entspricht wieder jener der ersten Beladungsvariante gemäß Fig. 1. Im oberen Deck 12 ist die Aufnahmeeinrichtung 52 für Frachtstücke, wie in Fig. 2 beschrieben, im Deckenbereich 53 vorgesehen. Das obere Deck 12 weist sieben Sitzreihen 34 auf. Die Sitzreihen 34 verlaufen in x-Richtung des Flugzeugs 10. Die Sitzreihen 34 sind als 2-3-2-Konfiguration vorgesehen. Konkret sind jeweils zwei Sitzreihen 34 in entgegengesetzter y-Richtung seitlich außen angeordnet. Diese bilden die Fensterreihen. Die drei verbleibenden Sitzreihen 34 sind zwischen den seitlichen Sitzreihen 34 angeordnet. Diese bilden die Mittelsitzreihen. Zwischen den seitlichen Sitzreihen 34 und den Mittelsitzreihen 34 ist jeweils ein Gang 35 vorgesehen, der in x-Richtung des Flugzeugs 10 verläuft.

Die Gänge 35 können jeweils eine Breite in y-Richtung zwischen den angrenzenden Sitzreihen von 38 cm bis 65 cm (15 Zoll bis 25,6 Zoll) aufweisen. Die Gänge 35 weisen konkret jeweils eine Breite in y-Richtung zwischen den angrenzenden Sitzreihen 34 von ca. 52 cm (ca. 20,5 Zoll) auf.

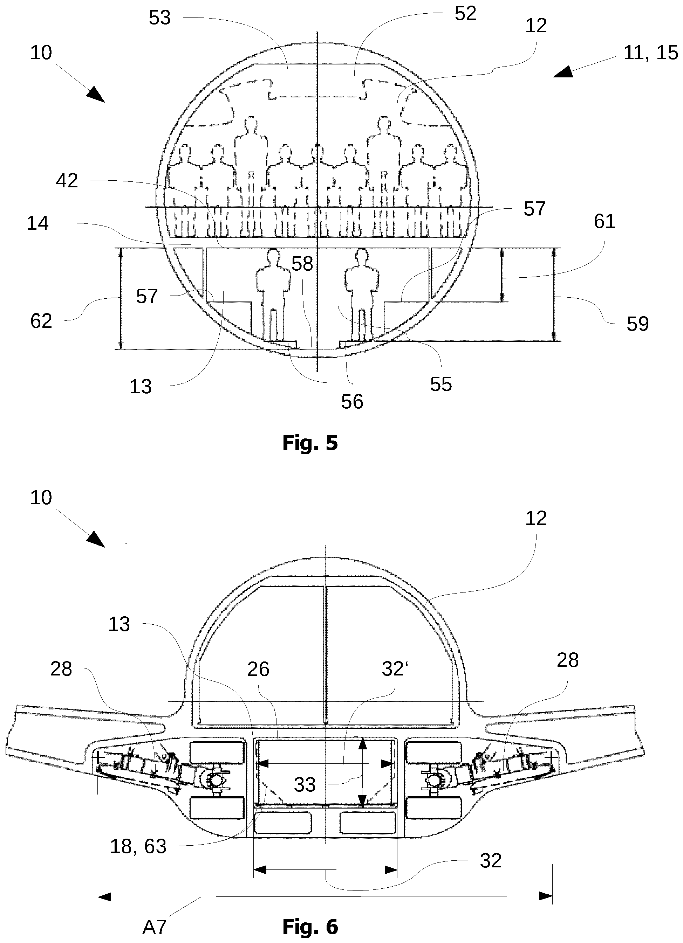

Gemäß Fig. 5 ist das Flugzeug 10 für den Passagiertransport konfiguriert, wobei eine zweite Transportvariante des unteren Decks 13 gezeigt ist. Die Bestuhlung des oberen Decks 12 entspricht jener der ersten Transportvariante gemäß Fig. 4. Gemäß Fig. 5 ist im unteren Deck 13 ein Aufenthaltsbereich 55 für das Flugzeugpersonal vorgesehen. Der Aufenthaltsbereich 55 weist zwei erste Bereiche 56 zum Sitzen und zwei zweite Bereiche 57 zum Schlafen bzw. Liegen für das Flugpersonal auf. Zwischen den beiden Bereichen 56 zum Sitzen ist ein Gehbereich 58 ausgebildet. Die ersten Bereiche 56, die zweiten Bereiche 57 und der Gehbereich 58 sind im Wesentlichen in y-Richtung gleich breit. Die Bereiche 56, 57, 58 können in y-Richtung jeweils eine Breite von minimal 56 cm bis maximal 81 cm (22 Zoll bis 32 Zoll) aufweisen. Konkret weisen die Bereiche 56, 57, 58 in y-Richtung jeweils eine Breite von ca. 68,4 cm (ca. 26,9 Zoll) auf. In Bezug auf die ersten Bereiche 56 sind die zweiten Bereiche 57 erhöht vorgesehen. Das untere Deck 13 weist zwischen den ersten Bereichen 56 und der Unterkante 42 des Bodens 14 vorzugsweise eine erste lichte Weite 59 in z-Richtung von mindestens 125 cm bis maximal 150 cm (49 Zoll bis 59 Zoll), insbesondere von mindestens 140 cm bis maximal 145 cm (55 Zoll bis 57 Zoll) auf. Gemäß Fig. 5 beträgt die erste lichte Weite 59 ca. 143 cm (ca. 56 Zoll).

Des Weiteren weist das untere Deck 13 vorzugsweise zwischen den zweiten Bereichen 57 und der Unterkante 42 des Bodens 14 eine zweite lichte Weite 61 in z-Richtung von mindestens 75 cm bis maximal 90 cm (29,5 Zoll bis 35,5 Zoll), insbesondere von mindestens 81 cm bis maximal 85 cm (32 Zoll bis 34 Zoll) auf. Gemäß Fig. 5 beträgt die zweite lichte Weite 61 ca. 83 cm (ca. 33 Zoll).

Das untere Deck 13 weist vorzugsweise in z-Richtung zwischen dem Gehbereich 58 und der Unterkante 42 des Bodens 14 eine dritte lichte Weite 62 von mindestens 145 cm bis maximal 165 cm (57 Zoll bis 65 Zoll), insbesondere von mindestens 150 cm bis 160 cm (59 Zoll bis 63 Zoll) auf. Gemäß Fig. 5 beträgt die dritte lichte Weite 62 ca. 156 cm (ca. 61,5 Zoll).

Das Flugzeug 10 gemäß den Fig. 6 bis 11 weist im unteren Deck 13 einen bugseitigen Laderaum 24, einen heckseitigen Laderaum 25 und im Bereich eines Flügelkastens 27 und eines Fahrwerks 28 einen Durchladeraum 26 auf. Der Durchladeraum 26 verbindet den bugseitigen Laderaum 24 und den heckseitigen Laderaum 25 miteinander. Mit anderen Worten ist das untere Deck 13 in x-Richtung durchgängig ausgebildet, sodass im Bereich eines Flügelkastens 27 und/oder im Bereich eines Fahrwerks 28 wenigstens ein mobiler Zusatztank 63 und/oder wenigstens ein Frachtcontainer 18 aufnehmbar ist. Das untere Deck 13 ist im mit Frachtcontainern 18 und/oder mobilen Zusatztanks 63 beladenen Zustand ist in den Fig. 6, 7 sowie 10 und 11 gezeigt.

In Fig. 6 ist ein Querschnitt durch das Flugzeug 10 im Bereich des Fahrwerks 28 gezeigt, wobei sich das Fahrwerk 28 in einem eingefahrenen Zustand befindet. Im Bereich des Fahrwerks 28 kann der Durchladraum 26 eine minimale Breite 32 in y-Richtung des Flugzeugs 10 von mindestens 240 cm bis maximal 270 cm (94,5 Zoll bis 106,5 Zoll), insbesondere von mindestens 250 cm bis maximal 260 cm (98,5 Zoll bis 102,5 Zoll) aufweisen. Konkret weist der Durchladeraum 26 eine minimal nutzbare Breite 32' in y-Richtung von 244 cm (96 Zoll) auf. Das Fahrwerk 28 weist dabei in y-Richtung einen Abstand A7 zwischen den beiden Rotationsachsen von ca. 956,6 cm (ca. 376 Zoll) auf.

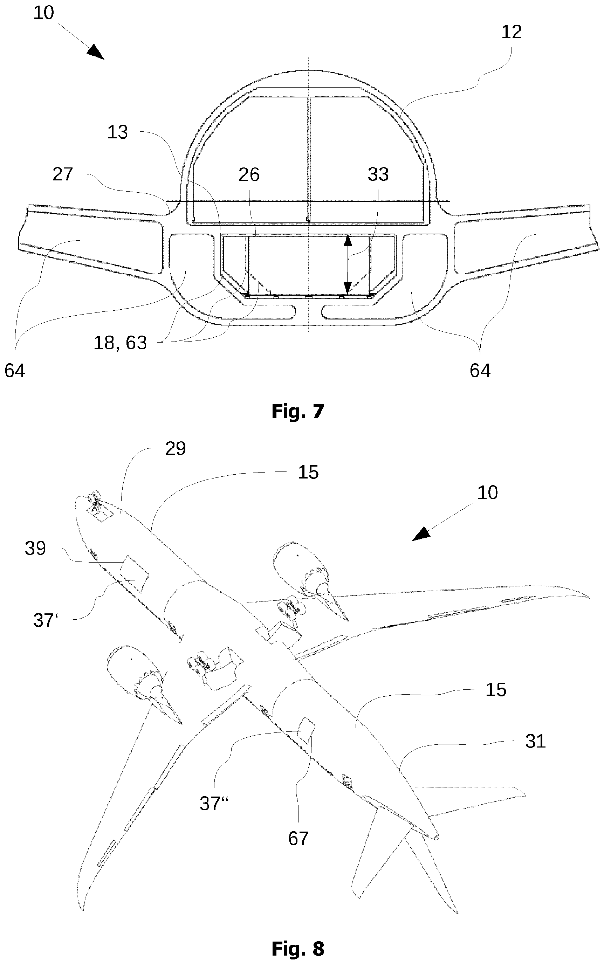

Gemäß Fig. 7 ist ein Querschnitt durch das Flugzeug 10 im Bereich des Flügelkastens 27 gezeigt. Im Flügelkasten 27 sind keine fest installierten Zentraltanks für Treibstoff vorgesehen. Die fest eingebetteten Treibstofftanks 64 des Flugzeugs 10 sind seitlich neben dem Durchladeraum 26 angeordnet. Im Bereich des Flügelkastens 27 weist der Durchladeraum 26 eine Breite auf, die der Breite des bugseitigen und/oder heckseitigen Laderaums 24, 25 entspricht. Die Breite des Durchladeraums 26 im Bereich des Flügelkastens 27 ist größer als die Breite des Durchladeraums 26 im Bereich des Fahrwerks 28. Der Durchladeraum 26 kann im Bereich des Flügelkastens 27 eine minimal nutzbare Breite in y-Richtung von ca. 317,5 cm (ca. 125 Zoll) aufweisen. Bevorzugt weist der Durchladeraum 26 im Bereich des Flügelkastens 27 eine Breite in y-Richtung von ca. 328 cm (ca. 129 Zoll) auf.

Im Durchladeraum 26, wie in den Fig. 6 und 7 gezeigt, können Frachtcontainer 18 und/oder mobile Zusatztanks 63 mit einer Breite von ca. 244 cm (96 Zoll) angeordnet oder durch den Durchladeraum 26 hindurch bewegt werden. Bevorzugt sind im Durchladeraum 26 im Bereich des Fahrwerks 28 lediglich quaderförmige Frachtcontainer mit einer Breite von ca. 244 cm (96 Zoll) und einer Höhe von ca. 114,5 cm (45 Zoll) einbringbar und/oder durchladbar.

Der Durchladeraum 26 weist eine Durchladehöhe 33 von mindestens 140 cm (55 Zoll), insbesondere von mindestens 130 cm (51 Zoll) auf. Bevorzugt weist der Durchladeraum 26 eine Durchladehöhe 33 von mindestens 124,5 cm (49 Zoll) auf. Die Durchladehöhe 26 entspricht der lichten Weite 51, insbesondere Höhe, in z-Richtung des unteren Decks 13. Die Durchladehöhe 33 kann im Wesentlichen konstant sein.

Gemäß den Fig. 8 und 9 weist das Flugzeug 10 eine Ladetür 36 zum Be-und Entladen des oberen Decks 12 und zwei Ladetüren 37', 37" zum Be- und Entladen des unteren Decks 13 auf. In Fig. 8 ist ersichtlich, dass eine vordere der beiden Ladetüren 37' bugseitig und eine hintere der beiden Ladetüren 37" heckseitig angeordnet sind. Die vordere Ladetür 37' verschließt eine bugseitige, insbesondere vordere, Ladeöffnung 39, durch die der bugseitige Laderaum 24 zum Be- und Entladen zugänglich ist. Die hintere Ladetür 37' verschließt eine heckseitige, insbesondere hintere, Ladeöffnung 67, durch die der heckseitige Laderaum 25 zum Be- und Entladen zugänglich ist. Die bugseitige Ladeöffnung 39 ist dabei größer als die heckseitige Ladeöffnung 67. Die bugseitige Ladeöffnung 39 weist eine Durchgangsgröße mit einer minimalen Breite von ca. 332,5 cm (131 Zoll) und einer minimalen Höhe von 124,5 cm (49 Zoll) oder 137 cm (54 Zoll) auf. Die heckseitige Ladeöffnung 67 weist eine Durchgangsgröße mit einer minimalen Breite von 168 cm (66 Zoll) und einer minimalen Höhe von 124,5 cm (49 Zoll) oder 137 cm (54 Zoll) auf.

Die Ladetür 36 gemäß Fig. 9 ist heckseitig angeordnet und verschließt eine heckseitige Ladeöffnung 67' zum Be-und Entladen des oberen Decks 12. Die Ladeöffnung des oberen Decks 12 kann eine Durchgangsgröße mit einer minimalen lichten Breite von 370 cm bis 380 cm (ca. 145,5 Zoll bis ca. 149,5 Zoll) aufweisen. Die Ladeöffnung des oberen Decks 12 kann konkreter eine Durchgangsgröße mit einer minimalen lichten Breite von 373 cm bis 376 cm (ca. 147 Zoll bis ca. 148 Zoll) aufweisen. Die Ladetüren 36, 37', 37" sind jeweils in einem Tonnenabschnitt 15 angeordnet.

Bei einem Beladevorgang des unteren Decks 13 können die Frachtstücke 18 und/oder Frachtcontainer 45 durch die bugseitige Ladeöffnung 39 in den bugseitigen Laderaum 24 eingebracht und anschließend durch den Durchladeraum 26 in den heckseitigen Laderaum 25 durchgeladen werden. Es ist auch möglich, dass bei einem Beladevorgang des unteren Decks 13 die Frachtstücke 18 und/oder Frachtcontainer 45 durch die heckseitige Ladeöffnung 67 in den heckseitigen Laderaum 25 eingebracht und anschließend durch den Durchladeraum 26 in den bugseitigen Laderaum 24 durchgeladen werden.

Wie in Fig. 9 ersichtlich, umfasst das Flugzeug 10 ferner auf beiden Längsseiten jeweils vier Türen 65 für Passagiere. Die Türen sind in Längsrichtung des Flugzeugs 10 außerhalb der Flügel angeordnet. Dadurch wird bei einem Notfall eine gefahrlose Evakuierung ermöglicht.

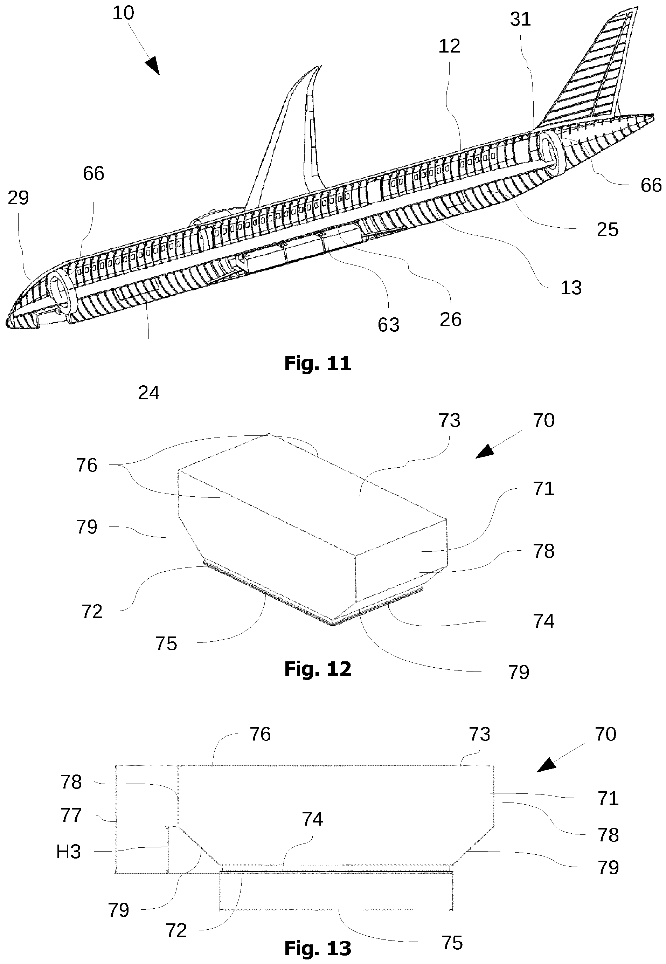

Die Fig. 10 und 11 zeigen für das untere Deck 13 zwei verschiedenen Beladungsvarianten, wobei in Fig. 10 im bugseitigen und heckseitigen Laderaum 24, 25 und im Durchladeraum 26 lediglich Frachtstücke 18 bzw. Frachtcontainer 18 und in Fig. 11 im Durchladeraum 26 drei mobile Zusatztanks 63 angeordnet sind. Gemäß Fig. 10 ist im Bereich des Fahrwerks 28 des Flugzeugs 10 ein Frachtstück 18 angeordnet, das eine maximale Breite in y-Richtung von 244 cm (96 Zoll) aufweist. In den beiden weiteren Laderäumen 24, 25 sind Frachtcontainer 45 angeordnet, die in y-Richtung breiter als die Frachtstücke 18 sind.

Ferner zeigen die Fig. 10 und 11 im Bereich des Flugzeugbugs 29 und dem Flugzeugheck 31 eine weitere Aufnahmeeinrichtung 66, insbesondere einen Galley-Ring, zur Aufnahme von Frachtstücken, insbesondere Küchenutensilien und/oder Gepäck. Die weitere Aufnahmeeinrichtung 66 ist im Rumpf 11 ringförmig ausgebildet und erstreckt sich durch die beiden Decks 12, 13.

Gemäß Fig. 12 und 13 ist ein erfindungsgemäßer Frachtcontainer 70 gezeigt, der in das untere Deck 13 des erfindungsgemäßen Flugzeugs 10 einbringbar ist. Der Frachtcontainer 70 weist einen trapezförmigen Grundkörper 71 mit einem Bodenbereich 72 und einem Deckenbereich 73 auf, die einander gegenüber angeordnet sind. Der Bodenbereich 72 umfasst ein Befestigungselement 74, das mit einer Befestigungsvorrichtung des Flugzeugs 10 verbindbar ist.

Der Bodenbereich 72 bildet in z-Richtung ein untenliegendes Ende und der Deckenbereich 73 in z-Richtung ein obenliegendes Ende des Frachtcontainers 70. Der Bodenbereich 72 und der Deckenbereich 73 umfassen jeweils zwei Längsseiten 75, 76, wobei der Bodenbereich 72 zwei erste Längsseiten 75 von mindestens 240 cm (95 Zoll), insbesondere 243,8 cm (96 Zoll) aufweist. Der Deckenbereich 73 weist zwei zweite Längsseiten 76 von mindestens 315 cm (ca. 124 Zoll), insbesondere 317,5 cm (125 Zoll) auf. Der Frachtcontainer 70 weist eine Gesamthöhe 77 von mindestens 99 cm bis maximal 130 cm (39,5 Zoll bis 51 Zoll) auf. Der Frachtcontainer 70 kann eine Gesamthöhe 77 von mindestens 102 cm bis maximal 127 cm (40 Zoll bis 50 Zoll) aufweisen. Gemäß Fig. 12 und 13 weist der Frachtcontainer 70 ein Gesamthöhe 77 von 114,5 cm (45 Zoll) auf. Der Frachtcontainer 70 kann alternativ auch eine maximale Gesamthöhe 77 von 127 cm (50 Zoll) aufweisen. Ferner weist der Frachtcontainer 70 vorzugsweise ein Tiefe von mindestens 119 cm bis maximal 317,5 cm (ca. 47 Zoll bis 125 Zoll) auf. Gemäß Fig. 12 und 13 weist der Frachtcontainer 70 eine bevorzugte Tiefe von 153,5 cm (60,4 Zoll) auf.

Der Frachtcontainer 70 weist zwei Breitseiten 78 auf, die zum Bodenbereich 72 hin einen geneigten Abschnitt 79 umfassen. Der geneigte Abschnitt 79 weist in z-Richtung eine Höhe H3 von 43 cm bis 56 cm (17 Zoll bis 22 Zoll), insbesondere von 47 cm bis 51 cm (18,5 Zoll bis 20 Zoll) auf. Konkret weist der geneigte Abschnitt 79 in z-Richtung eine Höhe H3 von ca. 50 cm (ca. 19,6 Zoll) auf.

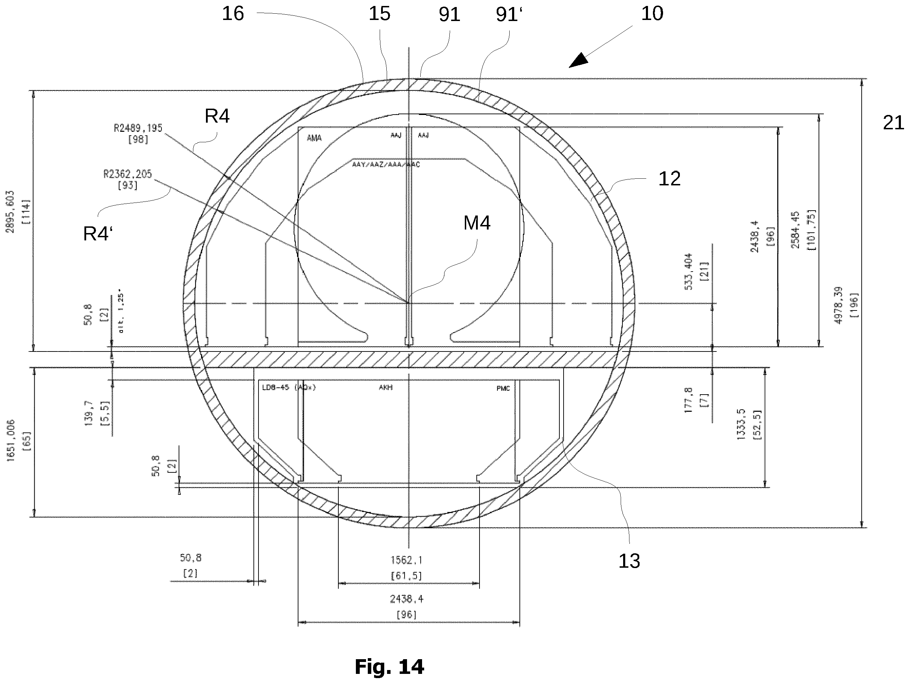

Fig. 14 zeigt ein Querschnittsprofil 16 eines Flugzeugs 10 nach einem weiteren erfindungsgemäßen Ausführungsbeispiel. Hierbei ist das Flugzeug 10 als Tiefdecker ausgebildet. Das Querschnittsprofil 16 gemäß Fig. 14 ist im Unterschied zum Querschnittsprofil 16 gemäß Fig. 1 kreisrund ausgebildet. Mit anderen Worten ist das Querschnittsprofil 16 gemäß Fig. 14 durch einen einzelnen Kreis 91, 91' gebildet. Der Kreis 91, 91' weist dabei einen Mittelpunkt M4 auf, von dem aus sich der Radius R4, R4' des Kreises erstreckt. Der Tonnenabschnitt 15, der das genannte Querschnittsprofil 16 umfasst, weist eine Wandstärke wie in Fig. 1 beschrieben auf. Der Tonnenabschnitt 15 gemäß Fig. 14 weist in y-Richtung eine äußere maximale Breite von 497 cm (196 Zoll) und in z-Richtung eine äußere maximale Höhe 21 von 497 cm (196 Zoll) auf. Weitere Maße des Querschnittsprofils 16 sowie Beladungskonfigurationen des oberen Decks 12 und des unteren Decks 13 sind aus Fig. 14 ersichtlich. Die gezeigten Maße jeweils über den Maßen in den eckigen Klammern sind dabei in Millimeter angegeben. Die in den eckigen Klammern jeweils darunter gezeigten Maße entsprechen dem Zollwert der darüber in Millimeter angegebenen Maße.

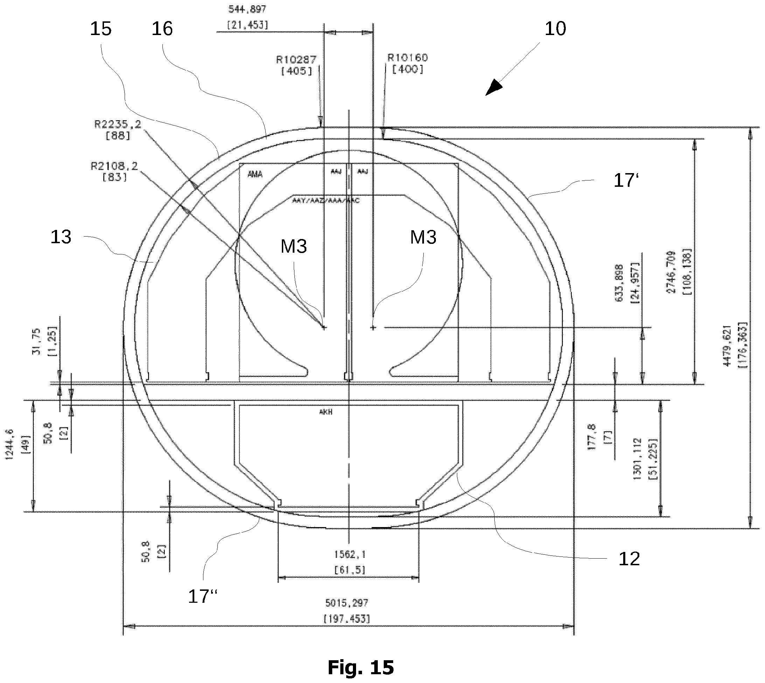

Fig. 15 zeigt ein Querschnittsprofil 16 eines Flugzeugs 10 nach einem weiteren erfindungsgemäßen Ausführungsbeispiel. Hierbei ist das Flugzeug 10 als Tiefdecker ausgebildet. Das Querschnittsprofil 16 gemäß Fig. 15 ist oval ausgebildet. Der Tonnenabschnitt 15, der das genannte Querschnittsprofil 16 umfasst, weist eine Wandstärke wie in Fig. 1 beschrieben auf. Im Unterschied zum Querschnittsprofil 16 gemäß Fig. 1 kann beim Querschnittsprofil 16 gemäß Fig. 15 der erste und der zweite Kreisbogenabschnitt 17', 17" jeweils im Bereich der z-Achse des Flugzeugs 10 einen geraden Abschnitt aufweisen.

Der Tonnenabschnitt 15 gemäß Fig. 15 weist in y-Richtung eine äußere maximale Breite von 501,5 cm (ca. 197,5 Zoll) und in z-Richtung eine äußere maximale Höhe 21 von 447,9 cm (ca. 176,5 Zoll) auf. Weitere Maße des Querschnittsprofils 16 sowie Beladungskonfigurationen des oberen Decks 12 und des unteren Decks 13 sind aus Fig. 15 ersichtlich. Die gezeigten Maße jeweils über den Maßen in den eckigen Klammern sind dabei in Millimeter angegeben. Die in den eckigen Klammern jeweils darunter gezeigten Maße entsprechen dem Zollwert der darüber in Millimeter angegebenen Maße.

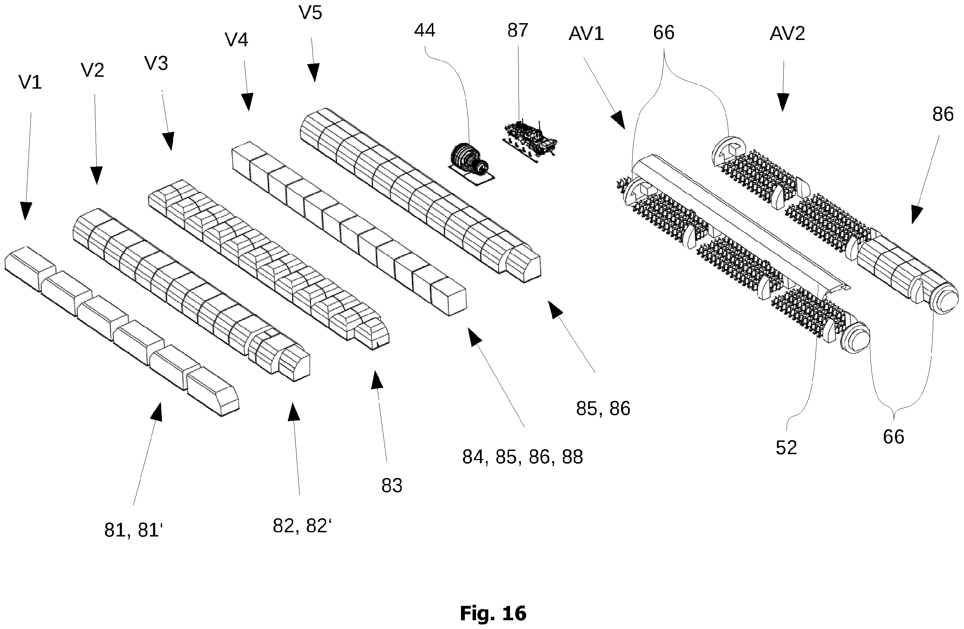

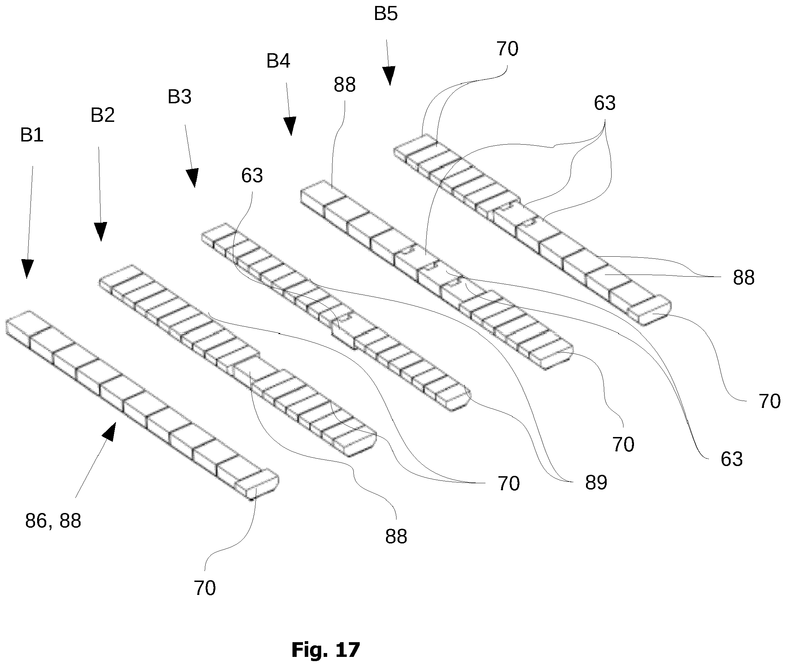

Die Fig. 16 und 17 zeigen mehrere unterschiedliche Beladungs- bzw. Ausstattungskonfigurationen des oberen und unteren Decks 12, 13 der Flugzeuge gemäß Fig. 1, Fig. 14 und Fig. 15. Konkret zeigt Fig. 16 mehrere Beladungsvarianten für das Flugzeug 10 gemäß Fig. 1, Fig. 14 und Fig. 15, die nachfolgend von links beginnend beschrieben werden. Bei einer ersten Beladungsvariante V1 können die Flugzeuge 10 im oberen Deck 12 jeweils bspw. sechs PGA-Paletten 81 mit den Grundabmessungen 243,8 x 605,7 cm (96 x 238,5 Zoll) oder sechs PRA-Paletten 81' mit den Grundabmessungen 243,8 x 497,8 cm (96 x 196 Zoll) in Flugzeuglängsrichtung hintereinander aufnehmen.

Bei einer zweiten Beladungsvariante V2 können die Flugzeuge 10 im oberen Deck 12 jeweils bspw. fünfundzwanzig HCU-6E-Paletten 82 mit den Grundabmessungen 223,5 x 274,3 cm (88 x 108 Zoll) und zwei HCU-12E-Paletten 82' mit den Grundabmessungen 137,1 x 223,5 cm (54 x 88 Zoll) aufnehmen.

Bei einer dritten Beladungsvariante V3 können die Flugzeuge 10 im oberen Deck 12 jeweils bspw. dreiundzwanzig AAC-Container 83 mit den Abmessungen 223,5 x 317,5 x 208,2 cm (88 x 125 x 82 Zoll) aufnehmen. Die AAC-Container 83 weisen eine Doppelkontur auf. Bei dieser Beladeanordnung ist in Flugzeuglängsrichtung der letzte AAC-Container 83 längsgeladen.

Bei einer vierten Beladungsvariante V4 können die Flugzeuge 10 im oberen Deck 12 jeweils bspw. zwölf AMA-Container 84 mit den Grundabmessungen 243,8 x 317,5 x 243,8 cm (96 x 125 x 96 Zoll) aufnehmen. Es ist denkbar, dass die Flugzeuge 10 im oberen Deck 12 jeweils bspw. elf AMA-Container 84 mit den Abmessungen 243,8 x 317,5 x 243,8 cm (96 x 125 x 96 Zoll) und einen AAJ-Container 85 mit den Abmessungen 223,5 x 317,5 x 243,8 cm (88 x 125 x 96 Zoll) oder eine PAG-Palette 86 mit den Grundabmessungen 223,5 x 317,5 cm (88 x 125 Zoll) aufnehmen können. Alternativ ist denkbar, dass die Flugzeuge 10 im oberen Deck 12 jeweils bspw. zwölf PMC-Paletten 88 mit den Grundabmessungen 243,8 x 317,5 cm (96 x 125 Zoll) aufnehmen können.

Bei einer fünften Beladungsvariante V5 können die Flugzeuge 10 im oberen Deck 12 jeweils bspw. dreiundzwanzig AAJ-Container 85 mit den Abmessungen 223,5 x 317,5 x 243,8 cm (88 x 125 x 96 Zoll) oder dreiundzwanzig PAG-Paletten 86 mit den Grundabmessungen 223,5 x 317,5 cm (88 x 125 Zoll) aufnehmen. Ferner können die Flugzeuge 10 im oberen Deck 12 jeweils bspw. wenigstens ein Flugzeugtriebwerk 44 oder wenigstens ein Fahrzeug 87 auf wenigstens einer PRA-Palette 81' oder wenigstens einer PGA-Palette 81 aufnehmen.

Bei einer ersten Ausstattungsvariante AV1 können die Flugzeuge 10 im oberen Deck 12 jeweils bspw. eine siebenreihige Bestuhlung, mehrere Sanitärbereiche und zwei Aufnahmeeinrichtungen 66, insbesondere Galley-Ringe aufweisen. Die Aufnahmeeinrichtungen 66 sind in Fig. 10 und 11 beschrieben. Ferner können die Flugzeuge 10 im Deckenbereich des oberen Decks 12 eine Aufnahmeeinrichtung 52 für Frachtstücke, insbesondere Gepäckstücke aufweisen.

Bei einer zweiten Ausstattungsvariante AV2 können die Flugzeuge 10 im oberen Deck 12 jeweils bspw. zusätzlich zur Passagierbestuhlung sieben PAG-Paletten 86 mit den Grundabmessungen 223,5 x 317,5 (88 x 125) und einer Höhe von 243,8 cm (96 Zoll) aufnehmen. Diese Ausstattungsvariante entspricht einer Kombinationskonfiguration der Flugzeuge 10, die eine Frachterkonfiguration und eine Passagierkonfiguration der Flugzeuge 10 kombiniert.

Fig. 17 zeigt mehrere Beladungsvarianten für die Flugzeuge 10 gemäß Fig. 1 und Fig. 14, die nachfolgend von links beginnend beschrieben werden. Bei einer ersten Beladungsvariante B1 können die Flugzeuge 10 im unteren Deck 12 jeweils bspw. mehrere in Flugzeuglängsrichtung hintereinander geladene PMC-Paletten 88 mit den Grundabmessungen 243,8 x 317,5 cm (96 x 125 Zoll) oder mehrere in Flugzeuglängsrichtung hintereinander geladene PAG-Paletten 86 mit den Grundabmessungen 223,5 x 317,5 cm (88 x 125 Zoll) aufnehmen. Hierbei kann im Durchladeraum eine PMC-Palette angeordnet sein. Bei dieser Beladeanordnung kann in Flugzeuglängsrichtung das letzte Frachtstück ein Frachtcontainer 70, wie in Fig. 12 und 13 beschrieben, im heckseitigen Laderaum sein.

Bei einer zweiten Beladungsvariante B2 können die Flugzeuge 10 im unteren Deck 12 alternativ jeweils bspw. mehrere in Flugzeuglängsrichtung hintereinander geladene Frachtcontainer 70 gemäß Fig. 12 und 13 aufnehmen, wobei im Durchladeraum eine PMC-Palette 88 oder wenigstens ein mobiler Zusatztank 63 mit den Grundabmessungen einer PMC-Palette 88 angeordnet ist.

Bei einer dritten Beladungsvariante B3 können die Flugzeuge 10 im unteren Deck 12 jeweils bspw. mehrere in Flugzeuglängsrichtung hintereinander geladene Container 89, insbesondere AKH-Container, mit den Grundabmessungen 153,4 cm x 156,2 (60.4 x 61.5 Zoll) aufnehmen, wobei im Durchladeraum 26 eine PMC-Palette 88 oder wenigstens ein mobiler Zusatztank 63 mit den Grundabmessungen einer PMC-Palette 88 angeordnet ist.

Bei einer vierten Beladungsvariante B4 können die Flugzeuge 10 im unteren Deck 12 jeweils bspw. mehrere in Flugzeuglängsrichtung hintereinander geladene Frachtcontainer 70 gemäß Fig. 12 und 13 im heckseitigen Laderaum, sowie mehrere hintereinander geladene PMC-Paletten 88 im bugseitigen Laderaum und mehrere im Bereich des Durchladeraums 26 drei mobile Zusatztanks 63 aufnehmen. Die mobilen Zusatztanks 63 können die Grundabmessungen einer PMC-Palette 88 aufweisen. Bei einer fünften Beladungsvariante B5 können die Flugzeuge 10 im unteren Deck 12 jeweils bspw. mehrere in Flugzeuglängsrichtung hintereinander geladene Frachtcontainer 70 gemäß Fig. 12 und 13 im bugseitigen Laderaum, sowie mehrere hintereinander geladene PMC-Paletten 88 im heckseitigen Laderaum und im Bereich des Durchladeraums zwei mobile Zusatztanks 63 aufnehmen. Die mobilen Zusatztank 63 können die Grundabmessungen einer PMC-Palette 88 aufweisen. Bei dieser Beladungsvariante kann in Flugzeuglängsrichtung das letzte Frachtstück ein Frachtcontainer 70, wie in Fig. 12 und 13 beschrieben, im heckseitigen Laderaum sein. Weitere Anordnungen der Container und Paletten im Bereich des bugseitigen Laderaums und des heckseitigen Laderaums sind in Bezug auf die vorstehend genannten Beladungsvarianten in Fig. 17 direkt erkennbar.

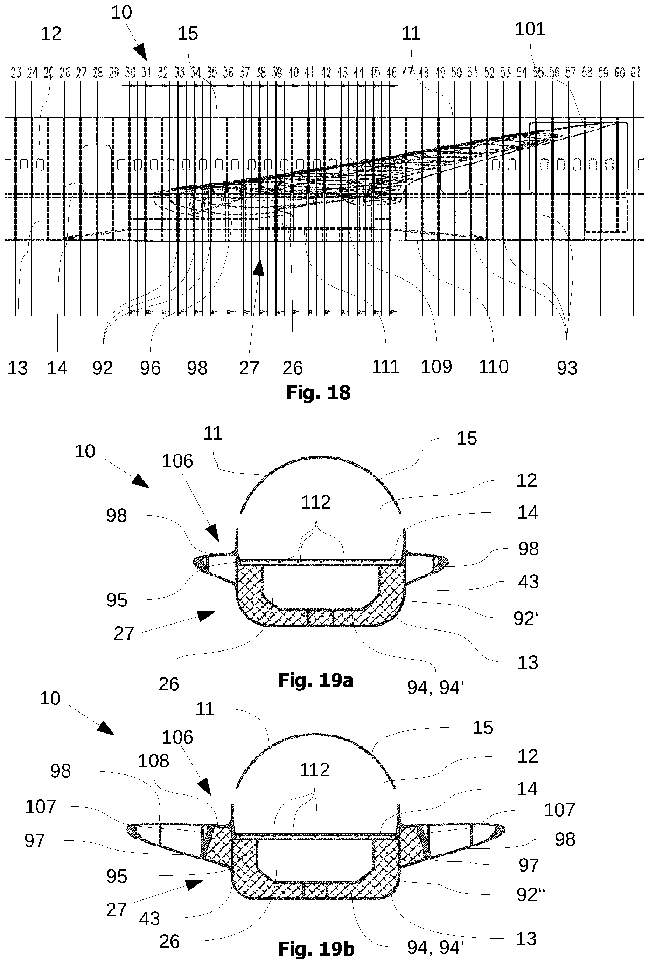

Fig. 18 zeigt einen Ausschnitt einer Seitenansicht eines Flugzeugs 10 nach einem weiteren erfindungsgemäßen Ausführungsbeispiel, wobei der Ausschnitt das Flugzeug 10 in einem Flügelbereich darstellt. In Fig. 18 ist eine laufende Nummerierung "23" bis "61" ersichtlich, wobei jeweils eine Nummer einem Spanten 93 der Rumpfstruktur 38 zugeordnet ist. Im Flügelbereich sind zwischen den Spanten 93 zusätzliche Schnittlinien gezeigt, die durch die an den Linien oben und unten dargestellten Pfeile erkennbar sind. Auf die Schnitte entlang der Schnittlinien wird später näher eingegangen.

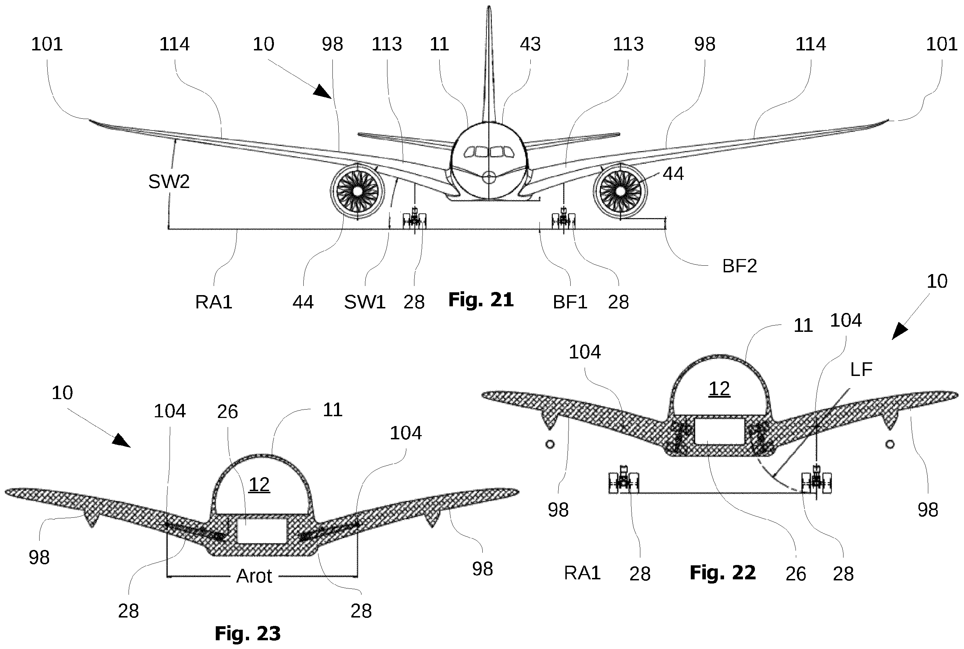

Das Flugzeug 10 gemäß Fig. 18 weist einen Rumpf 11 mit einem Tonnenabschnitt 15 auf, der mit zwei Flügeln 98 verbunden ist. Generell umfasst das Flugzeug 10 ein oberes Deck 12 und ein unteres Deck 13, die durch einen Boden 14 voneinander getrennt sind. Das Flugzeug 10 ist als Tiefdecker ausgebildet und weist zwei Flugzeugtriebwerke 44 auf, wobei jeweils eines der Flugzeugtriebwerke 44 unterhalb an einem der Flügel 98 angeordnet ist. Dies ist beispielsweise in Fig. 21 gut zu erkennen.

Der Tonnenabschnitt 15 umfasst einen Flügelkasten 27, der im unteren Deck 13 zwischen den Flügeln 98 in y-Richtung angeordnet ist. Der Flügelkasten 27 ist mit den Flügeln 98 fest verbunden und bildet eine Versteifungsstruktur, um auftretende Kräfte von den Flügeln 98 in die Rumpfstruktur 38 des Flugzeugs 10 einzuleiten. Der Flügelkasten 27 weist zur Verbindung mit den Flügeln 98 beidseitig einen Flügelanschlussbereich 106 auf, auf den später näher eingegangen wird.

Der Flügelkasten 27 weist mehrere quer zur Flugzeuglängsrichtung verlaufende Platten 92 auf. Die Platten 92 sind in Flugzeuglängsrichtung voneinander beabstandet angeordnet. Konkret ist jeweils eine Platte 92 an einem Spanten 93 der Rumpfstruktur 38 des Tonnenabschnitts 15 angeordnet. Mit anderen Worten entsprechen die Abstände zwischen den Platten 92 in Flugzeuglängsrichtung jeweils den Abständen zwischen den Spanten 93. Die Platten 92 sind mit den Spanten 93 fest verbunden. Es ist möglich, dass die Platten 92 mit den Spanten 93 integral ausgebildet sind. Mit anderen Worten können die Platten 92 mit den Spanten 93 einteilig sein.

Die Platten 92 sind einteilig, d.h. einstückig ausgebildet. Es ist möglich, dass wenigstens eine der Platten 92 aus mehreren einzelnen Plattenteilen gebildet ist.

Die Platten 92 können je nach Position im Flügelkasten 27 eine unterschiedliche Querschnittsform aufweisen. In den Fig. 19a bis 19d sind exemplarisch Querschnitte durch den Tonnenabschnitt 15 gezeigt, um die Anordnung bzw. die sich in Längsrichtung veränderte Querschnittsform der Platten 92 (Kreuzschraffur) darzustellen.

Fig. 19a zeigt einen Schnitt zwischen zwei Spanten 93 mit der Nummerierung "32" und "33" mit Blick Richtung Flugzeugheck 31. In Fig. 19a ist eine erste Platte 92' zu erkennen, die im Bereich des Flügelansatzes in Flugzeuglängsrichtung angeordnet ist. Die Platte 92' ist im Wesentlichen U-förmig ausgebildet. Die Platte 92' füllt einen Zwischenraum aus, der durch einen Durchladeraum 26, eine Rumpfaußenhaut 43 und einen Querträger 95 des Bodens 14 begrenzt ist.

Fig. 19b zeigt einen Schnitt zwischen zwei Spanten 93 mit der Nummerierung "34" und "35" mit Blick Richtung Flugzeugheck 31. In Fig. 19b ist eine zweite Platte 92" zu erkennen, die ebenfalls im Bereich des Flügelansatzes in Flugzeuglängsrichtung angeordnet ist. Im Unterschied zur ersten Platte 92' weist die zweite Platte 92" zwei Plattenenden 107 auf, die jeweils in einen der Flügel 98 einragen. Die Plattenenden 107 grenzen dabei an eine Innenkontur 108 der Flügel 98 direkt an.

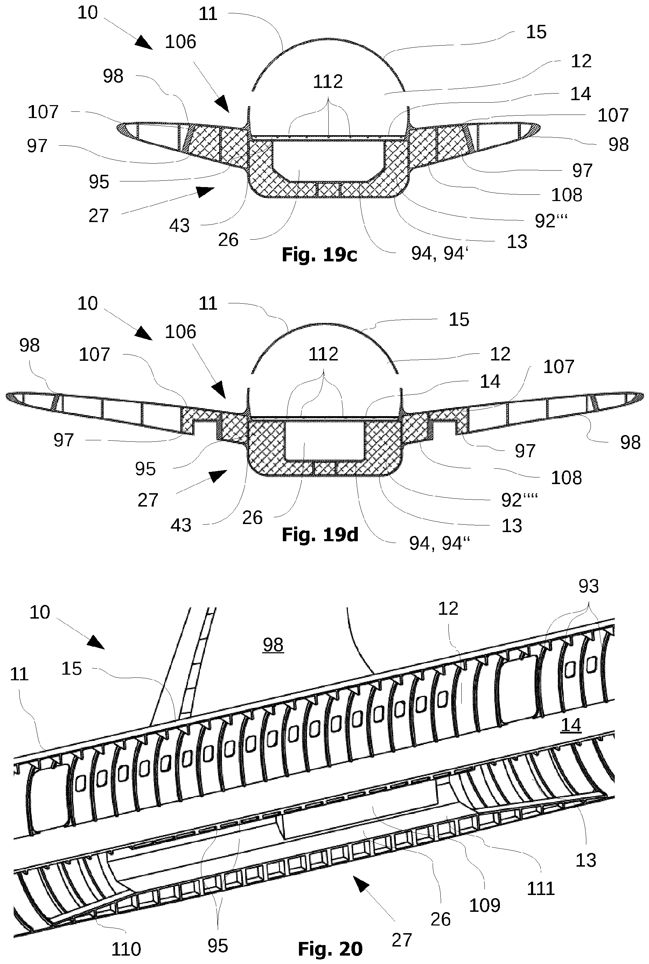

Gemäß Fig. 19c ist ein weiterer Schnitt gezeigt, der zwischen den zwei Spanten 93 mit der Nummerierung "35" und "36" verläuft. Zu erkennen ist dabei, eine dritte Platte 92"', die im Unterschied zur zweiten Platte 92" Plattenenden 107 aufweist, die in y-Richtung länger als die Plattenenden 107 der zweiten Platte 92" sind. Mit anderen Worten ragen die Plattenenden 107 der dritten Platte 92'" weiter in die Flügel 98 hinein als die Plattenenden 107 der zweiten Platte 92". Die Plattenenden 107 der dritten Platte 92'" grenzen ebenfalls an die Innenkontur 108 der Flügel 98 direkt an.

In Fig. 19d ist eine vierte Platte 92"" gezeigt, die durch einen Schnitt zwischen zwei Spanten 93 mit der Nummerierung "39" und "40" ersichtlich ist. Die vierte Platte 92"" ist im Bereich von Fahrwerken 28 angeordnet, die in Fig. 21 gut zu erkennen sind. Zur Anordnung der Fahrwerke 28 weist die vierte Platte 92"" an Plattenenden 107 nach unten offene Ausnehmungen 108 auf. Die Rotationsachsen der Fahrwerke 28 sind hier in den Plattenenden 107 eingebettet, um eine direkte Krafteinleitung in den Flügelkasten 27 zu erreichen. Mit anderen Worten überragen die Plattenenden 107 der vierten Platte 92"" die Rotationsachsen der Fahrwerke 28 in y-Richtung des Flugzeugs 10.

Die vier Platten 92', 92", 92"', 92"" stellen lediglich exemplarisch den Aufbau der Vielzahl der Platten 92 an bestimmten Positionen im Flügelkasten 27 dar. Der Flügelkasten 27 umfasst mehr als vier Platten 92, wie dies in Fig. 18 sowie 20 ersichtlich ist. Die jeweilige Querschnittsform der Platten 92 ist abhängig von der Lage der Platten 92 in Flugzeuglängsrichtung, der Innenkontur 108 der Flügel 98 sowie von dem Laderaumquerschnitt des Durchladeraums 26 an der entsprechenden Lage.

Insgesamt weist der Flügelkasten 27 gemäß Fig. 18 dreizehn Platten 92 auf. Der Flügelkasten 27 kann alternativ mehr oder weniger als dreizehn Platten 92 aufweisen. Ein Teil der Platten 92 weisen, wie vorstehend beschrieben, beidseitig sich y-Richtung erstreckende Plattenenden 107 auf, die in die beiden Flügel 98 ragen. Die Plattenenden 107 bilden am Tonnenabschnitt 15 einen Flügelanschlussbereich 106, an dem die Flügel 98 befestigt sind. Wie in den Fig. 19b-d gezeigt, sind die Flügel 98 auf die Plattenenden 107 der Platten 92 aufgeschoben bzw. aufgesteckt. Die Plattenenden 107 der Platten 92 bilden auf jeder Querseite des Tonnenabschnitts 15 einen gemeinsamen Aufnahmestummel 97, auf den die Flügel 98 aufgesteckt sind. Der jeweilige Aufnahmestummel 97 greift in den zugehörigen Flügel 98 fächerförmig ein. Die Flügel 98 sind mit dem jeweiligen Aufnahmestummel 97 formschlüssig verbunden. Zusätzlich können die Flügel 98 mit dem jeweiligen Aufnahmestummel 97 kraftschlüssig und/oder stoffschlüssig verbunden sein. Bevorzugt sind die Flügel 98 an den Flügelanschlussbereich 106 zusätzlich angeflanscht.

Wie in den Fig. 19a-d zu sehen ist, weisen die Platten 92 jeweils eine Durchgangsöffnung 94 auf. Dabei weisen die Platten 92, die in Flugzeuglängsrichtung außerhalb eines seitlichen Aufnahmeraums 109 für die Fahrwerke liegen, erste Durchgangsöffnungen 94' auf, die gleich sind. Dies ist in den Fig. 19a-c gut erkennbar. Die Platten 92 mit den ersten Durchgangsöffnungen 94' sind derart in Flugzeuglängsrichtung angeordnet, dass die ersten Durchgangsöffnungen 94' fluchten.

Die Platten 92, die in Flugzeuglängsrichtung innerhalb eines seitlichen Aufnahmeraums 109 für die Fahrwerke 28 liegen, weisen zweite Durchgangsöffnungen 94" auf, die gleich sind. Die Platten 92 mit den zweiten Durchgangsöffnungen 94" sind derart in Flugzeuglängsrichtung angeordnet, dass die zweiten Durchgangsöffnungen 94" fluchten. Die Form und Breite der ersten Durchgangsöffnungen 94' unterscheidet sich zur Form und Breite der zweiten Durchgangsöffnungen 94". Die zweiten Durchgangsöffnungen 94" der Platten 92 sind in y-Richtung kleiner als die ersten Durchgangsöffnungen 94' der entsprechenden Platten 92.

Die Breite der zweiten Durchgangsöffnungen 94" wird durch den Aufnahmeraum 109 für die Fahrwerke seitlich begrenzt. Der Durchladeraum 26, der durch die Durchgangsöffnungen 94', 94" verläuft, ist im Bereich des seitlichen Aufnahmeraums 109 verengt. Dies ist in der Längsschnittansicht des Flugzeugs 10 gemäß Fig. 20 zu erkennen.

In Fig. 20 ist ebenfalls erkennbar, dass bugseitig und heckseitig zum Durchladeraum 26 hin jeweils eine Rampe 110 angeordnet ist, die in eine erhöhte Ebene 111 des Flügelkastens 27 mündet. Unterhalb der Ebene 111 verlaufen die Platten 92 quer durch den Tonnenabschnitt 15. Bevorzugt dienen die Rampen 110 zur Stabilisierung des Übergangs zwischen dem Flügelkasten 27 und der in Längsrichtung anschließenden Rumpfstruktur 38.

Der Flügelkasten 27 weist des Weiteren mehrere in y-Richtung verlaufende Querträger 95 auf, die in z-Richtung oberhalb der Platten 92 angeordnet sind und mit den Platten 92 zur Aussteifung der Rumpfstruktur 38 zusammenwirken (siehe Fig. 19-20). Die Querträger 95 bilden den in z-Richtung obenliegenden Teil der Queraussteifungsstruktur des Flügelkastens 27. Die Querträger 95 sind im Vergleich zu Querträgern der Rumpfstruktur 38 der angrenzenden Tonnenabschnitte, die in Flugzeuglängsrichtung außerhalb des Flügelkastens 27 angeordnet sind, zur Aufnahme von erhöhten Kräften verstärkt ausgebildet.

Die Querträger 95 des Flügelkastens 27 sind mit den Platten 92 kraftübertragend verbunden. Die Querträger 95 bilden mit den Platten 92 eine besonders stabile Aussteifungseinheit. Die Querträger 95 versteifen die Rumpfstruktur 38 des Tonnenabschnitts 15 in y-Richtung. Die Querträger 95 stützen die Spanten 93 in y-Richtung im Flügelbereich ab.

Der Flügelkasten 27 weist ferner mehrere in Flugzeuglängsrichtung verlaufende Längsträger 96 auf, die die Querträger 95 miteinander verbinden. Die Längsträger 96 verbinden die Querträger 95 in Flugzeuglängsrichtung miteinander. Die Längsträger 96 bilden mit den Querträgern 95 eine Rasterstruktur, die in z-Richtung oberhalb der Platten 92 angeordnet ist. Die Längsträger 96 sind über die Länge des Flügelkastens 27 angeordnet. Insgesamt bildet der Flügelkasten 27 mit den Platten 92 sowie den Quer- und Längsträgern 95, 96 eine sehr stabile Struktur, die der steifste Teil der Rumpfstruktur 38 des gesamten Flugzeugs 10 ist.

Auf den Längsträgern 96 liegend sind Sitzschienen 112 angeordnet, um eine entsprechend Bestuhlung im oberen Deck 12 vorzusehen bzw. Frachtstücke zu befestigen. Die Sitzschienen 112 sind in den beiden Übergangsbereichen in Flugzeuglängsrichtung, in denen der Flügelkasten 27 in die angrenzenden Tonnenabschnitte 15 übergeht, gelenkig mit Sitzschienen der angrenzenden Tonnenabschnitte verbunden. Durch die gelenkige Verbindung wird eine Schwenkbewegung der Sitzschienen der angrenzenden Tonnenabschnitte in z-Richtung ermöglicht. Dies kann insbesondere im Flugbetrieb der Fall sein.

Fig. 21 zeigt eine Frontansicht des Flugzeugs 10 gemäß Fig. 18, wobei die Flügel 98 einen abgewinkelten Flügelverlauf aufweisen. Die Flügel 98 erstrecken sich ausgehend vom Flügelanschlussbereich 106 quer zur Flugzeuglängsrichtung nach außen zu einem freien Flügelende 101 hin. Die Flügel 98 weisen einen rumpfnahen Bereich 113 und einen rumpffernen Bereich 114 auf. Die Flügel 98 verlaufen im rumpfnahen Bereich 113 in einem ersten Steigungswinkel SW1, der größer ist als ein zweiter Steigungswinkel SW2, in dem die Flügel 98 im rumpffernen Bereich 114 zum freien Flügelende 101 hin verlaufen. Die Steigungswinkel SW1, SW2 beziehen sich auf eine Referenzachse RA1, die in y-Richtung des Flugzeugs 10 verläuft.

Bei dem Flugzeug 10 gemäß Fig. 21 beträgt der erste Steigungswinkel SW1 zwischen 16 Grad und 18 Grad. Der zweite Steigungswinkel SW2 beträgt zwischen 7 Grad und 10 Grad.

Wie in den Fig. 21 bis 23 ersichtlich ist, sind die Fahrwerke 28 im rumpfnahen Bereich 113 und die Flugzeugtriebwerke 44 im rumpffernen Bereich 114 angeordnet. Das Flugzeug 10 gemäß Fig. 18 weist eine äußere maximale Höhe des Rumpfs 11 bzw. des Tonnenabschnitts 15 von ca. 485 cm (191 Zoll) und eine äußere maximale Breite von ca. 498 cm (196 Zoll) auf. Die Fahrwerke 28 des Flugzeugs 10 weisen Rotationsachsen 104 in y-Richtung einen Abstand Arot von ca. 955 cm (376 Zoll) auf. Bei einer Länge LF der Fahrwerke 28 von ca. 335 cm (132 Zoll) weist der Durchladeraum 26 im Bereich des Aufnahmeraums 109 der Fahrwerke 28 eine lichte Breite in y-Richtung von 254 cm (100 Zoll) auf. Die lichte Höhe des Durchladeraums 26 im Bereich der Fahrwerke 28 beträgt ca. 128 cm (ca. 50,5 Zoll). Die Fahrwerkslänge LF wird ausgehend von den Rotationsachsen 104 bis zur Unterkante der Fahrwerksräder gemessen.

Aufgrund der beiden vorstehenden Steigungswinkel SW1, SW2 der Flügel 98 weist das Flugzeug 10 gemäß Fig. 18 eine erste Bodenfreiheit BF1 in z-Richtung von einer Unterkante des Rumpfs 11 bis zu einer Unterkante der Fahrwerke 28 im ausgeklappten Zustand von ca. 186 cm (ca. 173 Zoll) auf. Bei dem Einsatz von Flugzeugtriebwerken 44 mit einem Rotordurchmesser von ca. 265 cm (ca. 104,5 Zoll) mit entsprechender Anordnung an den Flügeln 98 kann eine zweite Bodenfreiheit BF2 in z-Richtung von einer Unterkante der Triebwerke 44 bis zur Unterkante der Fahrwerke 28 zwischen 69 cm und 72 cm (ca. 27 Zoll und ca. 28 Zoll), bevorzugt ca. 700 cm (ca. 27,5 Zoll) erreicht werden.

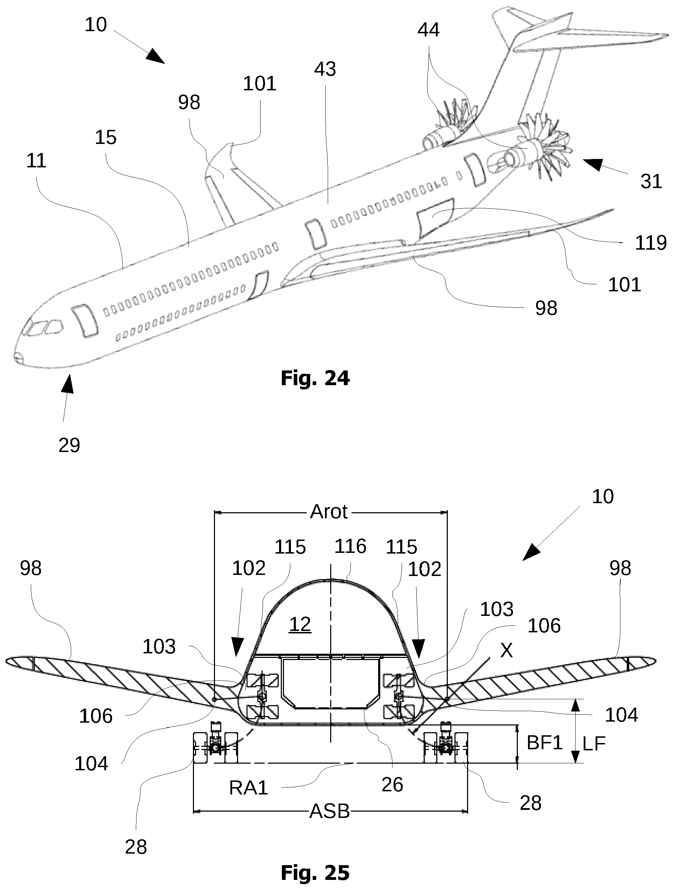

Gemäß Fig. 24 ist ein Flugzeug 10 nach einem weiteren erfindungsgemäßen Ausführungsbeispiel gezeigt, dass einen Rumpf 11 mit einem Tonnenabschnitt 15 aufweist, der mit zwei Flügeln 98 verbunden ist. Generell umfasst das Flugzeug 10 ein oberes Deck 12 und ein unteres Deck 13, die durch einen Boden 14 voneinander getrennt sind. Das Flugzeug 10 ist als Tiefdecker ausgebildet und weist zwei Flugzeugtriebwerke 44 auf. Im Unterschied zum Flugzeug gemäß Fig. 18 sind allerdings die Flugzeugtriebwerke 44 nicht an den Flügeln 98 angeordnet, sondern am Flugzeugheck 31. Des Weiteren entfällt der Knick in den Verläufen der Flügel 98. Diese weisen eine konstant verlaufende Form auf, wie in Fig. 25 ersichtlich ist.

Das Flugzeug 10 gemäß Fig. 24 weist einen Flügelkasten 27 mit Platten 92 auf, der dem Flügelkasten 27, wie in den Fig. 18 sowie 19a-d beschrieben ist. Allerdings weisen die Platten 92 des Flügelkastens 27 gemäß Fig. 24 (nicht ersichtlich) im Unterschied jeweils eine Durchgangsöffnung 94 für den Durchladeraum 26 auf, die gleich sind. Der Durchladeraum 26 des Flugzeugs 10 gemäß Fig. 24 weist einen Durchladequerschnitt auf, der mit den Laderaumquerschnitten des bugseitig und heckseitig anschließenden Laderaums gleich ist. Mit anderen Worten bilden der bugseitige und heckseitige Laderaum mit dem Durchladeraum 26 einen gemeinsamen Laderaum 105, der zwischen Bug und Heck des Flugzeugs 10 einen konstant durchgängigen Querschnitt aufweist.

Gemäß Fig. 25 sind die Fahrwerke 28 der Einfachheit halber im eingeklappten Zustand und im aufgeklappten Zustand dargestellt. Wie in den Fig. 25 ersichtlich ist, sind die Fahrwerke 28 rumpfnah angeordnet.

Das Flugzeug 10 gemäß Fig. 24 weist einen Außendurchmesser des Rumpfs 11 bzw. des Tonnenabschnitts 15 von ca. 477 cm (188 Zoll) auf. Die Fahrwerke 28 des Flugzeugs 10 weisen Rotationsachsen 104 auf, die in y-Richtung einen Abstand Arot von 775 cm (ca. 305 Zoll) auf. Bei einer Länge LF der Fahrwerke 28 von ca. 212 cm (83,7 Zoll) weist der Durchladeraum 26 im Bereich des Aufnahmeraums 109 der Fahrwerke 28 eine lichte Breite in y-Richtung von 328 cm (ca. 129 Zoll) auf. Die Fahrwerkslänge LF wird ausgehend von den Rotationsachsen 104 bis zur Unterkante der Fahrwerksräder gemessen. Der Abstand X von den Rotationsachsen 104 zur Drehachse der Fahrwerksräder beträgt ca. 161 cm (63,3 Zoll).

Das Flugzeug 10 gemäß Fig. 24 weist eine Bodenfreiheit BF1 in z-Richtung von einer Unterkante des Rumpfs 11 bis zu einer Unterkante der Fahrwerke 28 im ausgeklappten Zustand von ca. 125,5 cm (ca. 49,5 Zoll) auf. Ferner weisen die Fahrwerke 28 zusammen eine Außenspurbreite ASB von ca. 914 cm (360 Zoll) auf. Die Außenspurbreite ASB entspricht der maximalen Spurbreite im ausgeklappten Zustand der Fahrwerke 28.

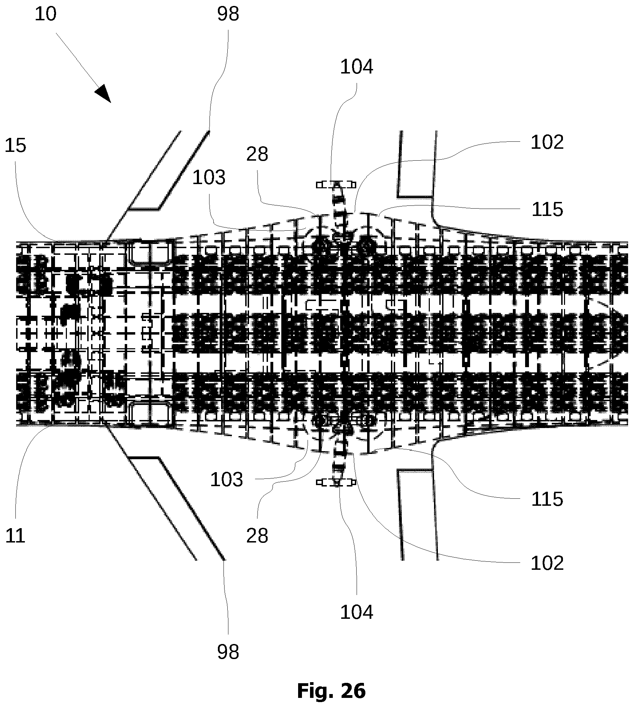

Fig. 26 zeigt eine Draufsicht auf das Flugzeug 10 gemäß Fig. 24, wobei die Rumpfaußenhaut 43 nicht dargestellt ist. Der Rumpf 11 weist zur Aufnahme der Fahrwerke 28 beidseitig in y-Richtung eine Rumpfstrukturerweiterung 102 auf. Mit anderen Worten weist der Tonnenabschnitt 15 in Flugzeuglängsrichtung im Bereich der Fahrwerke 28 an der Außenkontur in y-Richtung eine beidseitige Auswölbung auf. Durch die Rumpfstrukturerweiterung 102 ist das Querschnittsprofil des Tonnenabschnitts 15 im Bereich der Fahrwerke 28 breiter als außerhalb des Bereichs der Fahrwerke 28. Durch die Rumpfstrukturerweiterung 102 ist im unteren Deck 13 auf jeweils einer Flügelseite ein Freiraum 103 gebildet, um die Fahrwerke 28 unterzubringen. Mit anderen Worten dient der Freiraum 103 zum Verstauen der Fahrwerke 28. Die Rumpfstrukturerweiterung 102 ist im Bereich des Flügelkastens 27 ausgebildet. Der Freiraum 103 ist in den Flügelkasten 27 eingebettet. D.h. die Platten 92 des Flügelkastens 27 sind im Bereich des Freiraums 103 in y-Richtung von außen nach innen freigestellt, insbesondere ausgeschnitten, um die Fahrwerke 28 einklappen zu können.

Wie in Fig. 25 gezeigt, ist im Querschnitt die Rumpfstrukturerweiterung 102 im Bereich der Fahrwerke 28 durch eine geradlinige Verlängerung 115 eines obenliegenden, kreissegmentförmigen Rumpfsegments 116 des Tonnenabschnitts 15 zu dem Flügelanschlussbereich 106 hin gebildet. Die geradlinige Verlängerung 115 ist als Tangente des kreissegmentförmigen Rumpfsegments 116 zu dem Flügel 98 hin ausgebildet. Die geradlinige Verlängerung 115 verläuft in y-Richtung schräg nach außen und verbreitert somit den Querschnitt des Tonnenabschnitts 15 im unteren Deck 13, sodass der Freiraum 103 gebildet ist.

In Fig. 26 ist gut zu erkennen, dass die Rumpfstrukturerweiterung 102 in Flugzeugslängsrichtung in einem heckseitigen Bereich der Flügel 98 ausgebildet ist. Die geradlinige Verlängerung 115 des obenliegenden Rumpfsegments 116 führt vom oberen Deck 12 bis unteren Deck 13 schräg nach außen. Der Freiraum 103 ist zwischen der Rumpfaußenhaut 43 und dem Durchladeraum 26 ausgebildet derart, dass der Laderaumquerschnitt des Durchladeraums 26 mit den bugseitigen und heckseitigen Laderäumen gleich ist. Mit anderen Worten ist der Freiraum 103 derart ausgebildet, dass der Durchladeraum 26 in Bezug auf den bugseitigen und heckseitigen Laderaum keinen in y-Richtung verengten Querschnitt aufweist. Dies ist beispielsweise in Fig. 25 ersichtlich, wobei im Durchladeraum 26 zur reinen Illustration ein Frachtstück angeordnet ist.

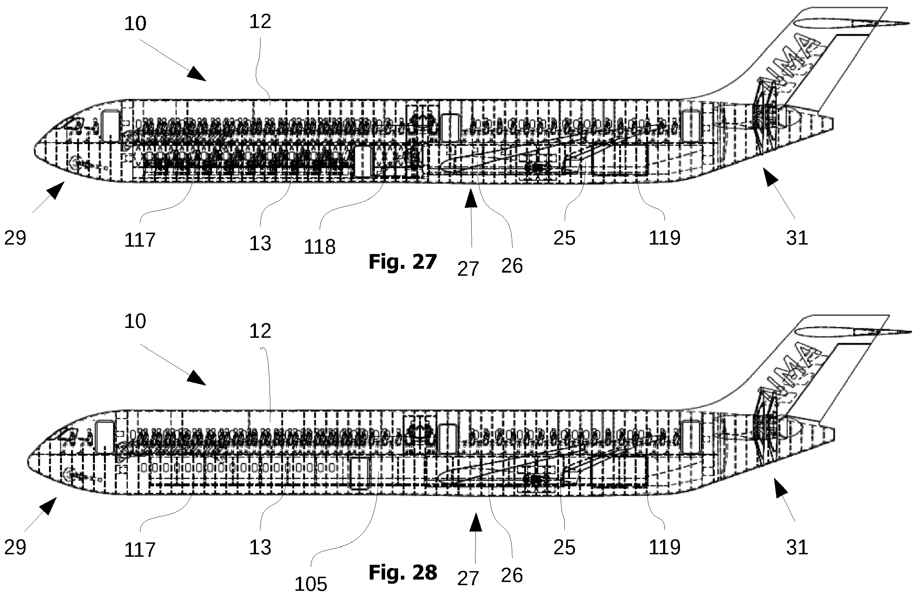

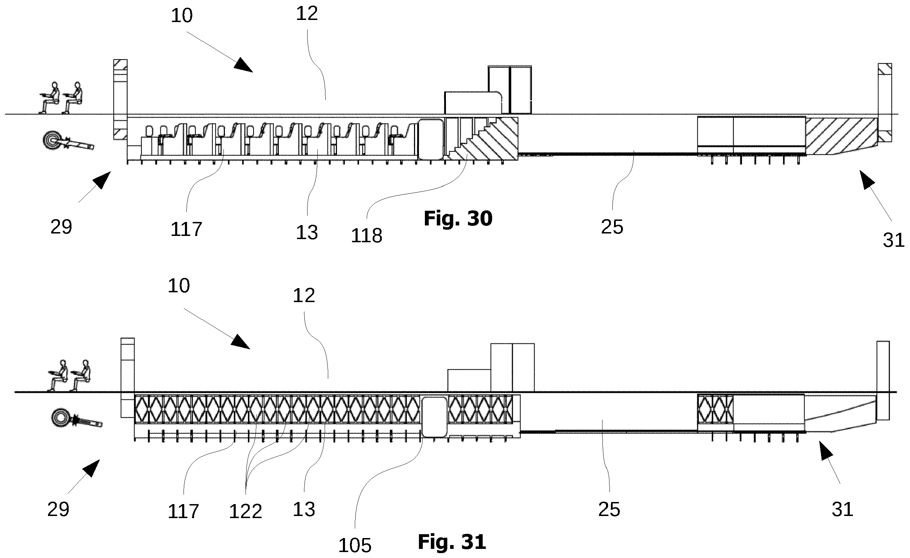

Die Fig. 27 bis 29 zeigen jeweils eine Variante mit einer Deckkonfiguration des Flugzeugs 10 gemäß Fig. 24. In Fig. 27 ist eine erste Deckkonfiguration des Flugzeugs 10 gezeigt. Konkret ist das Flugzeug in einer Konfiguration gezeigt, bei der im gesamten oberen Deck 12 eine Passagierbestuhlung, bspw. für ca. 200 Passagiere, angeordnet ist und im unteren Deck 13 in einem bugseitigen Rumpfbereich 117, d.h. in Flugzeuglängsrichtung vor dem Durchladeraum 26, insbesondere dem Flügelkasten 27, eine Passagierbestuhlung, bspw. für ca. 60 bis 70 Passagiere, angeordnet ist. Der Durchladeraum 26 sowie der heckseitige Laderaum 25 sind zum Transport von Frachtstücken eingerichtet und weisen daher keine Bestuhlung für Passagiere auf. In den Passagierbereichen des oberen und unteren Decks 12, 13 sind jeweils beidseitig Fensterreihen vorgesehen. Zur Verbindung der beiden Decks 12, 13 ist im Bereich des bugseitigen Flügelansatzes eine Treppe 118 angeordnet. In diesem Bereich können auch Sanitäranlagen vorgesehen sein. Hierbei wird vorteilhaft durch die Aufteilung der Passagiere auf das obere und untere Deck 12, 13 eine Verkürzung der Länge des Flugzeugs 10 ermöglicht. Die Passagierbestuhlung des unteren Decks 13 sowie die Treppe 118 ist in Fig. 30 gut zu erkennen, wobei in Fig. 30 zur besseren Darstellung die Flugzeugstruktur, d.h. Außenhaut, Spanten, Flügelkasten, etc., sowie die Passagierbestuhlung des oberen Decks 12 nicht gezeigt ist.

Des Weiteren weist das Flugzeug 10 gemäß Fig. 24 eine heckseitige Ladetür 119, durch die der heckseitige Laderaum 25 zum Be- und Entladen des unteren Decks 13 zugänglich ist, auf. Hier ist keine bugseitige Ladetür zur Beladung des unteren Decks 13 vorgesehen. Die heckseitige Ladetür 119 hat im Vergleich zu einer bugseitigen Ladetür den Vorteil, dass bei dem Flugzeug 10 in der ersten Deckkonfiguration ein unerwünschter Luftzug in der Kabine verhindert und somit der Komfort für die Passagiere im Flugbetrieb erhöht wird.

Des Weiteren ist die heckseitige Ladetür 119 auf einer Flugzeugseite angeordnet, die in Blickrichtung vom Flugzeugheck 31 zum Flugzeugbug 29 links liegt. Dies hat den Vorteil, dass der Be- oder Entladevorgang mittels eines Rampenfahrzeugs vereinfacht wird.

Da das Flugzeug 10 gemäß Fig. 24 über die gesamte Länge des Rumpfs 11, d.h. vom Flugzeugheck 31 bis zum Flugzeugbug 29, einen Laderaum mit durchgängig konstantem Querschnitt aufweist, ist eine Umkonfiguration des unteren Decks 13 erheblich vereinfacht.

Beispielsweise zeigt Fig. 28 eine zweite Deckkonfiguration, die sich von der ersten Deckkonfiguration gemäß Fig. 27 lediglich darin unterscheidet, dass der bugseitige Rumpfbereich 117 zu einem bugseitigen Laderaum 24 umgestaltet ist. Mit anderen Worten ist der bugseitige Rumpfbereich 117 als Laderaum eingerichtet, um Frachtstücke zu transportieren. In der zweiten Deckkonfiguration weist das Flugzeug 10 somit ein bestuhltes oberes Deck 12 zum Passagiertransport und ein unteres Deck 13 zum Frachttransport auf.

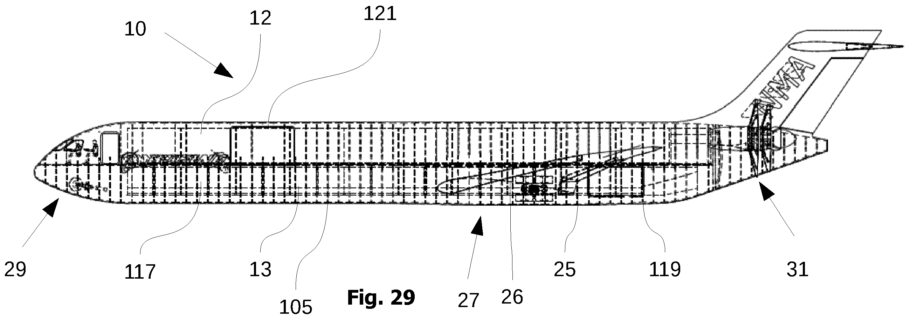

In einer dritten Deckkonfiguration, die in Fig. 29 gezeigt ist, ist das Flugzeug 10 zum reinen Frachttransport ausgebildet. Dazu sind das obere Deck 12 und das untere Deck 13 jeweils als Laderäume zum Transportieren von Frachtstücken eingerichtet. Zusätzlich weist das Flugzeug 10 in der Frachterkonfiguration eine bugseitige Ladetür 121 auf, durch die der Laderaum des oberen Decks 12 zum Be- und Entladen zugänglich ist. Eine Bestuhlung des oberen und unteren Decks 12, 13 fehlt bei der dritten Deckkonfiguration.

In der zweiten und dritten Deckkonfiguration ist das untere Deck 13, wie in Fig. 31 gezeigt, ausgebildet. Mit anderen Worten ist das untere Deck 13 ausschließlich zum Frachtstücktransport vorgesehen. Im unteren Deck 13 fehlt hier die Passagierbestuhlung sowie die Treppe 18. Des Weiteren ist in Fig. 31 zur besseren Darstellung die Flugzeugstruktur, d.h. Außenhaut, Spanten, Flügelkasten, etc. nicht gezeigt. In Fig. 31 ist des Weiteren ersichtlich, dass zur Bildung des Laderaums aufgefaltete Frachtraummodule 122 eingebracht sind, auf die später näher eingegangen wird.

Ein großer Vorteil des Flugzeugs 10 gemäß Fig. 24 ergibt sich daraus, dass das untere Deck 13 einen vom Heck bis zum Bug durchgängigen Laderaum mit einem gleichbleibenden Laderaumquerschnitt, insbesondere Laderaumprofil, aufweist. Dadurch ist eine Umkonfiguration des unteren Decks 13 mittels faltbaren Frachtraummodulen schnell und einfach möglich. Die Frachtraummodule können derart ausgebildet sein, dass diese Vertikalstreben der Rumpfstruktur 38 des Flugzeugs 10 ersetzen. Die faltbaren Frachtraummodule können bei einer Umkonfiguration des unteren Decks 13 bspw. zum Laderaum für Frachtstücke oder zur Passagierkabine über die heckseitige Ladetür 119 in das untere Deck 13 eingebracht und in Reihe hintereinander angeordnet werden. Die Frachtraummodule sind beliebig kombinierbar, um bspw. ein unteres Deck 13 gemäß erster Deckkonfiguration, zweiter oder dritter Deckkonfiguration auszugestalten.

Die faltbaren Frachtraummodule können bspw. mit vormontierten Sitzschienen zur nachträglichen Befestigung einer Passagierbestuhlung, oder mit einer bereits vormontierten Passagierbestuhlung in das untere Deck 13 eingebracht werden. Für die Konfiguration des unteren Decks 13 als reinen Laderaum können die Frachtraummodule vormontierte Vorrichtungen zum Befestigen und Führen von Frachtstücken aufweisen.

Hinsichtlich des faltbaren Frachtraummoduls wird Bezug genommen auf die Anmeldung DE 10 2019 132 292.8, die bereits in der Beschreibungseinleitung genannt ist.

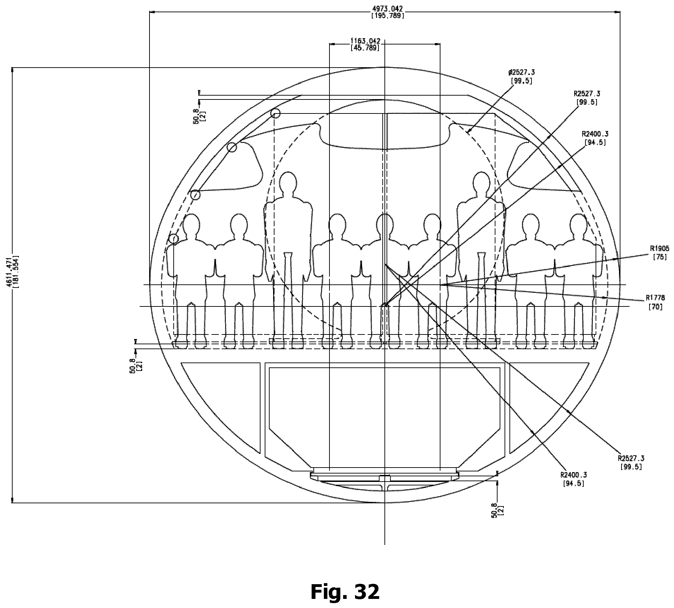

Fig. 32 zeigt ein Querschnittsprofil 16 eines Flugzeugs 10 nach einem weiteren erfindungsgemäßen Ausführungsbeispiel. Hierbei ist das Flugzeug 10 als Tiefdecker ausgebildet. Das Querschnittsprofil 16 gemäß Fig. 32 ist oval ausgebildet. Der Tonnenabschnitt 15, der das genannte Querschnittsprofil 16 umfasst, weist eine Wandstärke wie in Fig. 1 beschrieben auf.

Der Tonnenabschnitt 15 gemäß Fig. 32 weist in y-Richtung eine äußere maximale Breite von 497 cm (ca. 196 Zoll) und in z-Richtung eine äußere maximale Höhe 21 von 461 cm (ca. 181 Zoll) auf. Weitere Maße des Querschnittsprofils 16 sowie Beladungskonfigurationen des oberen Decks 12 und des unteren Decks 13 sind aus Fig. 32 ersichtlich. Die gezeigten Maße jeweils über den Maßen in den eckigen Klammern sind dabei in Millimeter angegeben. Die in den eckigen Klammern jeweils darunter gezeigten Maße entsprechen dem Zollwert der darüber in Millimeter angegebenen Maße.

Das Flugzeug 10 gemäß Fig. 32 kann, wie die Flugzeuge gemäß Fig. 1, Fig. 14 und Fig. 15 in mehreren unterschiedlichen Beladungs- bzw. Ausstattungskonfigurationen des oberen und unteren Decks 12, 13, wie in Fig. 16 und 17 gezeigt und beschrieben, ausgestaltet sein. Hierzu wird auf die vorstehend beschriebenen Beladungsvarianten V1 bis V5 und die Ausstattungsvarianten AV1 und AV2 verwiesen.

An dieser Stelle sei darauf hingewiesen, dass alle oben beschriebenen Teile, insbesondere auch die Ausführungsformen und/oder Ausführungsbeispiele selbst, jeweils für sich - auch ohne im jeweiligen Zusammenhang zusätzlich beschriebene Merkmale, selbst wenn diese nicht explizit als optionale Merkmale im jeweiligen Zusammenhang individuell kenntlich gemacht worden sind, z. B. durch Verwendung von: insbesondere, vorzugsweise, beispielsweise, z. B., ggf., runden Klammern, etc. - und in Kombination oder jeglicher Unterkombination als eigenständige Ausgestaltungen bzw. Weiterbildungen der Erfindung, wie sie insbesondere in der Beschreibungseinleitung sowie den Ansprüchen definiert ist, anzusehen sind. Abweichungen hiervon sind möglich. Konkret sei darauf hingewiesen, dass das Wort insbesondere oder runde Klammern keine im jeweiligen Kontext zwingende Merkmale kennzeichnen.

Weiterhin sei darauf hingewiesen, dass der Begriff des Flügelkastens in dieser Anmeldung keinesfalls so zu verstehen ist, dass hierunter ein herkömmlicher Flügelkasten zu verstehen ist, wie er im Flugzeugbau schon seit mehr als 50 Jahren verwendet wird. Vielmehr ist der Flügelkasten der vorliegenden Anmeldung eine Funktionseinheit, die zur Kraftaufnahme der auf die Flügel wirkenden Kräfte dient.

In den Ausführungsformen und -beispielen wird überwiegend auf die Platten bezuggenommen. Die einzelnen Erläuterungen und/oder Vorzüge sind auch auf die C-förmigen Träger anwendbar. Hinsichtlich der zusätzlichen oder alternativen Ausgestaltung der Platten wird auf die in der Beschreibungseinleitung genannten Ausführungsformen der Platten verwiesen.

### Bezuaszeichenliste

- 10: Flugzeug
- 11: Rumpf
- 12: oberes Deck
- 13: unteres Deck
- 14: Boden
- 15: Tonnenabschnitt
- 16: Querschnittsprofil
- 17: Kreisbogenabschnitte
- 17': erster Kreisbogenabschnitt
- 17": zweiter Kreisbogenabschnitt
- 17'": dritte Kreisbogenabschnitte
- 18: Frachtstück/Frachtcontainer
- 18': erster Frachtcontainer
- 18": zweiter Frachtcontainer
- 18'": dritter Frachtcontainer
- 19: äußere maximale Breite
- 21: äußere maximale Höhe
- 22: erste lichte Weite
- 23: zweite lichte Weite
- 24: bugseitiger Laderaum
- 25: heckseitiger Laderaum
- 26: Durchladeraum
- 27: Flügelkasten
- 28: Fahrwerk
- 29: Flugzeugbug
- 31: Flugzeugheck
- 32: minimale Breite des Durchladeraums
- 32': minimal nutzbare Breite des Durchladeraums
- 33: Durchladehöhe
- 34: Sitzreihen
- 35: Gänge
- 36: erste Ladetür
- 37: zweite Ladetür
- 38: Rumpfstruktur
- 39: bugseitige Ladeöffnung
- 41: Oberkante des Bodens
- 42: Unterkante des Bodens
- 43: Rumpfaußenhaut
- 44: Flugzeugtriebwerk
- 45: trapezförmige Frachtcontainer
- 46: Palette
- 47: Bodenstruktur
- 48: Rollenbahnsystem
- 49: lichte Weite des oberen Decks
- 51: lichte Weite des unteren Decks
- 52: Aufnahmeeinrichtung
- 53: Deckenbereich
- 54: zentraler Bereich
- 55: Aufenthaltsbereich
- 56: erster Bereich
- 57: zweiter Bereich
- 58: Gehbereich
- 59: erste lichte Weite
- 61: zweite lichte Weite
- 62: dritte lichte Weite
- 63: mobiler Zusatztank
- 64: Treibstofftank
- 65: Türen
- 66: weitere Aufnahmeeinrichtung
- 67: heckseitige Ladeöffnung des unteren Decks
- 67': heckseitige Ladeöffnung des oberen Decks
- 70: Frachtcontainer
- 71: trapezförmiger Grundkörper
- 72: Bodenbereich
- 73: Deckenbereich
- 74: Befestigungselement
- 75: erste Längsseite
- 76: zweite Längsseite
- 77: Gesamthöhe
- 78: Breitseiten
- 79: geneigter Abschnitt
- 81: PGA-Paletten
- 81': PRA-Paletten
- 82: HCU-6E-Paletten
- 82': HCU-12E-Paletten
- 83: AAC-Container
- 84: AMA-Container
- 85: AAJ-Container
- 86: PAG-Paletten
- 87: Fahrzeug
- 88: PMC-Palette
- 89: AKH-Container
- 91: Kreis
- 92: Platten
- 92': erste Platte
- 92": zweite Platte
- 92'": dritte Platte
- 92"": vierte Platte
- 93: Spanten
- 94: Durchgangsöffnung
- 94': erste Durchgangsöffnung
- 94": zweite Durchgangsöffnung
- 95: Querträger
- 96: Längsträger
- 97: Aufnahmestummel für Flügel
- 98: Flügel
- 99: -
- 101: freies Flügelende
- 102: Rumpfstrukturerweiterung
- 103: Freiraum
- 104: Rotationsachsen
- 105: gemeinsamer Laderaum
- 106: Flügelanschlussbereich
- 107: Plattenenden
- 108: Innenkontur der Flügel
- 109: seitlicher Aufnahmeraum
- 110: Rampe
- 111: erhöhte Ebene
- 112: Sitzschienen
- 113: rumpfnaher Bereich
- 114: rumpfferner Bereich
- 115: Verlängerung
- 116: Rumpfsegment
- 117: bugseitiger Rumpfbereich
- 118: Treppe
- 119: heckseitige Ladetür
- 121: bugseitige Ladetür
- 122: faltbare Frachtraummodule
- A1': Abstand des Bodens zur y-Achse
- A1": Abstand des Mittelpunkts des ersten Kreisbogenabschnitts
- A2: Abstand des Mittelpunkts des zweiten Kreisbogenabschnitts zum Mittelpunkt des ersten Kreisbogenabschnitts
- A3: Abstand des Mittelpunkts des zweiten Kreisbogenabschnitts zur Oberkante des Bodens
- A4: Abstand der Mittelpunkte der dritten Kreisbogenabschnitte
- A5: minimalster Abstand
- A6: Abstand zwischen dem zentralen Bereich und der Oberkante
- A7: Abstand zwischen den Rotationsachsen
- R1', R2', R3', R4': Außenradien
- R1, R2, R3, R4: Radien
- M1, M2, M3, M4: Mittelpunkte
- H1: Höhe des ersten und zweiten Frachtcontainers
- H2: Höhe des trapezförmigen Frachtcontainers und der Palette
- H3 V1, V2, V3,: Höhe des geneigten Abschnitts
- V4, V5: Beladungsvarianten des oberen Decks
- AV1, AV2 B1, B2, B3,: Ausstattungsvarianten des oberen Decks
- B4, B5: Beladungsvarianten des unteren Decks
- Arot: Abstand zwischen den Rotationsachsen
- ASB: Außenspurbreite
- BF1: erste Bodenfreiheit
- BF2: zweite Bodenfreiheit
- LF: Länge des Fahrwerks
- RA1: Referenzachse
- SW1, SW2: Steigungswinkel
- X: Abstand der Rotationsachsen zur Drehachse der Fahrwerksräder

## Patentansprüche

1. Flugzeug (10) für den Fracht- und/oder Passagiertransport mit einem Rumpf (11), der sich in Längsrichtung erstreckt und ein oberes Deck (12), insbesondere Hauptdeck, und ein unteres Deck (13) aufweist, die durch einen Boden (14) voneinander getrennt sind, wobei der Rumpf (11) einen Tonnenabschnitt (15) mit einem Querschnittsprofil (16) zur Aufnahme von Frachtstücken (18) und/oder Passagieren aufweist, wobei das Flugzeug als Tiefdecker- oder Mitteldecker-Konfiguration ausgebildet ist,
**dadurch gekennzeichnet, dass**
das untere Deck (13) einen bugseitigen Laderaum (24), einen heckseitigen Laderaum (25) und im Bereich des Flügelkastens (27) einen Durchladeraum (26) aufweist, der den bugseitigen Laderaum (24) und den heckseitigen Laderaum (25) verbindet, wobei der Durchladeraum (26) im Bereich des Flügelkastens (27) bzw. des Fahrwerks (28) derart ausgebildet ist, dass bei einer Beladung des unteren Decks (13) Frachtcontainer (18) vom Flugzeugbug (29) und/oder vom Flugzeugheck (31) ausgehend durchladbar sind,
wobei das Querschnittsprofil (16) insbesondere durch mehrere Kreisbogenabschnitte (17) gebildet ist, die Radien (R1, R2, R3) mit voneinander abweichenden Mittelpunkten (M1, M2, M3', M3") aufweisen oder das Querschnittsprofil (16) insbesondere durch einen einzelnen Kreis (91, 91') gebildet ist.

2. Flugzeug (10) für den Fracht- und/oder Passagiertransport mit einem Rumpf (11), der sich in Längsrichtung erstreckt und ein oberes Deck (12), insbesondere Hauptdeck, und ein unteres Deck (13) aufweist, die durch einen Boden (14) voneinander getrennt sind, wobei der Rumpf (11) einen Tonnenabschnitt (15) mit einem Querschnittsprofil (16) zur Aufnahme von Frachtstücken (18) und/oder Passagieren aufweist,
**dadurch gekennzeichnet, dass**
das Querschnittsprofil (16) im Wesentlichen durch mehrere, insbesondere vier, Kreisbogenabschnitte (17), gebildet ist, die Radien (R1, R2, R3) mit voneinander abweichenden Mittelpunkten (M1, M2, M3', M3") aufweisen, sodass das Querschnittsprofil (16) derart ausgebildet ist, dass in das obere Deck (12) und das untere Deck (13) Frachtstücke (18) mit unterschiedlichen Größenmaßen, insbesondere Frachtcontainer (18) mit unterschiedlichen Höhen- und Breitenmaßen, aufnehmbar sind.

3. Flugzeug nach Anspruch 1 oder 2,
**dadurch gekennzeichnet, dass**
das Querschnittsprofil (16) des Rumpfs (11) oval ausgebildet ist, wobei der Rumpf (11) in y-Richtung eine äußere maximale Breite (19) von 490 cm bis 510 cm und in z-Richtung eine äußere maximale Höhe (21) von 480 cm bis 500 cm und/oder in z-Richtung eine äußere maximale Höhe (21) von 440 cm bis 450 cm aufweist.

4. Flugzeug nach einem der vorhergehenden Ansprüche,
**dadurch gekennzeichnet, dass**
der Rumpf (11) in y-Richtung eine erste lichte Weite (22) von 460 cm bis 480 cm und in z-Richtung eine zweite lichte Weite (23) von 450 cm bis 480 cm aufweist.

5. Flugzeug nach einem der Ansprüche 2 bis 4,
**dadurch gekennzeichnet, dass**
das untere Deck (13) in Längsrichtung des Rumpfs (11) durchgängig ausgebildet ist, wobei das untere Deck (13) einen bugseitigen Laderaum (24), einen heckseitigen Laderaum (25) und im Bereich des Flügelkastens (27) einen Durchladeraum (26) aufweist, der den bugseitigen Laderaum (24) und den heckseitigen Laderaum (25) verbindet.

6. Flugzeug nach einem der vorhergehenden Ansprüche, insbesondere nach Anspruch 5,
**dadurch gekennzeichnet, dass**
der Durchladeraum (26) im Bereich des Flügelkastens (27) bzw. des Fahrwerks (28) derart ausgebildet ist, dass bei einer Beladung des unteren Decks (13) Frachtcontainer (18) vom Flugzeugbug (29) und/oder vom Flugzeugheck (31) ausgehend durchladbar sind.

7. Flugzeug nach einem der vorhergehenden Ansprüche, insbesondere nach Anspruch 5 oder 6,
**dadurch gekennzeichnet, dass**
der Durchladeraum (26) eine minimale Breite (32) in y-Richtung des Flugzeugs (10) von 240 cm bis 270 cm und/oder von 150 cm bis 180 cm aufweist.

8. Flugzeug nach einem der vorhergehenden Ansprüche,
**dadurch gekennzeichnet, dass**
wenigstens eine erste Ladetür (36) zum Be- und Entladen des oberen Decks (12) und/oder wenigstens eine zweite Ladetür (37) zum Be-und Entladen des unteren Decks (13) im Tonnenabschnitt (15) angeordnet sind, wobei vorzugsweise die erste Ladetür (36) im Bugbereich und die zweite Ladetür (37) im Heckbereich oder die zweite Ladetür (37) im Bugbereich und die erste Ladetür (36) im Heckbereich an gegenüberliegenden Seiten des Flugzeugs angeordnet sind.

9. Flugzeug nach einem der vorhergehenden Ansprüche,
**gekennzeichnet durch**:
mehrere quer zur Längsrichtung des Flugzeugs (10) verlaufende Platten (92) und/oder C-förmige Träger, insbesondere als Teil eines/des Flügelkastens (27), die in Flugzeuglängsrichtung voneinander beabstandet und mit einer Rumpfstruktur (38), insbesondere Spanten (93), des Flugzeugs (10) verbunden sind.

10. Flugzeug nach Anspruch 9,
**dadurch gekennzeichnet, dass**
die Platten (92) jeweils wenigstens eine in Flugzeuglängsrichtung ausgebildete Durchgangsöffnung (94) aufweisen, durch die der Durchladeraum (26) verläuft.

11. Flugzeug nach einem der Ansprüche 9 oder 10,
**dadurch gekennzeichnet, dass**
der Flügelkasten (27) mehrere (in y-Richtung verlaufende) Querträger (95) aufweist, die in z-Richtung oberhalb der Platten (92) angeordnet sind und mit den Platten (92) zur Aussteifung der Rumpfstruktur (38) zusammenwirken.

12. Flugzeug nach Anspruch 11,
**dadurch gekennzeichnet, dass**
der Flügelkasten (27) mehrere in Flugzeuglängsrichtung verlaufende Längsträger (96) aufweist, die die Querträger (95) miteinander verbinden.

13. Flugzeug nach einem der vorhergehenden Ansprüche,
**dadurch gekennzeichnet, dass**
die Flügel (98) des Flugzeugs (10) in z-Richtung abgewinkelt ausgebildet sind, wobei die Flügel (98) bezogen auf eine in y-Richtung verlaufende Referenzachse (RA1) jeweils ausgehend vom Rumpf (11) einen größeren Steigungswinkel (SW1) aufweisen als zu einem freien Flügelende (101) hin.

14. Flugzeug nach einem der vorhergehenden Ansprüche,
**dadurch gekennzeichnet, dass**
der Rumpf (11) zur Aufnahme der Fahrwerke (28) beidseitig in y-Richtung eine Rumpfstrukturerweiterung (102) aufweist, die einen Freiraum (103) bildet, in den das jeweilige Fahrwerk (28) zumindest abschnittsweise einklappbar ist.

15. Flugzeug nach einem der vorhergehenden Ansprüche,
**dadurch gekennzeichnet, dass**
die Fahrwerke (28) jeweils wenigstens eine Rotationsachse (104) aufweisen, um die die Fahrwerke (28) zum Ein- und Ausfahren schwenkbar sind, wobei die beiden Rotationsachsen (104) in y-Richtung einen Abstand zwischen 930 cm und 970 cm und der Durchladeraum (26) eine lichte Breite zwischen 240 cm bis 270 cm aufweist oder die beiden Rotationsachsen (104) in y-Richtung einen Abstand zwischen 750 cm und 800 cm und der Durchladeraum (26) eine lichte Breite zwischen 300 cm bis 340 cm aufweist.

16. Frachtcontainer (70) zum Transport von Frachtstücken in einem Flugzeug (10), der einen trapezförmigen Grundkörper (71) mit einem Bodenbereich (72) und einem Deckenbereich (73) aufweist, die einander gegenüber angeordnet sind, wobei der Bodenbereich (72) wenigstens ein Befestigungselement (74) umfasst, das mit einer Befestigungsvorrichtung des Flugzeugs (10) verbindbar ist, und wobei
der Bodenbereich (72) wenigstens eine erste Längsseite (75) von 240 cm, insbesondere 244 cm, und der Deckenbereich (73) wenigstens eine zweite Längsseite (76) von mindestens 315 cm, insbesondere 317 cm, aufweisen, **dadurch gekennzeichnet, dass**
der Frachtcontainer (70) eine Gesamthöhe (77) von mindestens 99 cm bis maximal 130 cm, insbesondere von 114,5 cm aufweist.

17. Verfahren, insbesondere zum Beladen eines Flugzeugs (10) gemäß einem der Ansprüche 1 bis 15, wobei das untere Deck (13) des Flugzeugs (10) einen bugseitigen Laderaum (24), einen heckseitigen Laderaum (25) und im Bereich eines Flügelkastens (27) einen Durchladeraum (26) aufweist, der den bugseitigen Laderaum (24) und den heckseitigen Laderaum (25) verbindet, und das untere Deck (13) eine bugseitige Ladeöffnung (39) aufweist, die durch eine Ladetür (37) verschließbar ist, wobei bei einem Beladevorgang wenigstens ein Frachtstück, insbesondere ein Frachtcontainer (18), durch die bugseitige Ladeöffnung (39) in den bugseitigen Laderaum (24) eingebracht wird und anschließend durch den Durchladeraum (26) in den heckseitigen Laderaum (25) durchgeladen wird.

18. Verfahren zum Umkonfigurieren eines Flugzeugs, insbesondere eines Flugzeugs nach einem der Ansprüche 1 bis 15, bei dem ein vorzugsweise faltbares Modul mit einem Boden und mindestens zwei an dem Boden vorzugsweise gelenkig befestigte Seitenwände über eine Ladetür in das Flugzeug eingebracht und am Unterdeck, vorzugsweise im vorderen Bereich des Flugzeugs, montiert wird, um Passagiersitze im Unterdeck bereitzustellen, wobei das Modul vorzugsweise beim Einbringen vormontierte Sitze und/oder Halteeinrichtungen zur Montage von Sitzen aufweist.
